(19) Europäisches Patentamt
European Patent Office
Office européen des brevets

(11) Publication number: **0 511 381 B1**

(12) # EUROPEAN PATENT SPECIFICATION

(45) Date of publication of patent specification: **26.07.95**

(51) Int. Cl.[6]: **C09B 57/00**, B41M 5/26, G11B 7/24

(21) Application number: **92903589.7**

(22) Date of filing: **20.11.91**

(86) International application number: **PCT/US91/08695**

(87) International publication number: **WO 92/09661 (11.06.92 92/13)**

(54) **SOUARYLIUM AND CROCONYLIUM DYES.**

(30) Priority: **21.11.90 US 616639**

(43) Date of publication of application: **04.11.92 Bulletin 92/45**

(45) Publication of the grant of the patent: **26.07.95 Bulletin 95/30**

(84) Designated Contracting States: **DE FR GB IT NL SE**

(56) References cited:
**EP-A- 0 264 198**
**EP-A- 0 341 104**
**WO-A-89/06650**

**PATENT ABSTRACTS OF JAPAN vol. 10, no. 373 (C-391)(2430) 12 December 1986**

**PATENT ABSTRACTS OF JAPAN vol. 13, no. 577 (M-910)(3925) 20 December 1989**

**PATENT ABSTRACTS OF JAPAN vol. 12, no. 487 (M-778)(3334) 20 December 1988**

(73) Proprietor: **POLAROID CORPORATION**
**549 Technology Square**
**Cambridge,**
**Massachusetts 02139 (US)**

(72) Inventor: **TELFER, Stephen, J.**
**74 Windsor Street**
**Arlington, MA 02174 (US)**
Inventor: **SHORT, Robert, P.**
**10 Edmund Road**
**Arlington, MA 02174 (US)**
Inventor: **STROUD, Stephen, G.**
**53 Tesla Avenue**
**Medford, MA 02155 (US)**
Inventor: **PUTTICK, Anthony, J.**
**97 Westminster Avenue**
**Arlington, MA 02174 (US)**
Inventor: **RAMOS, Socorro, M.**
**43 Burnham Street**
**Belmont, MA 02178 (US)**
Inventor: **ZURAW, Michael, J.**
**3 Brattle Drive**
**Arlington, MA 02174 (US)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 511 381 B1

**PATENT ABSTRACTS OF JAPAN vol. 15, no. 1 (C-793)(4529) 7 January 1991**

(74) Representative: **Koch, Günther, Dipl.-Ing. et al**
**Garmischer Strasse 4**
**D-80339 München (DE)**

## Description

This invention relates to dyes containing a squarylium or croconylium ring and two benzpyrylium, thiobenzpyrylium or selenobenzpyrylium groupings. (For brevity, the term "benzchalcopyrylium" will be used hereinafter to refer collectively to benzpyrylium, thiobenzpyrylium and selenobenzpyrylium groupings.) This invention also relates to processes for the preparation of these dyes and processes for their use as near infra-red absorbers. Finally, this invention relates to chromone intermediates used to prepare these dyes.

Copending U.S. Patent Application Serial No. 07/696,222, filed May 6, 1991 and assigned to the same assignee as the present application, describes and claims certain processes for the synthesis of bis-(heterocyclic) dyes, especially asymmetric dyes in which the two heterocyclic nuclei differ. These processes are useful for the synthesis of dyes of the present invention, as discussed in more detail below with reference to Figure 4.

The term "near infra-red" is used herein to mean electromagnetic radiation having a wavelength of about 700 to about 1200 nm.

Near infra-red absorbers, that is to say compounds which absorb near infra-red electromagnetic radiation, are known to be useful in a number of applications. For example, such absorbers are useful as infra-red filters used in photography and for protecting sensitive materials from infra-red radiation, and in "inks" used to print characters intended to be read using near infra-red light -- for example, in universal product code labels intended to be scanned with an infra-red laser. Such absorbers are sometimes useful as sensitizers to render photographic film sensitive to near infra-red radiation, and some of them can act as charge transfer materials and are thus applied to the photosensitive surfaces used in xerography and in other types of electrophotography.

A wide variety of compounds have been used as infra-red absorbers, including benzthiazoles, metal dithiolenes and phthalocyanines. Benzpyrylium and benzthiopyrylium dyes have also been used for this purpose.

U.S. Patent No. 4,714,667 discloses bis(4-pyrylium) and bis(4-benzpyrylium) pentamethine and heptamethine compounds for use in optical information recording media. In these compounds, three of the carbon atoms of the chain form part of a 5- or 6-membered ring, which is not symmetrically disposed in the chain when a pentamethine chain is present.

Japanese Patent Application No. 103,604/82 (Publication No. 220,143/83, published December 21, 1983), discloses a broad class of bis-heterocyclic pentamethine dyes in which the central three carbon atoms of the pentamethine chain form part of a squarylium or croconylium ring. The heterocyclic nuclei can be pyrylium, thiopyrylium, selenopyrylium, benzpyrylium, benzthiopyrylium, benzselenopyrylium, naphthopyrylium, naphthothiopyrylium or naphthoselenopyrylium nuclei, which can be substituted with alkyl, alkoxy, aryl or styryl groups.

Japanese Patent Application No. 60-8730 (Publication No. 167,681/86, published July 29, 1986), discloses bis(4-benz[b]thiopyrylium pentamethine dyes in which the central three carbon atoms of the pentamethine chain form part of a squarylium ring. The dyes are intended for use as infra-red absorbers.

Infra-red absorbers have the capacity to absorb infra-red radiant energy and convert it to heat, thereby heating any medium in which the infra-red absorber is present, and several applications of such absorbers depend upon such generation of heat. Thus, infra-red absorbers can be used to induce chemical or physical changes in the medium containing them, and such chemical or physical changes can be induced with an appropriate wavelength of light. For example, a layer of infra-red absorber spread over a supporting plate can undergo visually perceptible physical distortions upon illumination by an infra-red laser, so that the layer acts as an optical recording medium, as in a compact disc. For example, U.S. Patent No. 4,508,811, issued April 2, 1985, describes an optical recording element in which the recording layer comprises a bis-(2,6-dialkyl) pyrylium or thiopyrylium squarylium salt.

Such chemical and physical changes can also be used in thermal imaging; the highly localized heating produced by the infra-red absorber can be used to create a high resolution image. For example, U.S. Patent No. 4,720,449, issued January 19, 1988, describes a thermal imaging method which comprises heating imagewise a di- or triarylmethane compound possessing within its di- or triarylmethane structure an aryl group substituted in the ortho position to the meso carbon atom with a moiety ring-closed on the meso carbon atom directly through a nitrogen atom, which nitrogen atom is also bound to a group with a masked acyl substituent that undergoes fragmentation upon heating to liberate the acyl group for effecting intramolecular acylation of the nitrogen atom to form a new group in the ortho position, whereby the di- or triarylmethane compound is rendered colored in an imagewise pattern corresponding to the imagewise heating.

U.S. Patent No. 4,602,263, issued July 22, 1986, and U.S. Patent No. 4,826,976, issued May 2, 1989, both describe thermal imaging systems for optical recording and particularly for forming color images. This thermal imaging method relies upon the irreversible unimolecular fragmentation of one or more thermally unstable carbamate moieties of an organic compound to effect a visually discernible color shift from colorless to colored, from colored to colorless or from one color to another.

International Patent Application No. PCT/US87/03249 (Publication No. WO 88/04237), published June 16, 1988, describes a different type of thermal imaging system using an element comprising a support formed of a material transparent to radiation of a specific wavelength and having an imaging surface layer heat activatable at an elevated temperature, and a layer of porous or particulate imaging material uniformly coated on the imaging surface layer and exhibiting a cohesive strength which is greater than the adhesive strength between the imaging material and the imaging surface layer. When this element is illuminated with radiation of the specific wavelength, at least one of the materials used in the two layers absorbs this radiation, thus heat activating the imaging surface layer and locking substantially the entire layer of the imaging material to the support when the imaging surface layer cools. After exposure of the element, a peeling force is applied to the imaging material so that in the unexposed areas of the element, the imaging material will peel from the support; however, in the exposed areas, the locking of the imaging material causes this material to be retained upon the support.

In many thermal imaging systems in which a leuco dye is transformed into a colored compound by heat, the leuco dye does not have sufficient absorption at a convenient wavelength to permit it to convert sufficient radiation to heat to effect the color change. For example, in the aforementioned U.S. Patents Nos. 4,602,263 and 4,826,976, many of the leuco dyes absorb in the ultraviolet. In such thermal imaging systems, it is normally preferred to use a laser as the radiation source, and since at present ultraviolet lasers are not well-suited to imaging processes, such processes are preferably carried out using an infra-red laser. Accordingly, it is preferred to include with the leuco dye an infra-red absorber for converting infra-red radiation into heat, which is transferred to the leuco dye to effect the color change.

Similarly, in the thermal imaging system described in the aforementioned International Patent Application No. PCT/US87/03249, an infra-red absorber may be provided in a layer adjacent the imaging surface layer to assist in converting infra-red radiation into heat.

The requirements for infra-red absorbers for use in thermal imaging systems are stringent. Since the sensitivity and the resolution of the image produced are often affected by the thickness of the layers in the heat-sensitive element (the sensitivity of the system is inversely related to the mass of material required to be heated, and thus inversely related to the thickness of the relevant layers), it is necessary to provide a high degree of absorption of infra-red radiation within a thin layer, sometimes of the order of 1 $\mu$m. To produce this degree of absorption in a layer containing the other components required in thermal imaging systems, it is necessary that the infra-red absorber used have a high extinction coefficient, of the order of at least about 100,000, and a low molecular weight. In addition, the absorber should manifest its maximum absorption within the range of about 700-1200 nm. so that it can conveniently be used with existing near infra-red lasers. (In the present state of technology, solid state diode lasers emitting at about 760 to 1200 nm. provide the highest output per unit cost. YAG lasers emitting at about 1000-1200 nm. are also useful in thermal imaging processes.)

One major problem with many prior art infra-red dyes is that they have low solubility either in most plastics and or in semi-polar solvents (for example, methyl ethyl ketone and methylene chloride) from which they need to be deposited to form imaging media such as those used in the aforementioned International Patent Application No. PCT/US87/03249. Thus, it is difficult to dissolve or disperse the absorber in a plastic without forming large aggregates and without adversely affecting other properties of the plastic.

Accordingly, despite the numerous prior art attempts to develop near infra-red absorbers, there are still applications of such absorbers, especially in thermal imaging methods, where it is difficult to find a prior art absorber which fulfills all the requirements of high extinction coefficient, low molecular weight, desirable wavelength of maximum absorption and compatibility with other components of the desired medium. In addition, some prior art infra-red absorbers degrade in films too rapidly to be useful in media which need to have a shelf-life of at least several months. Finally, some prior art infra-red absorbers, especially those which include sulfur-containing heterocyclic rings, have undesirable odors, which may be objectionable to users of the dyes when they are employed in a medium which permits escape of the dye into the air or onto the fingers of users.

Accordingly, there is still a need for development of improved near infra-red absorbers.

It has now been found that the solubility of bis(benzchalcopyrylium) squarylium and croconylium dyes in semi-polar solvents and plastics can be substantially improved by providing on, at least one of the benzchalcopyrylium nuclei, a 2-substituent in which a non-aromatic carbon atom is bonded directly to the

benzchalcopyrylium nucleus.

This invention provides a dye comprising an inner salt of a compound of the formula:

$Q^1 = Z\text{-}Q^2$

wherein:

$Q^1$ is a 4-(benz[b]-4H-pyrylium)methylidene, 4-(benz[b]-4H-thiopyrylium)methylidene or 4-(bens[b]-4H-selenopyrylium)methylidene grouping;

Z is a 1,3-(2-hydroxy-4-oxo-2-cyclobutylidene) hydroxide or 1,3-(2-hydroxy-4,5-dioxo-2-cyclopentylidene) hydroxide ring; and

$Q^2$ is a 4-(benz[b]-4H-pyran-4-ylidene)methyl, 4-(benz[b]-4H-thiopyran-4-ylidene)methyl or 4-(benz[b]-4H-selenopyran-4-ylidene)methyl grouping;

wherein at least one of the groupings $Q^1$ and $Q^2$ carries at its 2-position a substituent in which a non-aromatic carbon atom is bonded directly to the benzpyrylium, benzthiopyrylium or benzselenopyrylium nucleus, subject to the proviso that if this 2-substituent contains an aromatic nucleus, this aromatic nucleus is not conjugated with the benzpyrylium, benzthiopyrylium or benzselenopyrylium nucleus to which it is attached. It should be noted that, in the dyes of the present invention, the or each 2-substituent may comprise a phenyl or other aromatic nucleus provided that this nucleus is separated from the benzchalcopyrylium nucleus by at least one $sp^3$ carbon atom (or another saturated atom) so that the aromatic nucleus is not conjugated with the benzchalcopyrylium nucleus.

Preferred 2-substituents include substituted and unsubstituted alkyl and cycloalkyl groups.

Preferred dyes of this invention are those of the formula:

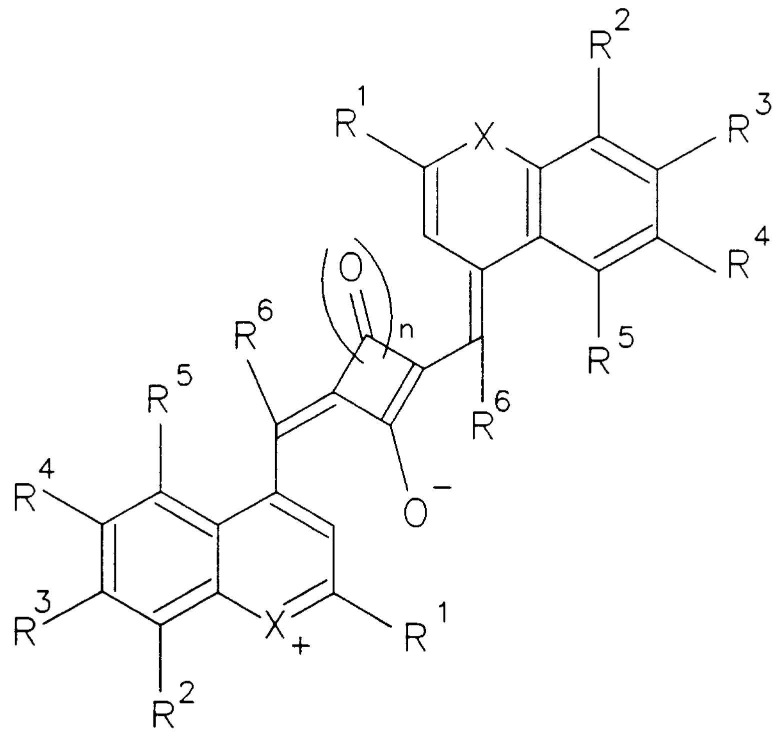

(I)

in which:

n is 1 or 2;

each X independently is an oxygen, sulfur or selenium atom;

each $R^1$ independently is an alkyl or cycloalkyl group which may be substituted or unsubstituted;

each $R^2$ and $R^4$ independently is a hydrogen atom, an alkyl group containing not more than about 8 carbon atoms or a halogen atom;

each $R^5$ independently is a hydrogen atom, an alkyl group containing not more than about 8 carbon atoms, a halogen atom, or an alkoxy group containing not more than about 12 carbon atoms;

each $R^6$ independently is a hydrogen atom or an alkyl group containing not more than about 6 carbon atoms; and

each $R^3$ independently is a hydrogen atom, an alkyl group containing not more than about 8 carbon atoms, or a group in which an element of Group 5A, 6A or 7A is bonded directly to the benzpyrylium nucleus, subject to the proviso that when this element of Group 5A, 6A or 7A is at least divalent, $R^3$, together with one or both of $R^2$ and $R^4$, may comprise at least one saturated heterocyclic ring containing said element of Group 5A, 6A or 7A, this saturated heterocyclic ring optionally being fused to the benzene ring of the associated nucleus.

This invention also provides a process for the preparation of a dye of the invention, which process comprises condensing two moles of a corresponding 4-$R^7$-benzpyrylium, -thiobenzpyrylium or -selenobenzpyrylium compound (in which $R^7$ is an alkyl group containing from 1 to about 7 carbon atoms and having at least two hydrogen atoms on the carbon atom $\alpha$ to the pyrylium, thiopyrylium or selenopyrylium ring) with squaric acid in the presence of a base, or with a salt of croconic acid.

This invention also provides a process for generating heat in a medium comprising a dye of the invention, which process comprises exposing at least part of the medium to infra-red electromagnetic radiation of a frequency absorbed by the dye, whereby the electromagnetic radiation is absorbed by the dye and heat is generated within the parts of the medium exposed to the radiation.

In one such process, the medium further comprises a thermally sensitive material capable of undergoing a color change upon exposure to heat, the medium is exposed imagewise to the radiation, and the heat generated by the dye is sufficient to effect a color change in the thermally sensitive material, whereby an image is formed in the medium.

In a second such process, the medium comprises one layer of a multi-layer structure, this structure further comprising a support layer disposed on one side of the medium and a colored layer adhering to the opposed side of the medium, and wherein the heat generated on exposure of the dye to actinic radiation causes increased adhesion of the colored layer to the support layer, such that upon application of a peeling force to the colored layer, the colored layer will peel from the support layer in areas which have not been exposed to the radiation, but in areas which have been exposed to radiation the colored layer will remain attached to the support layer.

In a third such process, the heat generation causes a visually perceptible change in the medium so the medium forms an optical recording element.

Thus, this invention provides a recording element in which information can be recorded and read optically, which recording element comprises a supporting plate bearing a recording layer comprising a dye of the present invention.

Figure 1 of the accompanying drawings shows a first synthetic route which may be used to produce the dyes of the present invention;

Figure 2 shows a second synthetic route which may be used to produce the dyes of the present invention;

Figure 3 shows a third synthetic route which may be used to produce the dyes of the present invention;

Figure 4 shows a fourth synthetic route especially adapted for the production of asymmetric squarylium dyes of the present invention; and

Figure 5 is a schematic cross-section through a second thermal imaging medium used in a process of the present invention, this medium containing a plurality of thermally sensitive materials capable of undergoing a color change upon exposure to heat.

As already mentioned, the present invention provides a dye comprising an inner salt of a compound of the formula:

$$Q^1 = Z\text{-}Q^2$$

wherein:

$Q^1$ is a 4-(benz[b]-4H-pyrylium)methylidene, 4-(benz[b]-4H-thiopyrylium)methylidene or 4-(benz[b]-4H-selenopyrylium)methylidene grouping;

Z is a 1,3-(2-hydroxy-4-oxo-2-cyclobutylidene) hydroxide or 1,3-(2-hydroxy-4,5-dioxo-2-cyclopentylidene) hydroxide ring; and

$Q^2$ is a 4-(benz[b]-4H-pyran-4-ylidene)methyl, 4-(benz[b]-4H-thiopyran-4-ylidene)methyl or 4-(benz[b]-4H-selenopyran-4-ylidene)methyl grouping;

wherein at least one of the groupings $Q^1$ and $Q^2$ carries at its 2-position a substituent in which a non-aromatic carbon atom is bonded directly to the benzpyrylium, benzthiopyrylium or benzselenopyrylium nucleus, subject to the proviso that if this 2-substituent contains an aromatic nucleus, this aromatic nucleus is not conjugated with the benzpyrylium, benzthiopyrylium or benzselenopyrylium nucleus to which it is attached. These dyes are useful as infra-red absorbers.

The nomenclature used herein for the dyes of the invention is that used by Chemical Abstracts and is thus apparently that recommended by IUPAC. However, in view of the difficulty of naming the dyes, it is believed that some explanation of this nomenclature may be helpful. A typical dye of the present invention will be written herein as:

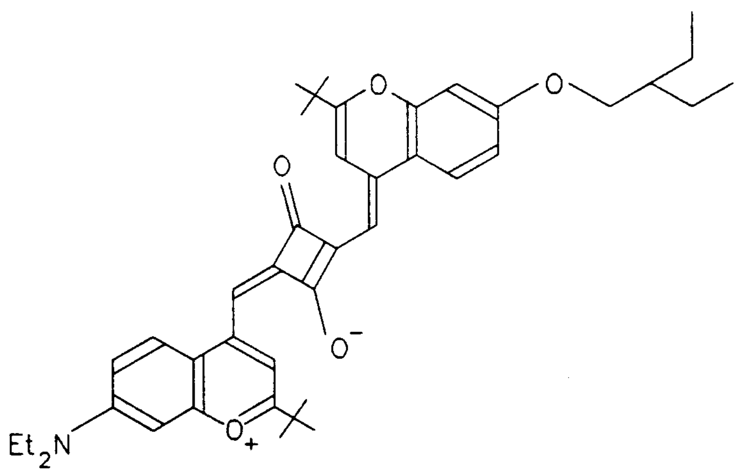

Under substantial neutral conditions, such as in the polymeric binders used in most thermal imaging media, this dye is believed to exists substantially in a zwitterionic form, which is of course a resonance hybrid of the formula given above and:

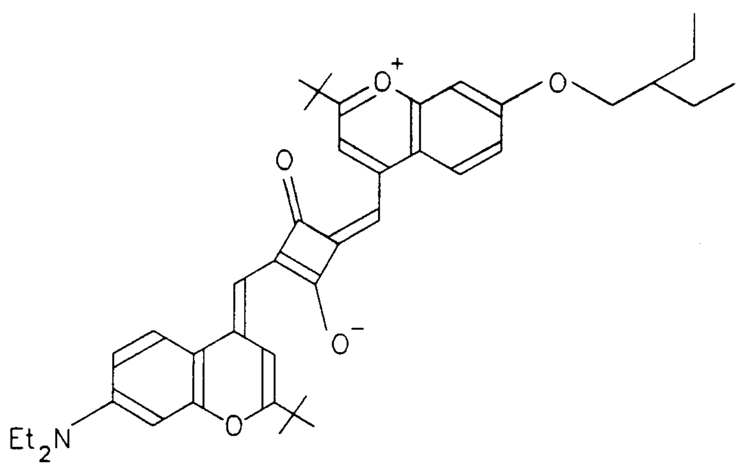

together with contributions from other resonance forms. This dye is, however, named as the inner salt of the hypothetical hydroxide:

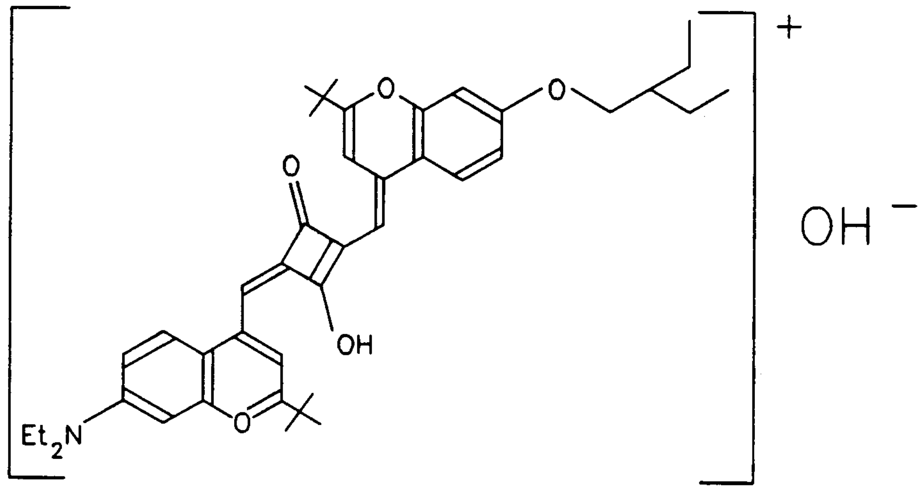

and is thus named 4-[[3-[7-(2-ethylbutoxy)-2-(1,1-dimethylethyl)-(benz[b]-4H-pyran-4-ylidene)methyl]-2-hydroxy-4-oxo-2-cyclobuten-1-ylidene]methyl]-7-diethylamino-2-(1,1-dimethylethyl)-benz[b]pyrylium hydroxide inner salt.

The dyes of the present invention may be cationic, anionic or non-ionic. When neither of the groupings $Q^1$ and $Q^2$ carries any charged substituents, the bis(benzchalcopyrylium) squarylium or croconylium moiety (hereinafter referred to simply as the "dye moiety") is uncharged, and hence the dye is non-ionic. However, if either of the groupings $Q^1$ and $Q^2$ carries a negatively or positively charged group (for example a $-COO^-$ or $SO_3^-$ group), the dye will be anionic or cationic respectively, and will contain a counterion.

When such a counterion is present, it may be any counterion which is not incompatible with the dye moiety and which thus provides a stable salt. The choice of counterion may be important in ensuring the solubility of the dye in various media, and reducing or preventing aggregation of the dye; minimizing aggregation of the dye is highly desirable since such aggregation can significantly reduce the apparent extinction coefficient of the dye in polymeric media. It may often be found convenient, for synthetic reasons, to prepare a desired dye moiety with one counterion and thereafter to effect a counterion exchange to form a different salt of the same dye moiety.

In the present dyes, the (or each) 2-substituent may have, directly attached to the benzchalcopyrylium nucleus, a non-aromatic sp, $sp^2$ or $sp^3$ carbon atom; for example, the or each 2-substituent could be a vinyl or ethine group. The (or each) 2-substituent can contain a phenyl or other aromatic nucleus provided that the aromatic nucleus is not conjugated with the benzchalcopyrylium nucleus; thus, for example, a 3-phenylpropyl group can be used as the or each 2-substituent. However, as already noted, preferably the (or each) 2-substituent is a substituted or unsubstituted alkyl or cycloalkyl group. The 2-substituent could also comprise a saturated heterocyclyl group which is linked to the benzchalcopyrylium nucleus by a carbon atom, for example a 2-piperidinyl or 2-morpholinyl group. It is desirable that the carbon atom of the or each 2-alkyl or cycloalkyl group which is directly attached to the benzchalcopyrylium nucleus carries not more than one hydrogen atom, and preferably this carbon atom does not have any hydrogen atoms bonded directly thereto. $\alpha$-Hydrogen atoms on the alkyl group are active hydrogens and may cause undesirable side reactions during the condensation used to produce the dye (as discussed in more detail below).

To maximize the solubility of the dye, it is preferred that each of the benzchalcopyrylium nuclei carry a substituted or unsubstituted 2-alkyl or cycloalkyl group. Although the 2-alkyl and cycloalkyl groups may bear various substituents, for example halogen atoms, for ease of synthesis it is generally preferred that the 2-alkyl and cycloalkyl groups be unsubstituted. Specific preferred 2-substituents are isopropyl, sec-butyl, tert-butyl, 2-ethyl-2-methylbutyl, 2,2-dimethylbutyl, cyclohexyl, 6,6-dimethylbicyclo[3.1.1]hept-2-en-2-yl, bicyclo[2.2.1]hept-2-en-5-yl and adamantyl groups.

The benzchalcopyrylium nuclei of the dyes of the present invention can bear a variety of substituents. It has been found that the nature of the substituents $R^3$ has substantial effects on both the solubility and the wavelength of maximum infra-red absorption ($\lambda_{max}$), as measured in dichloromethane, of the dye. For example, in the compounds of Formula I in which each X is an oxygen atom, n is 1, each $R^1$ is a cyclohexyl group and each $R^2$, $R^4$ and $R^5$ is a hydrogen atom, the compound in which $R^3$ is hydrogen has $\lambda_{max}$ = 770 nm, while the corresponding compound in which $R^3$ is methoxy has $\lambda_{max}$ = 768 nm, and the corresponding compound in which $R^3$ is diethylamino has $\lambda_{max}$ = 804 nm. Thus, providing a 7-alkoxy substituent may shift

$\lambda_{max}$ to slightly shorter wavelength, while providing a 7-diethylamino group shifts $\lambda_{max}$ to longer wavelengths by at least 30 nm.

With regard to solubility, it has been found that, in the compounds of Formula I in which each $R^1$ is tertiary butyl, each X is an oxygen atom, n is 1, and no substituents other than the 7-substituent are present on the benzpyrylium nuclei, the relative solubilities for the various 7-substituents are:

$N(CH_3)_2$ ≈ "Julolidine" << morpholino ≈ indolinyl ≈ piperidino < $N(C_2H_5)_2$,

where "Julolidine" indicates the compound in which $R^2$, $R^3$ and $R^4$ together form an $-N(CH_2CH_2CH_2)_2$ group. Thus, it appears that to enhance the solubility of the dye, one or both of the benzchalcopyrylium nuclei should bear at the 7-position a substituent which can extend substantially out of the plane of the nucleus to which it is attached.

Accordingly, desirably, at least one of the nuclei carries at the 7-position a substituent in which an element of Group 5A, 6A or 7A of the Periodic Table is directly connected to the nucleus, subject to the proviso that when this element of Group 5A, 6A or 7A is at least divalent, the 7-substituent may comprise at least one saturated heterocyclic ring containing the element of Group 5A, 6A or 7A, this saturated heterocyclic ring optionally being fused to the benzene ring of the associated nucleus. For example, the 7-substituent may be a halogen atom. Depending upon the wavelength at which maximum infra-red absorption is desired, preferred 7-substituents are alkoxy groups containing not more than about 12 carbon atoms, and disubstituted amino or disubstituted phosphino groups, wherein each of the substituents on the or each disubstituted group comprises an alkyl group containing not more than about 6 carbon atoms (but preferably containing at least 2 carbon atoms), or the two substituents on any one disubstituted group together form, with the nitrogen or phosphorus atom thereof, a heterocyclic ring system, this ring system optionally being fused to the nucleus which carries the disubstituted amino or phosphino substituent.

Especially preferred are dyes in which each of the nuclei carries a 7-disubstituted amino group, or one of the nuclei carries a 7-disubstituted amino group and the other nucleus carries one alkoxy group at the 7-position or two alkoxy groups at the 5- and 7-positions. Disubstituted amino groups are desirable to avoid the presence of active hydrogen atoms which might cause undesirable side-reactions in the condensation used to prepare the present dyes, as discussed in more detail below. The substituents on the amino nitrogen may be two separate substituents, for example two separate alkyl groups, preferably alkyl groups containing not more than about 4 carbon atoms each, or phenyl groups. Alternatively, the two substituents together may form, with the nitrogen, a heterocyclic ring, for example a piperidino ring. Such a heterocyclic ring may contain an additional heteroatom (and thus, for example, the heterocyclic ring may be a morpholine ring), and/or be fused to another saturated or unsaturated ring; for example, the disubstituted amino group may be an N-indolinyl group. Finally, one or both of the substituents on the nitrogen may be divalent groups with their ends remote from the nitrogen attached to the nucleus carrying the nitrogen, so that the disubstituted amino group becomes part of one or two heterocyclic rings fused to the nucleus. For example, in the disubstituted amino group, one substituent could be a methyl group, while the other could be a trimethylene group having one end attached to a ring carbon ortho to nitrogen atom, so that the nitrogen atom, the methyl group, the trimethylene group and two carbon atoms of the benzene ring of the nucleus form an N-methylpiperidino grouping fused to the benzene ring. Also, for example, the disubstituted amino group could be an $-N[-(CH_2)_3-]_2$ group in which the ends of the trimethylene groups remote from the nitrogen atom are joined to positions of the nucleus ortho to the carbon atom carrying the nitrogen atom, so that the $-N[-(CH_2)_3-]_2$ group and the benzene ring of the nucleus together form a julolidine ring system.

Disubstituted phosphino groups may bear all the types of substituents already discussed above with reference to disubstituted amino groups. Furthermore, the nucleus may carry alkoxy substituents or modified alkoxy substituents in which one carbon atom is bonded to a phenyl carbon ortho to that carrying the oxygen atom, and the term "alkoxy" herein is to be construed accordingly. For example, one of the alkoxy groups could be an ethyleneoxy group having its $\beta$-carbon bonded to a benzene ring carbon ortho to that carrying the oxygen atom, so that the ethyleneoxy group and two of the carbons of the nucleus form a dihydrofuran ring.

The nuclei may also carry alkoxy groups at other than the 7-position; for example, each of the nuclei could bear two alkoxy substituents at the 5- and 7-positions.

The dyes of the present invention may also carry substituents on the meso carbon atoms, that is the carbon atoms between the squarylium or croconylium nucleus and the benzchalcopyrylium nuclei. Such meso substituents may be, for example, alkyl groups containing from 1 to about 6 carbons atoms. Preferably, the meso carbon atoms are unsubstituted or carry a methyl substituent.

The preferred group of dyes of Formula I have already been defined above, and the preferred values of the 2-substituent $R^1$ have already been described. In general, the compounds of Formula I in which each X is an oxygen atom are preferred for reasons of cost and ease of synthesis. Especially preferred are the

compounds of Formula I in which each X is an oxygen atom and n is 1, that is to say compounds of the formula:

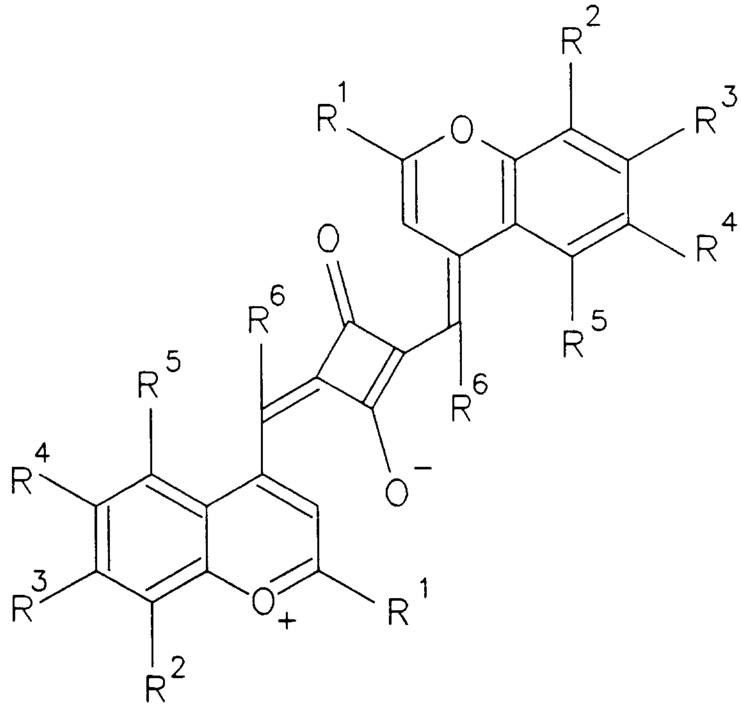

(IA)

Unless $R^2$ and $R^4$ are required to form part of divalent substituents on an amino or phosphino group, or part of an alkoxy group, both groups are conveniently hydrogen atoms, although either or both may be halogen atoms. Similarly, unless $R^5$ is an alkoxy group, it is conveniently a hydrogen atom, although $R^5$ may be a halogen atom. A specific preferred alkoxy group is the methoxy group. Each group $R^6$ is preferably a hydrogen atom or a methyl group.

In the dyes of Formula I, desirably each of the groups $R^3$ independently is:

(a) an alkoxy group containing not more than about 12 carbon atoms, or a disubstituted amino or disubstituted phosphino group wherein each of the substituents on the or each disubstituted group comprises an alkyl group containing not more than about 6 carbon atoms, or the two substituents on any one disubstituted group together form, with the nitrogen or phosphorus atom thereof, a saturated heterocyclic ring containing the nitrogen or phosphorus atom and optionally an oxygen atom, this saturated heterocyclic ring optionally being fused to one or two benzene rings;

(b) together with one of the groups $R^2$ and $R^4$ on the same benzene ring, a disubstituted amino or disubstituted phosphino group wherein one of the substituents comprises an alkyl group containing not more than about 6 carbon atoms and the other substituent comprises a polymethylene group, the end of the polymethylene group remote from the nitrogen or phosphorus atom being joined to the 6- or 8-position of the nucleus carrying the nitrogen atom, so that the nitrogen atom, the polymethylene group, and two of the carbons of the nucleus form a heterocyclic ring, the polymethylene group optionally being fused to an alicyclic or benzene ring; or

(c) together with both the groups $R^2$ and $R^4$ on the same benzene ring, a disubstituted amino or disubstituted phosphino group wherein each of the substituents comprises a polymethylene group, the ends of the polymethylene groups remote from the nitrogen or phosphorus atom being joined to the 6- and 8-positions of the nucleus carrying the nitrogen atom, so that the nitrogen atom, the two polymethylene groups, and three of the carbons of the nucleus form two heterocyclic rings, one or both of the polymethylene groups optionally being fused to an alicyclic or benzene ring.

Preferably, each of the groups $R^3$ is a disubstituted amino group, or one of the groups $R^3$ is a 7-disubstituted amino group and the other is an alkoxy group; specific preferred disubstituted amino groups are dimethylamino, diethylamino, piperidino, morpholino and indolinyl groups. Such disubstituted amino groups assist in providing high absorptions at about 800-820 nm in solution, and at slightly longer wavelengths in plastic films; absorptions at about these wavelengths are highly desirable with present infra-red lasers. Alternatively, when the $R^2$, $R^3$ and $R^4$ groups on the same ring together form a disubstituted

amino group, this group is preferably an $-N[-(CH_2)_3-]_2$ group.

Whether a squarylium or croconylium dye is used in the process of the present invention will depend largely upon the wavelength at which absorption is desired, since the croconylium dyes absorb at substantially longer wavelengths that the corresponding squarylium dyes. For examples, the squarylium dye of Formula I in which each $R^1$ is a tertiary butyl group, each $R^3$ is a diethylamino group, and each $R^2$, $R^4$, $R^5$ and $R^6$ is a hydrogen atom has its main infra-red absorption peak at 808 nm, while the corresponding croconylium dye has its absorption at 956 nm, both in dichloromethane. In processes where low visible absorption is required and the medium used does not restrict the absorption wavelength, the squarylium dyes tend to be preferred over the croconylium dyes, since the former generally have lower visible absorptions.

Specific preferred squarylium dyes of Formula I are those in which each X is an oxygen atom and:

a. each $R^1$ is a tertiary butyl group, each $R^3$ is a diethylamino group, and each $R^2$, $R^4$, $R^5$ and $R^6$ is a hydrogen atom, namely 4-[[3-[7-diethylamino-2-(1,1-dimethylethyl)-(benz[b]-4H-pyran-4-ylidene)methyl]-2-hydroxy-4-oxo-2-cyclobuten-1-ylidene]methyl]-7-diethylamino-2-(1,1-dimethylethyl)-benz[b]pyrylium hydroxide inner salt;

b. each $R^1$ is a tertiary butyl group, each $R^3$ is a dimethylamino group, and each $R^2$, $R^4$, $R^5$ and $R^6$ is a hydrogen atom, namely 4-[[3-[7-diethylamino-2-(1,1-dimethylethyl)-(benz[b]-4H-pyran-4-ylidene)methyl]-2-hydroxy-4-oxo-2-cyclobuten-1-ylidene]methyl]-7-dimethylamino-2-(1,1-dimethylethyl)-benz[b]pyrylium hydroxide inner salt;

c. each $R^1$ is a tertiary butyl group, each $R^3$ is an indolinyl group, and each $R^2$, $R^4$, $R^5$ and $R^6$ is a hydrogen atom, namely 4-[[3-[7-indolinyl-2-(1,1-dimethylethyl)-(benz[b]-4H-pyran-4-ylidene)methyl]-2-hydroxy-4-oxo-2-cyclobuten-1-ylidene]methyl]-7-indolinyl-2-(1,1-dimethylethyl)-benz[b]pyrylium hydroxide inner salt;

d. each $R^1$ is a tertiary butyl group, each $R^3$ is a morpholino group, and each $R^2$, $R^4$, $R^5$ and $R^6$ is a hydrogen atom, namely 4-[[3-[7-morpholino-2-(1,1-dimethylethyl)-(benz[b]-4H-pyran-4-ylidene)methyl]-2-hydroxy-4-oxo-2-cyclobuten-1-ylidene]methyl]-7-morpholino-2-(1,1-dimethylethyl)benz[b]pyrylium hydroxide inner salt;

e. each $R^1$ is a tertiary butyl group, each $R^3$ is a piperidino group, and each $R^2$, $R^4$, $R^5$ and $R^6$ is a hydrogen atom, namely 4-[[3-[7-piperidino-2-(1,1-dimethylethyl)-(benz[b]-4H-pyran-4-ylidene)methyl]-2-hydroxy-4-oxo-2-cyclobuten-1-ylidene]methyl]-7-piperidino-2-(1,1-dimethylethyl)-benz[b]pyrylium hydroxide inner salt;

f. each $R^1$ is a cyclohexyl group, each $R^3$ is a diethylamino group, and each $R^2$, $R^4$, $R^5$ and $R^6$ is a hydrogen atom, namely 4-[[3-[2-cyclohexyl-7-diethylamino-(benz[b]-4H-pyran-4-ylidene)methyl]-2-hydroxy-4-oxo-2-cyclobuten-1-ylidene]methyl]-2-cyclohexyl-7-diethylaminobenz[b]pyrylium hydroxide inner salt dye;

g. each $R^1$ is a tertiary butyl group and each $R^2$, $R^3$, $R^4$, $R^5$ and $R^6$ is a hydrogen atom, namely 4-[[3-[2-[1,1-dimethylethyl]-[benz[b]-4H-pyran-4-ylidene]methyl]-2-hydroxy-4-oxo-2-cyclobuten-1-ylidene]methyl]-2-[1,1-dimethylethyl]benz[b]pyrylium hydroxide inner salt dye;

h. in each benzpyrylium nucleus, $R^1$ is a tertiary butyl group, $R^5$ and $R^6$ are each a hydrogen atom, and $R^2$, $R^3$ and $R^4$ together form an $-N[-(CH_2)_3-]_2$ group in which the ends of the trimethylene groups remote from the nitrogen atom are joined to the benzpyrylium nucleus, so that the $-N[-(CH_2)_3-]_2$ group and the phenyl ring of the benzpyrylium nucleus together form a julolidine ring system, namely 9-[[3-[11-[1,1-dimethylethyl][1]benzopyrano[6,7,8-ij]-2,3,6,7-tetrahydro-1H,5H-quinolizin-9-ylidene]methyl]-2-hydroxy-4-oxo-2-cyclobuten-1-ylidene]methyl-11-[1,1-dimethylethyl][1]benzopyrano[6,7,8-ij]-2,3,6,7-tetrahydrol-1H,5H-quinolizinium hydroxide inner salt dye;

i. each $R^1$ is a 6,6-dimethylbicyclo[3.1.1]hept-2-en-2-yl group, each $R^3$ is a diethylamino group, and each $R^2$, $R^4$, $R^5$ and $R^6$ is a hydrogen atom, namely 4-[[3-[2-[6,6-dimethylbicyclo[3.1.1]hept-2-en-2-yl]-7-diethylamino-(benz[b]-4H-pyran-4-ylidene)methyl]-2-hydroxy-4-oxo-2-cyclobuten-1-ylidene]methyl]-2-[6,6-dimethylbicyclo[3.1.1]hept-2-en-2-yl]-7-diethylaminobenz[b]pyrylium hydroxide inner salt dye;

j. each $R^1$ is a bicyclo[2.2.1]hept-2-en-5-yl group, each $R^3$ is a diethylamino group, and each $R^2$, $R^4$, $R^5$ and $R^6$ is a hydrogen atom, namely 4-[[3-[2-[bicyclo[2.2.1]hept-2-en-5-yl]-7-diethylamino-(benz[b]-4H-pyran-4-ylidene)methyl]-2-hydroxy-4-oxo-2-cyclobuten-1-ylidene]methyl]-2-[bicyclo[2.2.1]-hept-2-en-5-yl]-7-diethylaminobenz[b]pyrylium hydroxide inner salt dye;

k. each $R^1$ is a tertiary butyl group, each $R^3$ is a diethylamino group, each $R^2$, $R^4$ and $R^5$ is a hydrogen atom, and each $R^6$ is a methyl group, namely 4-[1-[3-[1-[7-diethylamino-2-[1,1-dimethylethyl]-(benz[b]-4H-pyran-4-ylidene)]eth-1-yl]-2-hydroxy-4-oxo-cyclobuten-1-ylidene]eth-1-yl]-7-diethylamino-2-[1,1-dimethylethyl]benz[b]pyrylium hydroxide inner salt dye;

l. each $R^1$ is an adamantyl group, each $R^3$ is a morpholino group, each $R^2$, $R^4$ and $R^5$ is a hydrogen atom, and each $R^6$ is a methyl group, namely 4-[[3-[2-[1-adamantyl]-7-morpholino-(benz[b]-4H-pyran-4-ylidene)methyl]-2-hydroxy-4-oxo-2-cyclobuten-1-ylidene]methyl]-2-[1-adamantyl]-7-morpholinobenz[b]-pyrylium hydroxide inner salt dye;

m. each $R^1$ is a cyclohexyl group, each $R^3$ is a methoxy group, and each $R^2$, $R^4$, $R^5$ and $R^6$ is a hydrogen atom, namely 4-[[3-[2-cyclohexyl-7-methoxy-(benz[b]-4H-pyran-4-ylidene)methyl]-2-hydroxy-4-oxo-2-cyclobuten-1-ylidene]methyl]-2-cyclohexyl-7-methoxybenz[b]pyrylium hydroxide inner salt dye; and

n. each $R^1$ is a tertiary butyl group, each $R^2$, $R^4$, $R^5$ and $R^6$ is a hydrogen atom, one $R^3$ is a diethylamino group and the other is a 2-ethylbutoxy group, namely 4-[[3-[7-(2-ethylbutoxy)-2-(1,1-dimethylethyl)-(benz-[b]-4H-pyran-4-ylidene)methyl]-2-hydroxy-4-oxo-2-cyclobuten-1-ylidene]methyl]-7-diethylamino-2-(1,1-dimethylethyl)-benz[b]pyryliumhydroxide inner salt.

Specific preferred croconylium dyes of Formula I are those in which each X is an oxygen atom and:

a. each $R^1$ is a tertiary butyl group, each $R^3$ and $R^5$ is a methoxy group, and each $R^2$, $R^4$ and $R^6$ is a hydrogen atom, namely 4-[[3-[5,7-dimethoxy-2-(1,1-dimethylethyl)-(benz[b]-4H-pyran-4-ylidene)methyl]-2-hydroxy-4,5-dioxo-2-cyclopenten-1-ylidene]methyl]-5,7-dimethyoxy-2-(1,1-dimethylethyl)benz[b]pyrylium hydroxide inner salt;

b. each $R^1$ is a t-butyl group, each $R^3$ is a diethylamino group, and each $R^2$, $R^4$, $R^5$ and $R^6$ is a hydrogen atom, namely 4-[[3-[[7-diethylamino-2-[1,1-dimethylethyl]benz[b]-4H-pyran-4-ylidene]methyl]-2-hydroxy-4,5-dioxo-2-cyclopenten-1-ylidene]methyl]-7-diethylamino-2-[1,1-dimethylethyl]benz[b]pyrylium hydroxide inner salt dye; and

c. each $R^1$ is a t-butyl group, each $R^3$ is a hydroxyl group, and each $R^2$, $R^4$, $R^5$ and $R^6$ is a hydrogen atom, namely 4-[[3-[[2-[1,1-dimethylethyl]-7-hydroxybenz[b]-4H-pyran-4-ylidene]methyl]-2-hydroxy-4,5-dioxo-2-cyclopenten-1-ylidene]methyl]-2-[1,1-dimethylethyl]-7-hydroxybenz[b]pyrylium hydroxide inner salt dye.

A specific preferred thiobenzpyrylium dye of the present invention is that in which $Q^1$ is a 4-[2-[1,1-dimethylethyl]benz[b]-4H-thiopyran-4-ylium hydroxide]methylidene grouping, Z is a 1,3-(2-hydroxy-4-oxo-2-cyclobutylidene ring, and $Q^2$ is a 4-[2-[1,1-dimethylethyl]benz[b]-4H-thiopyran-4-ylidene]methyl grouping, namely 4-[[2-[1,1-dimethylethyl]benz[b]-4H-thiopyran-4-ylidene]methyl]-2-hydroxy-4-oxo-2-cyclobuten-1-ylidene]methyl]-2-[1,1-dimethylethyl]benz[b]thiopyrylium hydroxide inner salt dye.

As already mentioned, in the dyes of the present invention, the substituents $R^1$, $R^2$, $R^3$, $R^4$, $R^5$, and $R^6$ on one half of the dye molecule can be varied independently of the corresponding substituents on the other half of the molecule, i.e., the dye can be symmetric or asymmetric. One preferred process for the preparation of the squarylium dyes comprises condensing two moles of a corresponding 4-$R^7$-benzpyrylium compound with squaric acid in the presence of a base. This condensation is conveniently conducted using quinoline as the base in solution in an alkanol, for example butanol, at reflux. Similarly, the croconylium dyes can be synthesized by condensing two moles of a corresponding 4-$R^7$-benzpyrylium compound with a salt of croconic acid. The best salts for use in this synthesis vary with the exact nature of the substituents on the nuclei; among croconate salts which have been found useful are alkali metal salts, especially potassium croconate, tetrasubstituted ammonium salts, for example tetraethylammonium, and salts with tertiary amines, for example quinoline. It will be appreciated that, in either condensation, the group $R^7$ must contain one more carbon atom than the meso substituent $R^6$ desired in the final dye, since the $\alpha$-carbon atom of $R^7$ forms the meso carbon atom in the final dye.

These processes may be used for the synthesis of both symmetric and asymmetric dyes of the invention; if an asymmetric dye is desired, a mixture of the two 4-$R^7$-benzpyrylium compounds is used. Since such a process inevitably produces three different products (two symmetrical dyes and the desired asymmetric dye), when an asymmetric squarylium dye is required, it is normally preferred to use the synthesis described in the aforementioned copending Application Serial No. 07/696,222. As described in more detail below with reference to Figure 4, this synthesis involves first preparing a squaric acid derivative of the formula:

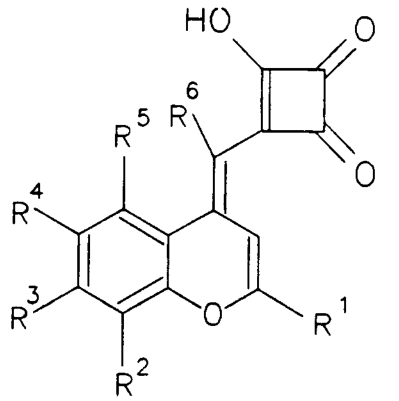

(II)

and then condensing this squaric acid derivative with one mole of the appropriate 4-$R^7$-benzpyrylium compound to produce the final dye.

Figure 1 shows a first synthetic route for preparing a bis(benzpyrylium) squarylium dye (IA) of the invention from the corresponding substituted phenol (V), in which $R^2$, $R^3$, $R^4$, and $R^5$ are as defined above with reference to Formula I. This phenol is first condensed with the appropriate $\beta$-ketoester (VI), in which $R^1$ is as defined above with reference to Formula I and R is conveniently an alkyl group, typically a methyl group, to produce a 4-oxobenz-4H-pyran or chromone (III). (The term "$\beta$-ketoester" is used herein to include any compound having a tautomer of the Formula VI, even though the compound normally exists wholly or partially in a different tautomer, such as an enol form.) This condensation may be effected by heating the two reactants together, typically at about 200 °C. The chromone (III) is then treated with an organometallic alkylating agent, preferably an alkyl Grignard reagent, for example methyl magnesium bromide, and then subjected to acid-mediated dehydration with, for example, fluoboric acid, to produce the corresponding 4-$R^7$-benzpyrylium salt (IV).

The benzpyrylium salt (IV) will of course contain the counterion of the acid used to produce it. Since the salt is intended for use in the production of the dye (IA), which does not contain the counterion, the choice of counterion is normally of little importance. However, if it is desired to store the salt (IV) for a long period, it may be desirable to convert this salt to one with a different counterion; the necessary counterion exchange can be effected by conventional techniques which are well-known to those skilled in the synthesis of pyrylium dyes.

In certain cases, it may be advantageous to modify the above synthesis in order to vary the substituent $R^1$. For example, if it is desired to produce a dye in which $R^1$ is an unsaturated group containing an $\alpha,\beta$-ethylenic linkage, one could first prepare a chromone of Formula III having $R^1$ a methyl group and then perform an aldol condensation between this chromone and an appropriate aldehyde to form the desired unsaturated group $R^1$. A condensation of this type is illustrated in Example 6 below. Other similar methods of modifying the group $R^1$, for example to introduce acetylenic linkages therein, will readily be apparent to those skilled in the art.

Croconylium dyes can be produced in exactly the same manner except that a croconate salt is used instead of squaric acid in the final step. Processes for the preparation of the thio- and selenoanalogues of the salt (III) are described in the literature.

Figure 2 shows a second route to the preparation of the chromone (III). In the route shown in Figure 2, an appropriate ester (VII) of salicylic acid is reacted with dimethyl sulfoxide in the presence of a base to prepare the corresponding 2-($CH_3$-SO-$CH_2$-CO)-phenol (VIII), which is then condensed with an aldehyde $R^1$CHO containing the $R^1$ substituent desired in the final dye to produce the chromone (III). This chromone is converted to the dye (IA) in the same way as described above with reference to Figure 1. The corresponding benzthiopyrylium and benzselenopyrylium compounds may be prepared from the thio- and seleno-analogues of the compound (VII). Again, croconylium dyes can be produced in exactly the same manner except that a croconate salt is used instead of squaric acid in the final step.

Figure 3 shows a third synthetic route in which the 4-$R^7$-benzpyrylium salt (IV) is prepared without first preparing a chromone (III). In the route shown in Figure 3, the appropriate 4-$R^7$-2-oxobenz-2H-pyran (IX) is reacted with an organometallic alkylating agent (preferably a Grignard reagent, for example methyl magnesium bromide) containing the desired substituent $R^1$ in a dialkoxyalkane, preferably dimethoxyethane, and then subjected to acid-mediated dehydration with, for example, fluoboric acid, to produce the benzpyrylium salt (IV). The salt (IV) is then converted to the dye (IA) in the same way as described above with reference to Figure 1. The compound of Formula IX in which $R^3$ is diethylamino and $R^2$, $R^4$, $R^5$ and $R^6$

are each a hydrogen atom is available commercially.

Figure 4 shows the presently preferred route for producing asymmetric squarylium dyes of the present invention, using reactions described in the aforementioned copending Application Serial No. 07/696,222. One form of this synthesis begins with the condensation of the appropriate 4-$R^7$-benzpyrylium salt (IV) with 2,3,4,4-tetrachlorocyclobut-1-en-2-one (X) to give a trihalosquaric acid derivative (XI). The tetrachloro compound (X) and its synthesis are described in Maahs et al., "Syntheses and Derivatives of Squaric Acid", Angew. Chem. Int. Ed., 5, 888-893 (1966). This reaction is conducted in the presence of a base, preferably triethylamine. As noted above, the anion of the salt (IV) can be any anion which provides a stable salt and which does not interfere with the desired reaction; conveniently the tetrafluoroborate salt is used. The tetrabromo homologue may be used in place of the tetrachloro compound (X).

In the next step of the synthesis, the trihalosquaric acid derivative (XI) is hydrolyzed to the corresponding non-halogenated derivative (XII). Desirably, this hydrolysis is effected by heating the derivative (XI) with triflic acid, then adding water.

Alternatively, the non-halogenated derivative (XII) may be prepared by condensing the diacid chloride (XIII), an ester/acid chloride (XIV; R is preferably an alkyl group containing 1 to about 6 carbon atoms) or a diester (XV) of squaric acid with the appropriate 4-$R^7$-benzpyrylium salt (IV), followed by hydrolysis of the resultant product. With both the monoacid chloride/monoester (XIV) and the diester (XV), this reaction requires the presence of a base to produce useful yields; with the more reactive diacid chloride (XIII), this reaction can be conducted without base. The reaction of the diacid chloride (XIII) may also be catalyzed by a Lewis acid.

When the diacid chloride (XIII) is used as starting material in this reaction, the intermediate is (XVI), the acid chloride of (XII), whereas when the diester (XV) is used as starting material, the intermediate is (XVII), the ester of (XII). When the ester/acid chloride (XIV) is used, both (XVI) and (XVII) are produced, but the production of this mixture poses no problems, since both compounds are readily hydrolyzed to give the derivative (XII). If desired, the acid chloride (XVI) may be treated with an alkanol to convert it to the ester (XVII). Acid bromides may be used in place of the acid chlorides.

The final step of the synthesis is the condensation of the squaric acid derivative (XII) with one mole of the appropriate 4-$R^7$-benzpyrylium salt (IV) to give the dye (IA); to produce an asymmetric dye (IA), the substituents on the salt (IV) condensed with the squaric acid derivative (XII) must of course be different from those on the salt (IV) used to produce the squaric acid derivative (XII). The conditions required for this reaction are substantially the same as those used for the reaction in which two moles of the salt (IV) are condensed with squaric acid to produce a dye (IA) as described above with reference to Figure 1.

The dyes of the present invention may be used in any of the applications in which prior art near infra-red absorbers have been used. Thus, the dyes may be used as dyes in printing inks intended to provide markings which can be read under near infra-red radiation, for example, on packages of consumer items intended to be scanned by near infra-red laser scanners. At least some of the present dyes may also be useful as charge transfer materials for use in xerography, electrophotography and similar processes, and as laser dyes.

However, because of their high extinction coefficients in the near infra-red region, the present dyes are especially useful in processes for generating heat in a medium; in such a process at least part of the medium is exposed to near infra-red actinic radiation of a frequency absorbed by the dye, so that the radiation is absorbed by the dye and heat is generated within the parts of the medium exposed to the radiation. Typically, in such a process, the radiation is provided by a laser. The medium may also comprise a thermally sensitive material capable of undergoing a color change upon exposure to heat; the medium is exposed imagewise to the radiation, and the heat generated by the dye is sufficient to effect a color change in the thermally sensitive material, so that an image is formed in the medium. Thus, for example, the present dyes may be used as the near infra-red absorbers in the thermal imaging processes described in the aforementioned U.S. Patents Nos. 4,602,263 and 4,826,976.

(The term "image" is used herein to refer to any arrangement of areas which exhibit differing transmission and/or reflectance characteristics under electromagnetic radiation. Thus, the term "image" is used herein to include not only graphic or pictorial images but also textual material and quasi-textual material for machine "reading", for example, bar codes.)

In such a process, preferably the thermally sensitive material is originally substantially colorless and is converted by the heat generated to a colored material in exposed areas of the image.

Figure 5 of the accompanying drawings illustrates an imaging medium (generally designated 10) of this type. This imaging medium 10 is intended for use in the production of transparencies and comprises a substantially transparent support 12 formed of 4 mil (101 μm) poly(ethylene terephthalate) (PET) film incorporating an ultra-violet absorber. Appropriate PET films are readily available commercially, for example

as P4C1A film from DuPont de Nemours., Wilmington, Delaware.

The imaging medium 10 also comprises a diffusion-reducing subcoat 14 approximately 1 µm thick formed from a 10:1 w/w mixture of a water-dispersible styrene acrylic polymer (Joncryl 538 sold by S.C. Johnson & Son, Inc., Racine WI 53403) and a water-soluble acrylic polymer (Carboset 526 sold by The B.F. Goodrich Co., Akron Ohio 44313). The presence of the minor proportion of water-soluble acrylic polymer reduces the tendency for the layer 14 to crack during the coating process. The diffusion-reducing subcoat 14, which has a glass transition temperature of approximately 55 °C, serves the function of a conventional subcoat, namely increasing the adhesion of the imaging layer 16 (described in detail below) to the support 12. The subcoat 14 also serves to reduce or eliminate migration of dye compound from the imaging layer 16 after imaging; if a conventional subcoat were employed in place of the diffusion-reducing subcoat 14, diffusion of the dye compound from the layer 16 into the subcoat after imaging might cause loss of sharpness of the image. The subcoat 14 is coated onto the support 12 from an aqueous medium containing the water-dispersible and water-soluble polymers.

A yellow imaging layer 16 is in contact with the diffusion-reducing subcoat 14. This imaging layer 16 is approximately 5 µm thick and comprises approximately 47.5 parts by weight of a leuco dye of the formula:

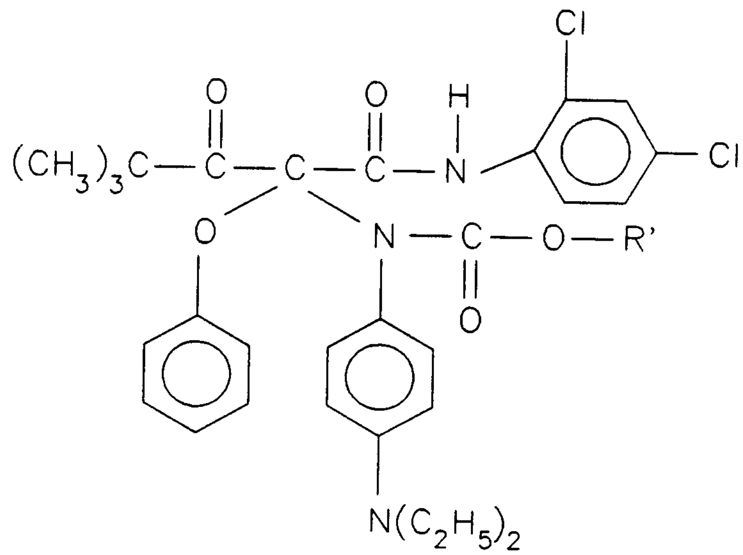

**(LD1)**

in which R' is a tertiary butyl group (the compounds in which R' is an isobutyl or benzyl group may alternatively be used), 1.6 parts by weight of an infrared dye of the formula:

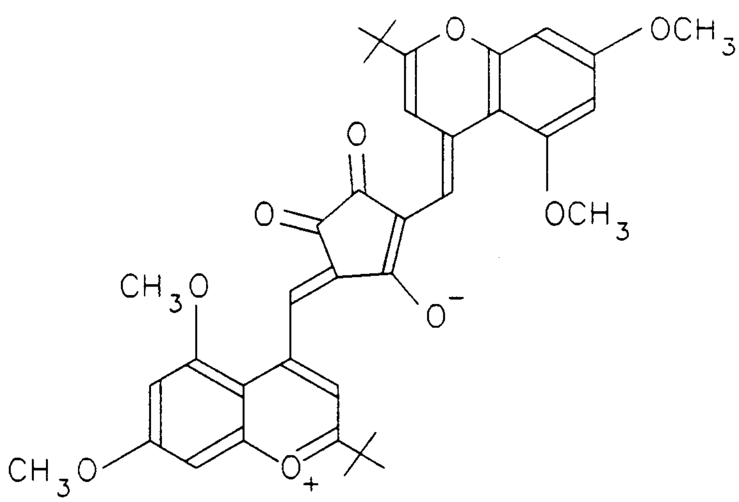

**(IR1)**

(prepared in Example 16 below), 3.3 parts by weight of a hindered amine stabilizer (HALS-63, sold by Fairmount Chemical Co.), and 47.5 parts by weight of a poly(methyl methacrylate) binder (Elvacite 2021,

sold by DuPont de Nemours, Wilmington, Delaware; this material is stated by the manufacturer to be a methyl methacrylate/ethyl acrylate copolymer, but its glass transition temperature approximates that of poly (methyl methacrylate)). This binder has a glass transition temperature of approximately 110 °C. The imaging layer 16 is applied by coating from a mixture of heptanes and methyl ethyl ketone.

Superposed on the yellow imaging layer 16 is a diffusion-reducing layer 18, which, like the first diffusion-reducing layer 14, serves to prevent migration of dye compound from the yellow imaging layer 16 on storage after imaging. The diffusion-reducing layer 18, which is approximately 2 µm thick, is formed of a water-dispersible styrene acrylic polymer (Joncryl 138 sold by S.C. Johnson & Son, Inc., Racine WI 53403), and is coated from an aqueous dispersion. This layer has a glass transition temperature of approximately 60 °C.

The next layer of the imaging medium 10 is a solvent-resistant interlayer 20 approximately 4.6 µm thick and composed of a major proportion of partially cross-linked polyurethane (NeoRez XR-9637 polyurethane sold by ICI Resins US, Wilmington, Massachusetts) and a minor proportion of poly(vinyl alcohol) (Airvol 540, sold by Air Products and Chemicals, Inc., Allentown PA 18195). This solvent-resistant interlayer 20 is coated from an aqueous dispersion. The interlayer 20 not only helps to thermally insulate the imaging layers 14 and 22 (described below) from one another during imaging, but also prevents disruption and/or damage to the yellow imaging layer 16 and the diffusion-reducing layer 18 during coating of the magenta imaging layer 22. Since the yellow imaging layer 16 and the magenta imaging layer 22 are both coated from organic solution, if a solvent-resistant interlayer were not provided on the layer 16 before the layer 22 was coated, the organic solvent used to coat the layer 22 might disrupt, damage or extract leuco dye or infra-red absorber from the layer 16. Provision of the solvent-resistant interlayer 20, which is not dissolved by and does not swell in the organic solvent used to coat the layer 22, serves to prevent disruption of or damage to the layer 16 as the layer 22 is coated. Furthermore, the solvent-resistant interlayer 20 serves to prevent the magenta leuco dye, infra-red dye and hindered amine light stabilizer from the layer 22 sinking into the diffusion-reducing layer 18 and the yellow imaging layer 16 as the layer 22 is being coated.

Superposed on the solvent-resistant interlayer 20 is the magenta imaging layer 22, which is approximately 3 µm thick and comprises approximately 47.25 parts by weight of a leuco dye of the formula:

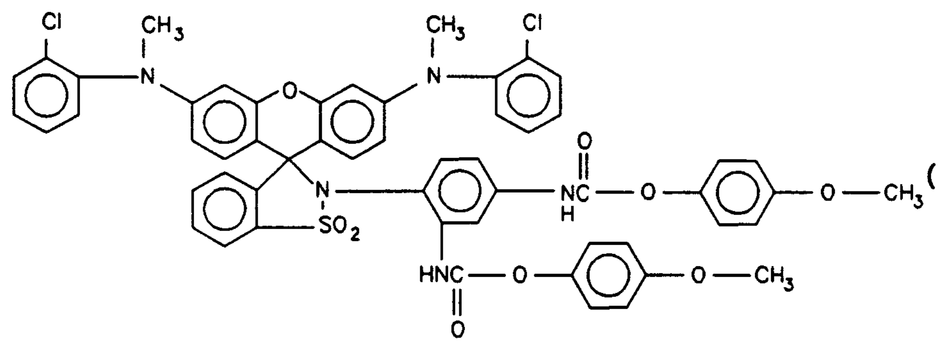

(LD2)

(this leuco dye may be prepared by the methods described in the aforementioned U.S. Patents Nos. 4,720,449 and 4,960,901), approximately 3.4 parts by weight of zinc acetate (thus giving a leuco dye: zinc cation molar ratio of about 1:0.4), 1.62 parts by weight of an infra-red dye of the formula:

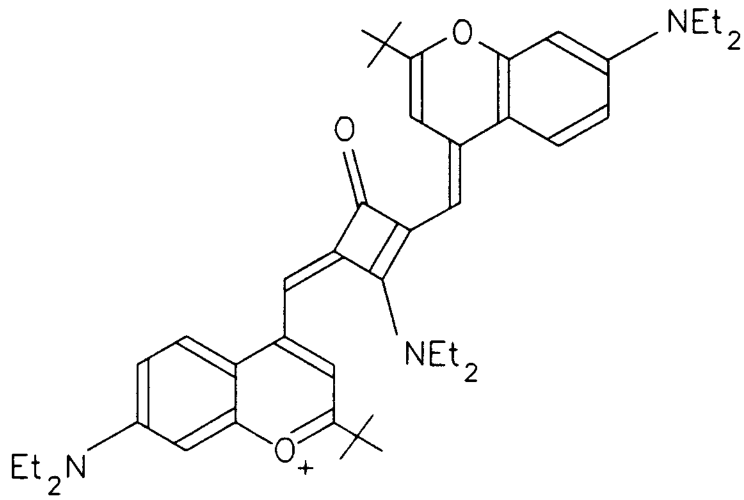

(IR2)

(which may be prepared by reacting a compound of Formula XVI or XVII shown in Figure 4 with diethylamine to introduce the $-NEt_2$ group on the squarylium ring, and then reacting the product with the benzpyrylium salt (IV) in the same way as described above with reference to Figure 4), 3.6 parts by weight of a hindered amine stabilizer (HALS-63), 0.27 parts by weight of a wetting agent, and 47.25 parts by weight of a polyurethane binder (Estane 5715, supplied by The B.F. Goodrich Co., Akron Ohio 44313). The imaging layer 22 is applied by coating from a cyclohexanone/methyl ethyl ketone mixture.

(Alternatively, the infra-red dye of Formula IR2 above may be replaced by the dye of formula:

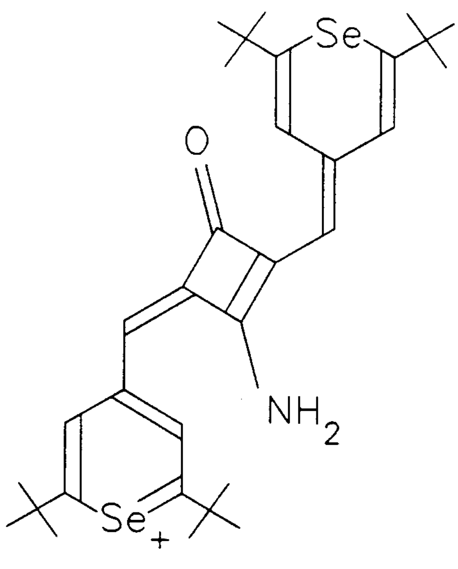

(IR3)

(used in the form of its tetrafluoroborate salt) (this infra-red dye may be prepared by the process analogous to that used to prepare the infra-red dye of Formula IR2 above using the corresponding selenopyrylium squaric acid derivative and ammonia to introduce the amino group, followed by condensation of the product with a selenopyrylium salt; to prepare the selenopyrylium squaric acid derivative, the corresponding selenopyrylium salt is substituted for the benzpyrylium salt IV in the reactions shown in Figure 4).

On the imaging layer 22 is coated a second solvent-resistant interlayer 24 which is formed from the same material, and coated in the same manner as, the solvent-resistant interlayer 20.

Superposed on the second solvent-resistant interlayer 24 is a cyan imaging layer 26, which is approximately 3 µm thick and comprises approximately 49.5 parts by weight of a leuco dye of the formula:

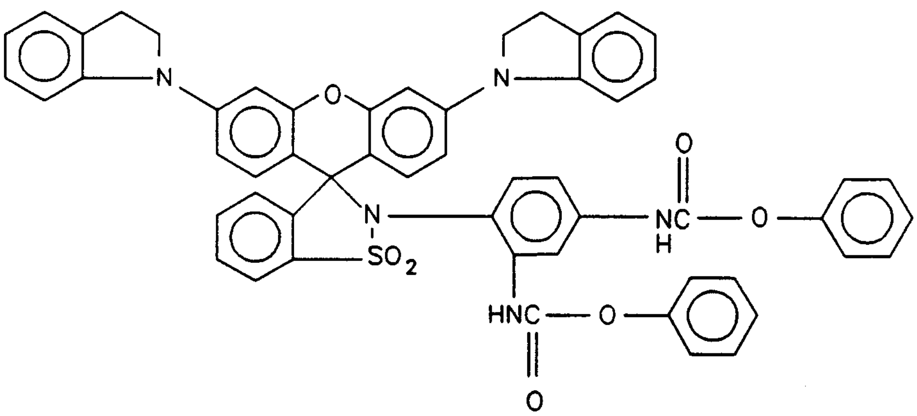

(LD3)

(this leuco dye may be prepared by the methods described in the aforementioned U.S. Patents Nos. 4,720,449 and 4,960,901), approximately 3.97 grams of zinc acetate (thus giving a leuco dye: zinc cation molar ratio of about 1:0.4), 1.62 parts by weight of an infra-red dye of the formula:

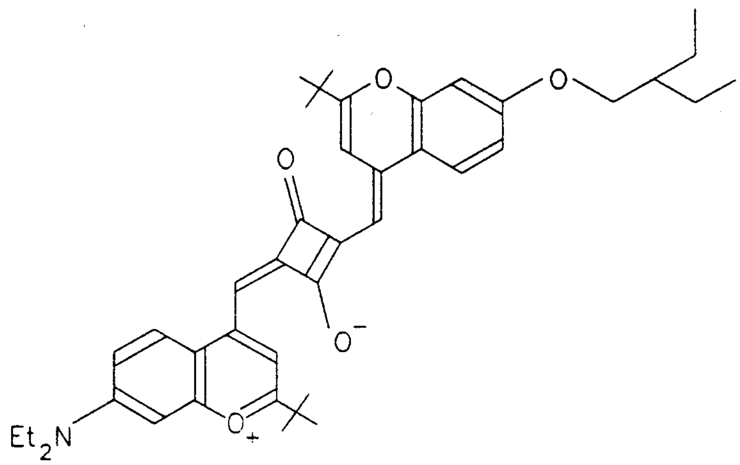

(IR4)

(prepared in Example 12 below), 0.2 parts of a wetting agent, and 49.5 parts by weight of a polyurethane binder (Estane 5715). The imaging layer 26 is applied by coating from methyl ethyl ketone.

(Alternatively, the infra-red dye of Formula IR4 above may be replaced by the dye of formula:

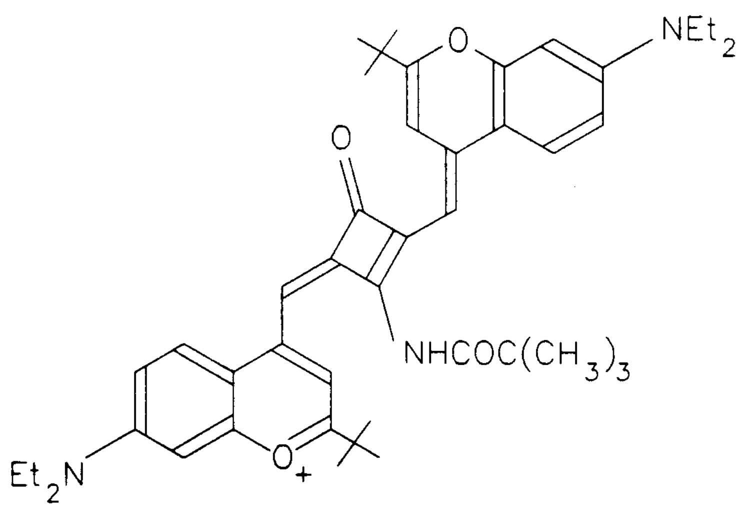

(IR5)

(which may be prepared by a process analogous to that used to prepare the infra-red dye of Formula IR2 above, by reacting a compound of Formula XVI or XVII shown in Figure 4 with ammonia to introduce an amino group on the squarylium ring, then reacting the product with the benzpyrylium salt (IV) to produce the amino squarylium dye, and finally reacting this amino squarylium dye with pivaloyl chloride to produce the final pivaloylamino group on the squarylium ring).

As already indicated, the layers 14-26 of the imaging medium 10 are produced by coating on to the transparent support 12. However, the remaining layers of the imaging medium 10, namely the transparent bubble-suppressant layer 32, the ultraviolet filter layer 30 and the adhesive layer 28 are not coated on to the layer 26 but rather are prepared as a separate unit and then laminated to the remaining layers of the medium.

The transparent bubble-suppressant layer 32 is a 1.75 mil (44µm) PET film, a preferred film being that sold as ICI 505 film by ICI Americas, Inc., Wilmington, Delaware. The bubble-suppressant layer 32 prevents the formation of bubbles in the imaging layers 16, 22 and 26 of the imaging medium 10 during imaging.

The ultraviolet filter layer 30 serves to protect the imaging layers 16, 22 and 26 from the effects of ambient ultraviolet radiation. It has been found that the leuco dyes are susceptible to undergoing color changes when exposed to ultraviolet radiation during storage before or after imaging; such color changes are obviously undesirable since they increase the $D_{min}$ of the image and may distort the colors therein. The ultraviolet filter layer 30 is approximately 5 µm thick and comprises approximately 83 percent by weight of a poly(methyl methacrylate) (Elvacite 2043, sold by DuPont de Nemours, Wilmington, Massachusetts), 16.6 percent by weight of an ultraviolet filter (Tinuvin 328 sold by Ciba-Geigy, Ardsdale NY) and 0.4 percent by weight of a wetting agent. The ultraviolet filter layer 30 is prepared by coating on to the bubble-suppressant layer 32 from a solution in methyl ethyl ketone.

The adhesive layer, which is approximately 2 µm thick, is formed of a water-dispersible styrene acrylic polymer (Joncryl 138 sold by S.C. Johnson & Son, Inc., Racine WI 53403) and is coated on to the ultraviolet filter layer 30 from an aqueous dispersion.

After the layers 30 and 28 have been coated on to the bubble-suppressant layer 32, the entire structure containing these three layers is laminated under heat (approximately 225°F, 107°C) and pressure to the structure containing the layers 12-26 to form the complete imaging medium 10.

If desired, the bubble-suppressant layer 32 may be formed by coating, rather than by lamination of a pre-formed film on to the layers 12-26. If the bubble-suppressant layer 32 is to be formed by coating, it is convenient to incorporate an ultra-violet absorber into the bubble-suppressant layer, thereby avoiding the need for a separate ultra-violet absorber layer. Thus, in this case, the layer 28 is coated on to the layer 26 using the solvent already described, and then the bubble-suppressant layer 32 containing the ultra-violet absorber may be coated on to the layer 28 from an aqueous medium.

The medium 10 is imaged by exposing it simultaneously to the beams from three infra-red lasers having wavelengths of approximately 792, 848 and 926 nm. The 926 nm beam images the yellow imaging layer 16, the 848 nm beam images the magenta imaging layer 22 and the 792 nm beam images the cyan imaging layer 26. Thus, a multicolor image is formed in the imaging medium 10, and this multicolor image requires no further development steps. Furthermore, the medium 10 may be handled in normal room lighting prior to exposure, and the apparatus in which the imaging is performed need not be light-tight.

The present dyes may also be used in a thermal imaging process in which the medium comprises one layer of a multi-layer structure, this structure further comprising a support layer disposed on one side of the medium and a colored layer adhering to the opposed side of the medium. In this type of thermal imaging process, the heat generated on exposure of the dye to actinic radiation causes increased adhesion of the colored layer to the support layer, such that upon application of a peeling force to the colored layer, the colored layer will peel from the support layer in areas which have not been exposed to the radiation, but in areas which have been exposed to radiation the colored layer will remain attached to the support layer. A preferred thermal imaging process of this type is described and claimed in the aforementioned International Patent Application No. PCT/US87/03249.

In this type of thermal imaging process, desirably the support layer is formed of a material transparent to the radiation, and the colored layer comprises a layer of porous or particulate imaging material uniformly coated on the medium, the colored layer exhibiting a cohesive strength which is greater than the adhesive strength between the colored layer and the support layer. Preferably, the colored layer comprises carbon black, although other colored pigments or dyes may also be used.

Finally, the present dyes may also be used in a process in which the heat generated by exposure of the dye to radiation causes a visually perceptible change in the medium, so that the medium forms an optical recording element.

The dyes of the present invention are inherently stable and possess high extinction coefficients in the near infra-red region; preferred squarylium dyes have strong absorptions at about 800-850 nm, while preferred croconylium dyes have strong absorptions at about 900-1050 nm, both of which are convenient for use with present infra-red lasers. The absorption coefficients of the present dyes, which are typically around 300,000, are considerably greater than those of the dyes disclosed in the aforementioned Japanese Patent Application No. 103,604/82, which have absorption coefficients of about 50,000-60,000. The dyes are more soluble in semi-polar organic solvents and polymeric media than the corresponding dyes which contain 2-phenylbenzpyrylium nuclei. The present dyes normally have only a single strong absorption peak, and thus allow one to avoid unwanted absorptions; in particular, the dyes normally have low visible absorptions. The present dyes tend to be resistant to aggregation. At least the benzpyrylium dyes of the present invention are believed to be of low toxicity and are substantially odor-free, in contrast to, for example, some prior art thiopyrylium dyes, many of which have strong, objectionable smells. Furthermore, the benzthiopyrylium dye of the present invention produced in Example 19 below does not have a strong odor. As explained above, the dyes can be synthesized in a small number of steps. The present dyes are of low molecular weight, and thus a high molar concentration of dye can be incorporated into polymeric media, thereby improving absorption of radiation as compared with other dyes having similar molar extinction coefficients but higher molecular weights. Moreover, straightforward modifications of the dyes of the invention allow tuning of physical properties, such as absorption wavelength, solubility in various media and tendency to aggregation in order to meet the needs of specific applications.

The following Examples are now given, though by way of illustration only, to show details of particularly preferred reagents, conditions and techniques used in the compositions and methods of the present invention.

Example 1 : Preparation of 7-diethylamino-2-(1,1-dimethylethyl)benz-4H-pyran-4-one

This Example illustrates the preparation, by the reaction shown in Figure 1, of the chromone of Formula III in which $R^1$ is a tertiary butyl group, $R^3$ is a diethylamino group, and $R^2$, $R^4$ and $R^5$ are each a hydrogen atom.

3-Diethylaminophenol (500 g, 3.025 mol) and methyl 4,4-dimethyl-3-oxopentanoate (957 g, 6.05 mol) were stirred together at 180°C under nitrogen with continuous removal of volatile reaction products for 36 hours. After this time, more methyl 4,4-dimethyl-3-oxopentanoate (47.85 g) was added and heating was continued for a further 3 hours. The reaction mixture was then cooled to room temperature and diluted with heptanes (4 L). The resultant solution was extracted with hydrochloric acid (0.5 M, 6 L) and the aqueous layers were back-extracted with heptanes (4 x 2L). The organic layers were combined, dried and concentrated in vacuo to give 7-diethylamino-2-(1,1-dimethylethyl)-benz-4H-pyran-4-one (673 g, 81% yield) as a brown oil which solidified upon standing. A small sample was further purified by silica gel chromatography and recrystallization from hexanes to give tan crystals which melted at 64.5-65°C. The structure of this compound was confirmed by mass spectroscopy and by $^1H$ and $^{13}C$ NMR spectroscopy; the $^{13}C$ NMR spectrum was: $\delta_c$ (75 MHz in $CHCl_3$) 178.1, 174.4, 158.9, 151.8, 126.5, 112.5, 110.1, 105.8, 96.1, 44.6, 36.1, 27.8 and 12.4 ppm.

Example 2 : Preparation of 7-diethylamino-2-(1,1-dimethylethyl)benz-4H-pyran-4-one

This Example illustrates the preparation, by the reactions shown in Figure 2, of the same chromone of Formula III as in Example 1 above.

Part A : Preparation of 4-diethylamino-2-hydroxy-2'-(methylsulfonyl)acetophenone

This Part illustrates the preparation of the methylsulfonyl compound of Formula VIII in which $R^3$ is a diethylamino group, and $R^2$, $R^4$ and $R^5$ are each a hydrogen atom. The procedure followed is analogous to that described in Von Strandtmann et al., J. Het. Chem., 9, 171 (1972).

Sodium hydride (2 g of a 50% dispersion in mineral oil, 0.042 mol) was added to dry dimethyl sulfoxide (25 mL). The resultant mixture was stirred at 60 - 70°C under nitrogen until hydrogen evolution ceased (approximately 1 hour). The solution was then cooled to 50°C and a solution of methyl 4-diethylaminosalicylate (2.23 g, 0.01 mol) in toluene (25 mL) was added over a period of 5 minutes. The resultant solution was stirred at 40 - 50°C for 3 hours, then cooled to 20°C and allowed to stand for 17 hours. The mixture was then poured into ice/water (150 mL) containing conc. hydrochloric acid (5 mL). Toluene (25 mL) was added and the mixture was extracted. The toluene layer was separated, washed with

brine, dried over sodium sulfate and evaporated to afford the crude product as a yellow oil. Trituration with ether produced purified 4-diethylamino-2-hydroxy-2'-(methylsulfonyl)-acetophenone (1.6 g, 59% yield) as a waxy brown solid, m.p. 91-92 °C. The structure of this compound was confirmed by mass spectroscopy and by $^{1}H$ and $^{13}C$ NMR spectroscopy.

Part B : Preparation of chromone

Piperidine (5 drops) was added to a solution of 4-diethylamino-2-hydroxy-2'-(methylsulfonyl)-acetophenone (0.25 g, 0.93 mmol) and trimethylacetaldehyde (0.1 g, 1.2 mmol) in toluene (50 mL). The resultant clear solution was heated at reflux for 18 hours, after which more piperidine (20 drops) was added and heating was continued for a further 24 hours. The tan solution was poured into water (50 mL) containing conc. hydrochloric acid (1 mL) and the resultant mixture extracted with toluene. The organic layer was separated, washed with brine, dried over sodium sulfate and evaporated to afford the crude product (0.14 g) as a brown oil. Mass spectroscopy and $^{1}H$ and $^{13}C$ NMR spectroscopy showed that the product contained the same chromone as prepared in Example 1 above.

Example 3 : Preparation of 7-diethylamino-2-(1,1-dimethylethyl)-4-methylbenzpyrylium tetrafluoroborate

This Example illustrates the preparation, by the reaction shown in Figure 1, of the tetrafluoroborate salt of Formula IV in which $R^1$ is a tertiary butyl group, $R^3$ is a diethylamino group, $R^2$, $R^4$ and $R^5$ are each a hydrogen atom, and $R^7$ is a methyl group.

Methyl magnesium bromide (40 mL of a 3M solution in ether, 0.12 mol) was added dropwise to a solution of 7-diethylamino-2-(1,1-dimethylethyl)-benz-4H-pyran-4-one (24.52 g, 0.0897 mol, prepared in Example 2 above) in dry tetrahydrofuran (240 mL) at 0 °C under nitrogen. The reaction mixture was stirred at 25 °C for 17 hours, whereupon a further amount of methyl magnesium bromide (6 mL of a 3M solution in ether, 0.018 mol) was added. The resultant mixture was stirred at 25 °C for another four hours, then poured into water. Tetrafluoroboric acid (50 mL of a 48% solution in water) was added, and the mixture was extracted with dichloromethane. The resultant solution was dried over sodium sulfate and partially evaporated. Ethyl acetate was added and the remaining dichloromethane was removed. Filtration and drying afforded 7-diethylamino-2-(1,1-dimethylethyl)-4-methylbenzpyrylium tetrafluoroborate (25.33 g, 79 % yield) as orange crystals which melted at 161 °C. The structure of this compound was confirmed by mass spectroscopy and by $^{1}H$ and $^{13}C$ NMR spectroscopy; the $^{13}C$ NMR spectrum was:

$\delta_c$ (75 MHz in $CHCl_3$) 179.9, 164.1, 159.8, 156.5, 129.3, 118.4, 117.5, 111.3, 95.3, 46.2, 37.9, 28.2, 27.4 and 19.9 ppm.

Example 4 : Preparation of 7-diethylamino-2-(1,1-dimethylethyl)-4-methylbenzpyrylium tetrafluoroborate

This Example illustrates the preparation, by the reaction shown in Figure 3, of the same salt of Formula IV as in Example 3 above.

A solution of 7-diethylamino-4-methylcoumarin (2.3 g, 10 mmol) in dimethoxyethane (20 mL) was added dropwise at 25 °C to a vigorously stirred 2.0 M solution of t-butyl magnesium chloride in tetrahydrofuran (10 mL). After the addition had been completed, the resultant mixture was stirred for 12 hours at ambient temperature, then poured into saturated ammonium chloride solution (100 mL) and the mixture was extracted twice with 100 mL aliquots of dichloromethane. The organic extracts were combined, dried over magnesium sulfate and evaporated to a volume of approximately 10 mL. The concentrate thus produced was diluted with ether (100 mL), and tetrafluoroboric acid (7 mL of a 50-52% solution in ether) was added immediately, causing separation of a black oil. The supernatant liquor was decanted and the residue washed with several portions of ether, then pumped under high vacuum overnight to give 4.1 g of a partially solidified black residue. Silica gel thin layer chromatography of this residue, eluting with 10% methanol in dichloromethane, showed a band at $R_f$ 0.3, which co-eluted with the salt produced in Example 3 above. Ultra-violet and visible spectroscopy further confirmed the identity of the product with the salt produced in Example 3 above, and indicated a yield of 24% based upon the coumarin starting material.

Example 5 : Preparation of 4-[[3-[7-diethylamino-2-(1,1-dimethylethyl)-(benz[b]-4H-pyran-4-ylidene)methyl]-2-hydroxy-4-oxo-2-cyclobuten-1-ylidenelmethyl]-7-diethylamino-2-(1,1-dimethylethyl)-benz[b]pyrylium hydroxide inner salt dye

This Example illustrates the preparation, by the reaction shown in Figure 1, of the dye of Formula IA in which each $R^1$ is a tertiary butyl group, each $R^3$ is a diethylamino group, and each $R^2$, $R^4$, $R^5$ and $R^6$ is a hydrogen atom.

A mixture of 7-diethylamino-2-(1,1-dimethylethyl)-4-methylbenzpyrylium tetrafluoroborate (36.07 g, 0.1 mol, prepared in Example 3 above), squaric acid (5.73 g, 0.05 mol) and quinoline (12.76 g, 0.1 mol) in n-butanol (117 mL) was heated at reflux for 4 hours. The reaction mixture was then cooled to 0 °C and allowed to stand at this temperature for 17 hours, after which it was diluted with methanol (230 mL) and cooled to 0 °C for an additional 2 hours. The mixture was filtered, rinsed with cold methanol and triturated with cold acetone to give the desired as copper crystals which melted at 288-289 °C with decomposition. The dye had a strong absorption at 808 nm in dichloromethane solution, $\epsilon$ = 450,000. The structure of this dye was confirmed by $^1H$ and $^{13}C$ NMR spectroscopy.

Example 6 : Preparation of 2-[3,3-dimethylbut-1-en-1-yl]benz-4H-pyran-4-one

This Example illustrates the preparation of the chromone of Formula III, in which $R^1$ is a 3,3-dimethylbut-1-en-1-yl group (i.e., a 2-tertiary butyl vinyl group), and $R^2$, $R^3$, $R^4$ and $R^5$ are each a hydrogen atom, from the corresponding 2-methyl compound. Thus, in this chromone, the 2-substituent has an $sp^2$ carbon atom bonded directly to the benzpyrylium nucleus.

2-Methylbenz-4H-pyran (0.4 g, 2.5 mmol, prepared as described in Hirao et al., Synthesis, 1984, 1076) and trimethylacetaldehyde (0.5 g, 5.8 mmol) were sequentially added to a solution of sodium ethoxide in ethanol (25 mL of a 0.2 M solution). The reaction mixture was heated at reflux for 3 hours, then poured into a saturated aqueous solution of ammonium chloride. The resultant mixture was extracted with ethyl acetate (3 x 25 mL), and the combined organic extracts were washed with a saturated sodium bicarbonate solution, dried over sodium sulfate and concentrated in vacuo. The residue, an amber oil, was purified by chromatography on silica gel with 9:1 hexanes/ethyl acetate as eluent to give 2-[3,3-dimethylbut-1-en-1-yl]-benz-4H-pyran-4-one (0.12 g, 21% yield) as a yellow oil. The structure of this compound was confirmed by mass spectroscopy and by $^1H$ and $^{13}C$ NMR spectroscopy.

Examples 7-12

The following Examples 7-12 illustrate the synthesis, by a route shown in Figure 4, of an asymmetric squarylium dye of the present invention.

Example 7 : Preparation of 3-butoxy-4-[[7-diethylamino-2-(1,1-dimethylethyl)benz[b]-4H-pyran-4-ylidene]-methyl]-cyclobut-3-en-1,2-dione

This Example illustrates the preparation, by the reaction XV + IV → XVII shown in Figure 4, of the squaric acid derivative of Formula XVII in which R is an n-butyl group, $R^1$ is a t-butyl group, $R^3$ is a diethylamino group, and $R^2$, $R^4$, $R^5$ and $R^6$ are each a hydrogen atom. The diester (XV) used is the di-n-butyl ester of squaric acid.

A solution of 7-diethylamino-2-(1,1-dimethylethyl)-4-methylbenzpyrylium tetrafluoroborate (3.57 g, 10 mmol, prepared as described in Example 3 above) in dichloromethane (20 mL) was added dropwise over two hours to a solution of di-n-butyl squarate (2.5 g, 11 mmol, available from Aldrich Chemical Company, Milwaukee, Wisconsin) and triethylamine (2.02 g, 20 mmol) in dichloromethane (30 mL) at room temperature. After the addition had been completed, the reaction mixture was heated under reflux for three hours. The solvent was then removed and diethyl ether (50 mL) was added. The ether solution was filtered and the solid residue was washed with more ether (50 mL). The combined ether extracts were concentrated, and the crude product thus obtained was purified by flash chromatography on silica gel with 30% ether/hexanes as eluent to give 3-butoxy-4-[[7-diethylamino-2-(1,1-dimethylethyl)benz[b]-4H-pyran-4-ylidene]methyl]-cyclobut-3-en-1,2-dione as a red solid (1.35 g, 29% yield) which melted at 145-146 °C. The structure of this compound was confirmed by mass spectroscopy and by $^1H$ and $^{13}C$ NMR spectroscopy.

(The filtrate from the ether extraction was collected, dissolved in dichloromethane, washed sequentially with 1M hydrochloric acid, a saturated solution of sodium hydrogen carbonate and brine, and dried over

magnesium sulfate. Removal of solvent yielded 3,4-bis[[7-diethylamino-2-(1,1-dimethylethyl)benz[b]-4H-pyran-4-ylidene]methyl]cyclobut-3-en-1,2-dione as a green solid (1.14 g, 37% yield) which did not melt below 300 °C. The structure of this compound was confirmed by mass spectroscopy and by $^1H$ and $^{13}C$ NMR spectroscopy.)

Example 8 : Preparation of 4-[[7-diethylamino-2-(1,1-dimethylethyl)benz[b]-4H-pyran-4-ylidene]methyl]-3-hydroxycyclobut-3-en-1,2-dione

This Example illustrates the preparation, by the reaction XVII → XII shown in Figure 4, of the squaric acid derivative of Formula XII in which $R^1$ is a t-butyl group, $R^3$ is a diethylamino group, and $R^2$, $R^4$, $R^5$ and $R^6$ are each a hydrogen atom.

A solution of 3-butoxy-4-[[7-diethylamino-2-(1,1-dimethylethyl)benz[b]-4H-pyran-4-ylidene]methyl]-cyclobut-3-en-1,2-dione (200 mg, 0.47 mmol, prepared in Example 7 above) in tetrahydrofuran (5 mL) containing 1M hydrochloric acid (0.5 mL) was heated at reflux for 6 hours, then cooled to room temperature and allowed to stand for 15 hours. The mixture was then concentrated under reduced pressure, excess water being removed by azeotropic distillation with toluene (2 x 10 mL). The crude product so obtained was triturated with ether, collected by vacuum filtration and washed with more ether to give the acid (148 mg, 86% yield) as a yellow powder which decomposed at 172-173 °C. The structure of this compound was confirmed by mass spectroscopy and by $^1H$ and $^{13}C$ NMR spectroscopy.

Example 9 : Preparation of 2-[1,1-dimethylethyl]-7-hydroxybenz-4H-pyran-4-one

This Example illustrates the preparation, by the reaction shown in Figure 1, of the chromone of Formula III in which $R^1$ is a tertiary butyl group, $R^3$ is a hydroxyl group, and $R^2$, $R^4$ and $R^5$ are each a hydrogen atom.

Phosphorus pentoxide (100g, 0.70 mole) and methanesulfonic acid (1000g, 675 ml) were combined in a 2 liter flask and stirred at room temperature under nitrogen for 1.5 hours until most of the phosphorus pentoxide had dissolved. Methyl 4,4-dimethyl-3-oxopentanoate (84 g, 0.53 mole) was next added in one portion, followed immediately by resorcinol (55.0 g, 0.50 mole). The resultant mixture was stirred at room temperature under nitrogen overnight. The orange reaction solution was then quenched by slowly pouring it into 4 liters of well-stirred water. The quenched mixture became warm and the desired product separated as an oil, which quickly solidified. The resultant mixture was stirred for one hour, then the crude solid was collected, washed with water, and recrystallized from 500 ml of 90% methanol in water to yield 2-(1,1-dimethylethyl)-7-hydroxybenz-4H-pyran-4-one (39.0 g, 36% yield). The structure of this compound was confirmed by mass spectroscopy and by $^1H$ and $^{13}C$ NMR spectroscopy.

Example 10 : Preparation of 2-[1,1-dimethylethyl]-7-[2-ethylbut-1-oxy]benz-4H-pyran-4-one

This Example illustrates the preparation of the chromone of Formula III in which $R^1$ is a tertiary butyl group, $R^3$ is a 2-ethylbut-1-oxy group, and $R^2$, $R^4$ and $R^5$ are each a hydrogen atom.

2-(1,1-dimethylethyl)-7-hydroxybenz-4H-pyran-4-one (2.0 g, 0.0092 mole, prepared in Example 9 above), 3-(bromomethyl)pentane (1.82 g, 0.011 mole), potassium carbonate (1.52 g, 0.011 mole), methyl ethyl ketone (20 ml), 2-propanol (10 ml), and a small crystal of potassium iodide were combined and the mixture was heated at reflux under nitrogen for 12 hours. A further addition of 3-(bromomethyl)pentane (1.82 g, 0.011 mole) was then made to the reaction mixture, and heating was continued for an additional 24 hours. The reaction mixture was cooled to room temperature and poured into 250 ml of stirred water, and the resultant mixture was extracted with diethyl ether. The organic layer was separated, dried over sodium sulfate, and concentrated under reduced pressure to leave 2.7 g of a white solid. This solid was recrystallized from methanol (10 mL) to yield 2-(1,1-dimethylethyl)-7-(2-ethylbutoxy)benz-4H-pyran-4-one (2.1 g, 76% yield). The structure of this compound was confirmed by mass spectroscopy and by $^1H$ and $^{13}C$ NMR spectroscopy.

Example 11 : Preparation of 2-[1,1-dimethylethyl]-7-[2-ethylbut-1-oxy]-4-methylbenz[b]pyrylium tetrafluoroborate

This Example illustrates the preparation, by the reaction shown in Figure 1, of the tetrafluoroborate salt of Formula IV in which $R^1$ is a tertiary butyl group, $R^3$ is a 2-ethylbut-1-oxy group, $R^7$ is a methyl group, and $R^2$, $R^4$ and $R^5$ are each a hydrogen atom.

Methyl magnesium bromide (4.6 mL of a 3 M solution in ether, 13.8 mmole) was added dropwise to a solution of 2-(1,1-dimethylethyl)-7-(2-ethylbutoxy)benz-4H-pyran-4-one (2.0 g, 9.2 mmole, prepared in Example 10 above) in tetrahydrofuran (15 mL) at room temperature under nitrogen. A slightly exothermic reaction took place, and the solution developed a light yellow color. The resultant mixture was stirred at room temperature for 4 hours, during which time a white precipitate formed. The reaction mixture was then quenched by slowly pouring it into a well-stirred solution of tetrafluoroboric acid (10 mL of an 8 M solution) in 100 mL of water. The resultant mixture was stirred for 15 minutes, then extracted with methylene chloride. The organic layer was separated, washed with water, dried over sodium sulfate and concentrated under reduced pressure to yield the desired product (2.4 g, 67% yield) as a light brown solid. The structure of this compound was confirmed by mass spectroscopy and by $^1H$ and $^{13}C$ NMR spectroscopy.

Example 12 : Preparation of 4-[[3-[[7-diethylamino-2-[1,1-dimethylethyl]benz[b]-4H-pyran-4-ylidene]methyl]-2-hydroxy-4-oxo-2-cyclobuten-1-ylidene]methyl]-7-[2-ethylbut-1-oxy]-2-[1,1-dimethylethyl]benz[b]pyrylium hydroxide inner salt dye

This Example illustrates the preparation, by the reaction XII + IV → IA shown in Figure 4, of the dye of Formula IA in which each $R^1$ is a t-butyl group, one $R^3$ is a diethylamino group, the other $R^3$ is a 2-ethylbut-1-oxy group, and each $R^2$, $R^4$, $R^5$ and $R^6$ is a hydrogen atom.

A solution of 4-[[7-diethylamino-2-[1,1-dimethylethyl]benz(b)-4H-pyran-4-ylidene]methyl]-3-hydroxycyclobut-3-en-1,2-dione (1.20 g, 3.27 mmol, prepared in Example 8 above), 2-[1,1-dimethylethyl]-7-[2-ethylbut-1-oxy]-4-methylbenz[b]pyrylium tetrafluoroborate (1.25 g, 3.22 mmol, prepared in Example 11 above) and quinoline (600 mg, 4.72 mmol) in n-butanol (50 mL) was heated at reflux for 3 hours. The reaction mixture was then cooled, and solvent was removed under reduced pressure. Methanol (100 mL) was added to the residue and the resultant mixture was stored in a freezer at 5 °C for 3 days. The crystals which formed (1.58 g) were removed by filtration and washed with ether. Further purification was effected by flash chromatography on silica gel with 2% methanol/dichloromethane as eluent to afford the dye (1.125 g, 54% yield) as brown crystals. The dye had a principal infra-red absorption in dichloromethane at 782 nm, $\epsilon$ = 305,000. The structure of this compound was confirmed by mass spectroscopy and by $^1H$ and $^{13}C$ NMR spectroscopy.

Example 13 : Preparation of 4-[[3-[[7-diethylamino-2-[1,1-dimethylethyl]benz[b]-4H-pyran-4-ylidene]methyl]-2-hydroxy-4,5-dioxo-2-cyclopenten-1-ylidene]methyl]-7-diethylamino-2-[1,1-dimethylethyl]benz[b]pyrylium hydroxide inner salt dye.

This Example illustrates the preparation of the dye of Formula I in which n is 2, each X is an oxygen atom, each $R^1$ is a t-butyl group, each $R^3$ is a diethylamino group, and each $R^2$, $R^4$, $R^5$ and $R^6$ is a hydrogen atom.

A suspension of 7-diethylamino-2-[1,1-dimethylethyl]-4-methylbenz[b]pyrylium tetrafluoroborate (90 mg, 0.25 mmol, prepared in Example 3 above), dipotassium croconate (28 mg, 0.125 mmol) and tetra-n-butylammonium chloride (70 mg, 0.25 mmol) in N,N-dimethylformamide (5 mL) was stirred and heated at 80-85 °C for 30 minutes, after which time the reaction mixture was cooled to room temperature and concentrated under reduced pressure. The residue was purified by chromatography on silica gel with 20% acetone/dichloromethane followed by 20% isopropanol/dichloromethane as eluents. The desired dye was obtained as a purplish solid (32 mg, 40% yield) which exhibited a principal absorption in the near infra-red at 952 nm, $\epsilon$ = 200,000 in dichloromethane solution. The structure of this compound was confirmed by mass spectroscopy and by $^1H$ NMR spectroscopy.

Example 14 : Preparation of 5,7-dimethoxy-2-[1,1-dimethylethyl]benz-4H-pyran-4-one

This Example illustrates the preparation, by the reaction shown in Figure 1, of the chromone of Formula III in which $R^1$ is a tertiary butyl group, $R^3$ and $R^5$ are each a methoxyl group, and $R^2$ and $R^4$ are each a hydrogen atom.

Phosphorus pentoxide (2.9 g, 0.02 mole) and methanesulfonic acid (29 g, 20 ml) were combined in a 2 liter flask and stirred at room temperature under nitrogen for 30 minutes until most of the phosphorus pentoxide had dissolved. Methyl 4,4-dimethyl-3-oxopentanoate (3.2 g, 0.02 mole) was added in one portion, followed immediately by 3,5-dimethoxyphenol (3.1 g, 0.02 mole). The resultant mixture was stirred at room temperature under nitrogen overnight, then at 65 °C for 4 hours. The reaction mixture was cooled to room temperature, then poured in a slow stream into stirred water (500 mL). The resultant precipitate was stirred

for 15 minutes, then collected, washed with water, and air-dried to yield 4.5 g of a crude white solid which was purified by flash chromatography on silica gel with 20% ethyl acetate in methylene chloride as eluent to yield the desired product (2.8 g, 53% yield) as a white solid. The structure of this compound was confirmed by mass spectroscopy and by $^1H$ and $^{13}C$ NMR spectroscopy.

Example 15 : Preparation of 5,7-dimethoxy-2-[1,1-dimethylethyl]-4-methylbenz[b]pyrylium tetrafluoroborate

This Example illustrates the preparation, by the reaction shown in Figure 1, of the tetrafluoroborate salt of Formula IV in which $R^1$ is a tertiary butyl group, $R^3$ and $R^5$ are each a methoxyl group, $R^7$ is a methyl group, and $R^2$ and $R^4$ are each a hydrogen atom.

Methyl magnesium bromide (3.8 mL of a 3 M solution in ether, 11 mmole) was added dropwise to a solution of 2-(1,1-dimethylethyl)-5,7-dimethoxybenz-4H-pyran-4-one (2.0 g, 7.6 mmole, prepared in Example 14 above) in tetrahydrofuran (15 mL) at room temperature under nitrogen. A slightly exothermic reaction occurred and the solution developed a light yellow color. The reaction solution was stirred at room temperature for 4 hours, then more methyl magnesium bromide (3.0 mL of a 3 M solution in ether, 9 mmole) was added and the resultant solution was stirred at room temperature overnight, during which time a white precipitate formed. The reaction mixture was then quenched by slowly pouring it into a well-stirred solution of tetrafluoroboric acid (10 mL of an 8 M solution) in 200 mL water. The resultant mixture was stirred for 30 minutes, then extracted with methylene chloride. The organic layer was separated, washed with water, dried over sodium sulfate, and evaporated to yield a dark oil. Ethyl acetate (25 ml) was added and the mixture was shaken, causing crystallization. The product was collected, washed with ethyl acetate, and dried to yield the desired product (1.8 g, 69% yield) as a light lemon-yellow powder. The structure of this compound was confirmed by mass spectroscopy and by $^1H$ and $^{13}C$ NMR spectroscopy.

Example 16 Preparation of 4-[[3-[[5,7-dimethoxy-2-[1,1-dimethylethyl]benz[b]-4H-pyran-4-ylidene]methyl]-2-hydroxy-4,5-dioxo-2-cyclopenten-1-ylidene]methyl]-5,7-dimethoxy-2-[1,1-dimethylethyl]benz[b]pyrylium hydroxide inner salt dye

This Example illustrates the preparation of the dye of Formula I in which n is 2, each X is an oxygen atom, each $R^1$ is a tertiary butyl group, each $R^3$ and $R^5$ is a methoxyl group, and each $R^2$, $R^4$ and $R^6$ is a hydrogen atom.

A suspension of 5,7-dimethoxy-2-[1,1-dimethylethyl]-4-methylbenz[b]pyrylium tetrafluoroborate (87 mg, 0.25 mmol, prepared in Example 15 above) and dipotassium croconate (28 mg, 0.125 mmol) in N,N-dimethylformamide (10 mL) was stirred and heated at 80-85 °C for 20 minutes. The resultant mixture was then cooled and concentrated under reduced pressure. The residue was purified by preparative thin-layer chromatography on silica gel with 10% acetone/dichloromethane as eluent to give the desired dye (28 mg, 36% yield) as a brown solid. The dye exhibited a principal absorption in the near infra-red at 918 nm, $\epsilon$ = 168,000 in dichloromethane solution. The structure of this compound was confirmed by mass spectroscopy and by $^1H$ and $^{13}C$ NMR spectroscopy.

Example 17 Preparation of 2-[1,1-dimethylethyl]benz-4H-thiopyran-4-one

This Example illustrates the preparation of the thiobenzpyrylium analogue of the chromone of Formula III in which $R^1$ is a tertiary butyl group and $R^2$, $R^3$, $R^4$ and $R^5$ are each a hydrogen atom.

Polyphosphoric acid (15 g) was placed in a three-necked flask fitted with an overhead stirrer and a thermometer, and was rapidly stirred under nitrogen while the internal temperature of the flask was raised to 90 °C. Methyl 4,4-dimethyl-3-oxopentanoate (3.16 g, 0.02 mole) and thiophenol (1.1 g, 0.01 mole) were dissolved together and added dropwise to the polyphosphoric acid with stirring. The resultant mixture was stirred at 90 °C under nitrogen for 3 hours. The hot reddish reaction mixture was then quenched by slowly pouring it into 250 mL of well-stirred ice water and the resultant mixture was stirred for 20 minutes, and extracted into diethyl ether. The organic layer was separated, washed with 0.1 N sodium hydroxide and a salt solution, dried over sodium sulfate and evaporated to yield an oily orange solid, which was purified by chromatography on silica gel using methylene chloride as eluent to yield the desired product (0.54 g, 25% yield) as a light yellow solid. The structure of this compound was confirmed by mass spectroscopy and by $^1H$ and $^{13}C$ NMR spectroscopy.

Example 18 : Preparation of 2-[1,1-dimethylethyl]-4-methylbenz[b]thiopyrylium tetrafluoroborate

This Example illustrates the preparation of the thiobenzpyrylium tetrafluoroborate salt analogous to the salt of Formula IV in which $R^1$ is a tertiary butyl group, $R^7$ is a methyl group, and $R^2$, $R^3$, $R^4$ and $R^5$ are each a hydrogen atom.

Methyl magnesium bromide (1.5 mL of a 3 M solution in ether, 4.5 mmole) was added dropwise to a solution of 2-(1,1-dimethylethyl)benz-4H-thiopyran-4-one (0.42 g, 1.9 mmole, prepared in Example 17 above) in tetrahydrofuran (3 mL) at room temperature under nitrogen. A slight exothermic reaction and foaming occurred. The reaction mixture was stirred at room temperature overnight, during which time a white precipitate formed. The reaction mixture was then quenched by slowly pouring it into a well-stirred solution of tetrafluoroboric acid (5 mL of an 8 M solution) in 50 mL water. A precipitate formed and the resultant mixture was stirred for 10 minutes, then the product was isolated by suction filtration, washed well with water, and dried in vacuo to yield the desired product (0.45 g, 78% yield of crude product) as an off-white powder, which was used directly in Example 19 below without further purification.

Example 19 Preparation of 4-[[2-[1,1-dimethylethyl]benz[b]-4H-thiopyran-4-ylidene]methyl]-2-hydroxy-4-oxo-2-cyclobuten-1-ylidene]methyl]-2-[1,1-dimethylethyl]benz[b]thiopyrylium hydroxide inner salt dye

This Example illustrates the preparation of the dye of Formula I in which n is 1, each X is a sulfur atom, each $R^1$ is a t-butyl group, and each $R^2$, $R^3$, $R^4$, $R^5$ and $R^6$ is a hydrogen atom.

A mixture of crude 2-[1,1-dimethylethyl]-4-methylbenz[b]thiopyrylium tetrafluoroborate (200 mg, 0.66 mmole, prepared in Example 18 above), squaric acid (39 mg, 0.34 mmole) and quinoline (87 mg, 0.69 mmole) in n-butanol (3 mL) was placed in a preheated (140 °C) oil bath and heated at reflux for 1.5 hours. The reaction mixture was cooled to room temperature, methanol (3 mL) was added, and the resultant mixture was refrigerated overnight. The solid produced was collected by vacuum filtration, washed with cold methanol (3 mL), and triturated with acetone (2 x 3 mL), then dried in vacuo to yield the desired dye (38 mg, 23% yield) as coppery microcrystals. The product had a principal infra-red absorption at 861 nm in methylene chloride solution, $\epsilon$ = 290,000. The structure of the dye was confirmed by mass spectroscopy and by $^1H$ NMR spectroscopy.

Example 20 : Absorption and stability of dye in polymers

This Example illustrates the high absorptions which can be achieved by a dye of the present invention when dispersed in a polymer, and the thermal stability of such dispersed polymer.

The polymers tested in this Example were polystyrene/acrylonitrile, polyvinylbutyral and polyvinylformal polymers. 10.0 mg of the dye (hereinafter referred to as "Dye B") prepared as described in Example 5 above was dissolved in 2.0 mL of a 2.5% w/v solution of each polymer in dichloromethane, and the resultant solution was coated onto a transparent 4 mil polyvinyl chloride base using a No. 10 coating rod. The resultant film was oven dried at 80 °C for 10 minutes. After the film had cooled, the wavelength of maximum infra-red absorption ($\lambda_{max}$), the absorbance at $\lambda_{max}$ ($A_{max}$), and the full width of the infra-red absorption peak at half maximum were measured. The film samples were then stored in the dark for 15 days at 80 °C, and the same absorption parameters were remeasured to give the data shown in Table 1, in which initial values are shown, with values after heating in parentheses.

Table 1

| Polymer | $\lambda_{max}$ | $A_{max}$ | Width (nm) |
|---|---|---|---|
| SAN | 826 (826) | 2.59 (2.68) | 74 (74) |
| Polyvinylformal | 820 (820) | 2.62 (2.64) | 80 (80) |
| Polyvinylbutyral | 815 (812) | 2.99 (2.16) | 70 (79). |

Example 21 : Photochemical stability of dye in polymers

This Example illustrates the photochemical stability of a dye of the present invention in a polymer matrix.

20 mg of Dye B prepared as described in Example 5 above and 100 mg of a test polymer (polyvinylbutyral or polyacrylate) were dissolved in dichloromethane, and the resultant solution was coated onto PET transparent base using a #4 coating rod. The maximum absorbance of the resultant film was measured before and after exposure of the coated side of the base to irradiation with a fluorescent lamp (560 ft. candles) for 24 or 67 hours. The results are shown in Table 2 below (with the absorbance after irradiation in parentheses).

Table 2

| Polymer | Time of irradiation | $A_{max}$ |
|---|---|---|
| Polyacrylate | 24 hours | 0.84 (0.78) |
| Polyvinylbutyral | 67 hours | 1.225 (1.018). |

Example 22 : Solubility in halogenated organic solvents

This Example illustrates the high solubility in halogenated organic solvents which can be achieved by dyes of the present invention, as compared with similar dyes which bear 2-phenyl or -substituted phenyl groups.

Dyes B and the dye (hereinafter referred to as "Dye F") prepared in Example 54 below, and control dyes of Formula IA in which each $R^1$ was a phenyl or 2,4-dimethylphenyl group, each $R^3$ was a diethylamino group and each $R^2$, $R^4$ $R^5$ and $R^6$ was a hydrogen atom (hereinafter referred to as "Control Dyes y and z" respectively) exhibited solubilities in dichloromethane (expressed as a weight percentage of dye to solvent in a saturated solution) as follows:

| Dye | Solubility (wt. %) |
|---|---|
| B | 11.5 |
| F | 0.4 |
| y (control) | 0.02 |
| z (control) | 0.1 |

From the foregoing data, it will be seen that substitution of a cyclohexyl group for a phenyl group in this series of dyes increased the solubility of the dye by more than an order of magnitude, an increase which was considerably greater than that achieved by substituting two methyl groups on the phenyl. Furthermore, substitution of a tertiary butyl group for the phenyl group increased solubility by more than two orders of magnitude.

Example 23 : Imaging

This Example illustrates the use of a dye of the present invention in a thermal imaging medium of the type described in the aforementioned International Application PCT/US87/03249.

A solution of sodium dodecylbenzenesulfonate (2.37 g) in water (475 g) was added to a solution of Dye B (3.39 g) and a thermoplastic polymer (Goodyear PE-200, 23.75 g) in dichloromethane (215.91 g) using a high-shear Silverson mixer. The resultant emulsion was processed in a microfluidizer and dichloromethane was then removed under reduced pressure. A surfactant (FC-120, available from Minnesota Mining and Manufacturing Corporation, Minneapolis, Minnesota, 0.08 g of a 25% solution) was added to 68.5 g of the emulsion prepared as described above, and the mixture so formed was added with agitation to a combination of a wax (Michaelman 42540, 3.4 g of a dispersion containing 40% solids) and a binder (Monsanto Scripset 540, 20.6 g of a dispersion containing 10% solids) in deionized water (107.4 g).

The fluid so prepared was coated onto a first sheet of poly(ethylene terephthalate) of thickness 1.5 mil (38 μm) which had previously been given an approximately 0.5 micron sub-coat of a styrene/acrylonitrile copolymer, thereby forming an overcoat layer. The coverage of the overcoat layer containing Dye B was 500 $mg/m^2$. Next, a colorant/binder layer was formed by coating a mixture of carbon black and polyvinyl alcohol to an optical density of approximately 3.0. To form a release layer, there was then coated a composition composed of a wax, silica, and a binder (Monsanto Scripset 540) in a ratio of 1:1:0.1. The

resultant structure was laminated to a second sheet of poly(ethylene terephthalate) of thickness 7 mil (177 μm) which had been coated with a thermal adhesive (Goodyear PE-200) to a thickness of 10 μm.

The resultant imaging medium was exposed to infra-red irradiation from an GaAlAs semiconductor diode laser emitting at 824 nm, which delivered 125 mW to the imaging medium. The laser output was focussed to a spot of about 320 square microns in area, which was scanned across the medium at speeds of up to 5 m/s. After exposure, the two poly(ethylene terephthalate) sheets were peeled apart to reveal a pair of complementary images. Where the imaging medium has been exposed to the laser radiation, the colorant/binder and overcoat layers had adhered preferentially to the first sheet, and cohesive failure had occurred in the release layer. Where no exposure had occurred, the colorant/binder and overcoat layers had adhered preferentially to the second sheet, and failure of the structure had occurred between the sub-coat and the overcoat layer. The image on the second sheet was protected by the overcoat layer. Post-heating served to increase the durability of this image.

Example 24 : Imaging

This Example illustrates the use of a dye of the present invention in a thermal imaging medium and process; the thermal imaging medium used was a simplified model of that described above with reference to Figure 5.

A coating fluid was prepared by combining the infra-red dye of Formula IR4 above (prepared in Example 12 above, 2.6 mg) with a leuco dye of Formula LD3 above (110 mg) and a polymeric binder (polyurethane Estane 5715, supplied by B.F. Goodrich, 0.73 mL of a 15% solution in acetone). The fluid was diluted with acetone (0.157 mL), then coated onto a 4 mil (101 μm) transparent poly(ethylene terephthalate) base using a #12 coating rod. The film so formed was laminated at 180 °F (88 °C) and 60 psi (0.4 MPa) to a second sheet of 4 mil (101 μm) poly(ethylene terephthalate) which had been coated with Joncryl 138 to a thickness of approximately 2 μm. The resultant imaging medium exhibited a peak absorption in the near infra-red at 792 nm, absorbance 1.95. Storage of a sample of this structure at 60 °C for 4 days resulted in a loss of only 2.4% of near infra-red absorption.

A portion of the medium which had not been heated was exposed to infra-red radiation from a GaAlAs semiconductor diode laser emitting at 792 nm, which delivered 151 mW to the medium. The laser output was focussed to a spot approximately 33 x 3 microns in size. The medium was wrapped around a drum whose axis was perpendicular to the incident laser beam. Rotation of the drum about its axis and simultaneous translation in the direction of the axis caused the laser spot to write a helical pattern on the medium. The pitch of the helix was 33 microns, chosen so that none of the medium was left unexposed between adjacent turns of the helix. In this arrangement, the exposure received by the medium was inversely proportional to the speed of rotation of the drum (here measured as a linear writing speed at the medium surface). The table shows the relationship between writing speed and red optical density (measured using an X-Rite 310 photographic densitometer, supplied by X-Rite, Inc., Grandville, Michigan, with the appropriate filter) achieved. The unexposed film had a red density of 0.07.

| Writing speed (m/s) | Red density |
|---|---|
| 0.125 | 1.81 |
| 0.18 | 2.35 |
| 0.25 | 3.52 |
| 0.32 | 2.92 |
| 0.425 | 1.22 |

From these results, it will be seen that this thermal imaging medium was capable of producing images with optical densities as high as those needed in commercial transparencies.

Examples 25-34 : Preparation of additional chromones

Additional chromones of Formula III were prepared by the process shown in Figure 1 or 2, as indicated in the column headed "Fig." in Table 3 below. In the column of this Table headed "Characterization", "MS" indicates characterization by mass spectrometry, "$^{1}H$" indicates characterization by proton NMR spectrometry, "$^{13}C$" indicates characterization by $^{13}C$ NMR spectrometry and "m.pt." indicates melting point.

Table 3 - Chromones of Formula III

| Ex. # | Fig. | $R^1$ | $R^2$ | $R^3$ | $R^4$ | $R^5$ | Characterization |
|---|---|---|---|---|---|---|---|
| 25 | 1 | t-butyl | H | $N(CH_3)_2$ | H | H | MS, $^1H$, $^{13}C$, m.pt. 141-2°C |
| 26 | 1 | t-butyl | H | indolinyl | H | H | MS, $^1H$, $^{13}C$ |
| 27 | 1 | t-butyl | H | morpholino | H | H | MS, $^1H$, $^{13}C$ |
| 28 | 1 | t-butyl | H | piperidino | H | H | MS, $^1H$, $^{13}C$ |
| 29 | 2 | cyclohexyl | H | $N(C_2H_5)_2$ | H | H | MS, $^1H$, $^{13}C$ |
| 30 | 1 | t-butyl | $-N[-(CH_2)_3-]_2$ | | | H | MS, $^1H$, $^{13}C$ |
| 31 | 2 | 6,6-dimethyl-bicyclo[3.1.1]-hept-2-en-2-yl | H | $N(C_2H_5)_2$ | H | H | MS, $^1H$, $^{13}C$ |
| 32 | 2 | bicyclo[2.2.1]-hept-2-en-5-yl | H | $N(C_2H_5)_2$ | H | H | MS, $^1H$, $^{13}C$ |
| 33 | 1 | adamantyl | H | morpholino | H | H | MS, $^1H$ |
| 34 | 2 | cyclohexyl | H | $OCH_3$ | H | H | m.pt. 68-69°C MS, $^1H$, $^{13}C$ |

Examples 35-49 : Preparation of additional salts

Additional tetrafluoroborate salts of Formula IV were prepared by the process shown in Figure 1, except for Examples 47 and 48, in which the synthetic route was that of Figure 3. In the column of Table 4 headed

"Characterization", "MS" indicates characterization by mass spectrometry, "$^{1}H$" indicates characterization by proton NMR spectrometry, "$^{13}C$" indicates characterization by $^{13}C$ NMR spectrometry, TLC indicates characterization by thin layer chromatography, and "m.pt." indicates melting point.

Table 4 - Salts of Formula IV

| Ex. # | $R^1$ | $R^2$ | $R^3$ | $R^4$ | $R^5$ | $R^7$ | Characterization |
|---|---|---|---|---|---|---|---|
| 35 | t-butyl | H | $N(CH_3)_2$ | H | H | $CH_3$ | MS, $^{1}H$, m.pt. 242-3°C |
| 36 | t-butyl | H | indolinyl | H | H | $CH_3$ | - |
| 37 | t-butyl | H | morpholino | H | H | $CH_3$ | - |
| 38 | t-butyl | H | piperidino | H | H | $CH_3$ | - |
| 39 | cyclohexyl | H | $N(C_2H_5)_2$ | H | H | $CH_3$ | MS, $^{1}H$, $^{13}C$ |
| 40 | t-butyl | H | H | H | H | $CH_3$ | - |
| 41 | t-butyl | | $-N[-(CH_2)_3-]_2$ | | H | $CH_3$ | MS, $^{1}H$, $^{13}C$, m.pt. 168-70°C |
| 42 | 6,6-dimethyl-bicyclo[3.1.1]-hept-2-en-2-yl | H | $N(C_2H_5)_2$ | H | H | $CH_3$ | MS, $^{1}H$, $^{13}C$ |
| 43 | bicyclo[2.2.1]-hept-2-en-5-yl | H | $N(C_2H_5)_2$ | H | H | $CH_3$ | MS, $^{1}H$, $^{13}C$ |
| 44 | t-butyl | H | $N(C_2H_5)_2$ | H | H | $C_2H_5$ | MS, $^{1}H$ |
| 45 | adamantyl | H | morpholino | H | H | $CH_3$ | MS, $^{1}H$ |
| 46 | cyclohexyl | H | $OCH_3$ | H | H | $CH_3$ | MS, $^{1}H$, $^{13}C$ |
| 47 | isopropyl | H | $N(C_2H_5)_2$ | H | H | $CH_3$ | - |
| 48 | sec-butyl | H | $N(C_2H_5)_2$ | H | H | $CH_3$ | - |
| 49 | t-butyl | H | OH | H | H | $CH_3$ | MS, TLC |

Examples 50-62 : Preparation of additional dyes

Additional dyes of Formula IA were prepared by the process shown in Figure 1. All the dyes shown in Table 5 below are symmetrical (i.e, the substituents on the two benzpyrylium nuclei are the same, as are the groups $R^6$ on the two meso carbon atoms), and in all the dyes shown in Table 5 each X represents an oxygen atom. n is 1 in all cases except Example 62, where n is 2 (i.e., Examples 50-61 are squarylium dyes, while Example 61 is a croconylium dye). In the column of this Table headed "Characterization" , "MS" indicates characterization by mass spectrometry, "$^1$H" indicates characterization by proton NMR spectrometry, "$^{13}$C" indicates characterization by $^{13}$C NMR spectrometry, $\lambda_{max}$ is the wavelength of maximum infra-red absorption, $\epsilon$ is the molar absorbance and "m.pt." indicates melting point.

Table 5 - Salts of Formula IA

| Ex. # | $R^1$ | $R^2$ | $R^3$ | $R^4$ | $R^5$ | $R^6$ | Characterization |
|---|---|---|---|---|---|---|---|
| 50 | t-butyl | H | $N(CH_3)_2$ | H | H | H | Decomposes at 305°C, $\lambda_{max}$ 800 nm, $\epsilon$ 407,000 |
| 51 | t-butyl | H | indolinyl | H | H | H | $\lambda_{max}$ 821 nm, $\epsilon$ 350,000, MS, $^1H$, $^{13}C$, m.pt. 288-9°C |
| 52 | t-butyl | H | morpholino | H | H | H | $\lambda_{max}$ 795 nm, $\epsilon$ 400,000, MS, $^1H$, $^{13}C$ |
| 53 | t-butyl | H | piperidino | H | H | H | $\lambda_{max}$ 801 nm, $\epsilon$ 350,000, MS, $^1H$, $^{13}C$ |
| 54 | cyclohexyl | H | $N(C_2H_5)_2$ | H | H | H | $\lambda_{max}$ 804 nm, $\epsilon$ 290,000, MS, $^1H$, $^{13}C$ |
| 55 | t-butyl | H | H | H | H | H | $\lambda_{max}$ 770 nm, $\epsilon$ 250,000, MS, $^1H$, $^{13}C$ |
| 56 | t-butyl | $-N[-(CH_2)_3-]_2$ | | | H | H | $\lambda_{max}$ 826 nm, $\epsilon$ 447,000, MS, $^1H$ |
| 57 | 6,6-dimethyl-bicyclo[3.1.1]-hept-2-en-2-yl | H | $N(C_2H_5)_2$ | H | H | H | $\lambda_{max}$ 865 nm, $\epsilon$ 230,000, MS, $^1H$, $^{13}C$ |
| 58 | bicyclo[2.2.1]-hept-2-en-5-yl | H | $N(C_2H_5)_2$ | H | H | H | $\lambda_{max}$ 808 nm, MS, $^1H$, $^{13}C$ |
| 59 | t-butyl | H | $N(C_2H_5)_2$ | H | H | $CH_3$ | $\lambda_{max}$ 828 nm, $\epsilon$ 160,000, MS, $^1H$ |
| 60 | adamantyl | H | morpholino | H | H | H | $\lambda_{max}$ 798 nm, $\epsilon$ 350,000, MS, $^1H$ |
| 61 | cyclohexyl | H | $OCH_3$ | H | H | H | $\lambda_{max}$ 768 nm, $\epsilon$ 150,000, MS, $^1H$, $^{13}C$ |
| 62 | t-butyl | H | OH | H | H | H | $\lambda_{max}$ 914 nm, $\epsilon$ 89,000, MS, $^1H$ |

## Claims

1. A dye comprising an inner salt of a squarylium compound, characterized in that the squarylium compound is of the formula:

$Q^1 = Z\text{-}Q^2$

wherein:

$Q^1$ is a 4-(benz[b]-4H-pyrylium)methylidene, 4-(benz[b]-4H-thiopyrylium)methylidene or 4-(benz[b]-4H-selenopyrylium)methylidene grouping;

Z is a 1,3-(2-hydroxy-4-oxo-2-cyclobutylidene) hydroxide or 1,3-(2-hydroxy-4,5-dioxo-2-cyclopentylidene) hydroxide ring; and

$Q^2$ is a 4-(benz[b]-4H-pyran-4-ylidene)methyl, 4-(benz[b]-4H-thiopyran-4-ylidene)methyl or 4-(benz-[b]-4H-selenopyran-4-ylidene)methyl grouping;

wherein one or both of the groupings $Q^1$ and $Q^2$ carries at its 2-position a substituent in which a non-aromatic carbon atom is bonded directly to the benzpyrylium, benzthiopyrylium or benzselenopyrylium nucleus, subject to the proviso that if said 2-substituent contains an aromatic nucleus, this aromatic nucleus is not conjugated with the benzpyrylium, benzthiopyrylium or benzselenopyrylium nucleus to which it is attached.

**2.** A dye according to claim 1 characterized in that the or each 2-substituent is a substituted or unsubstituted alkyl or cycloalkyl group.

**3.** A dye according to claim 2 characterized in that the carbon atom of the or each 2-alkyl or cycloalkyl group which is directly attached to the benzpyrylium, benzthiopyrylium or benzselenopyrylium nucleus does not have a hydrogen atom attached thereto.

**4.** A dye according to claim 2 or 3 characterized in that each of the 2-alkyl groups is a tertiary butyl group.

**5.** A dye according to any one of the preceding claims characterized in that at least one of the benzpyrylium, benzthiopyrylium or benzselenopyrylium nuclei carries at the 7-position a substituent in which an element of Group 5A, 6A or 7A of the Periodic Table is directly connected to the nucleus, subject to the proviso that when the element of Group 5A, 6A or 7A is at least divalent, the 7-substituent may comprise at least one saturated heterocyclic ring containing said element of Group 5A, 6A or 7A, this saturated heterocyclic ring optionally being fused to the benzene ring of the associated nucleus.

**6.** A dye according to claim 5 characterized in that the or each 7-substituent comprises an alkoxy group containing not more than about 12 carbon atoms, or a disubstituted amino or disubstituted phosphino group, wherein each of the substituents on the or each disubstituted group comprises an alkyl group containing not more than about 6 carbon atoms, or the two substituents on any one disubstituted group together form, with the nitrogen or phosphorus atom thereof, a heterocyclic ring system, this ring system optionally being fused to the nucleus which carries the disubstituted amino or phosphino substituent.

**7.** A dye according to claim 6 characterized in that the or each of the 7-disubstituted amino groups is selected from the group consisting of dialkylamino wherein each of the alkyl groups contains not more than about 4 carbon atoms, piperidino, indolinyl, morpholino and $-N[-(CH_2)_3-]_2$ groups, subject to the proviso that when one or both of the amino groups is a $-N[-(CH_2)_3-]_2$ group, the ends of the trimethylene groups remote from the nitrogen atom are joined to the 6- and 8-positions of the nucleus carrying the nitrogen atom, so that the $-N[-(CH_2)_3-]_2$ group and the benzene ring of the nucleus together form a julolidine ring system.

**8.** A dye according to any one of the preceding claims characterized in that each of the carbon atoms of the groupings $Q^1$ and $Q^2$ directly connected to the ring Z is unsubstituted, or carries an alkyl group containing not more than about 6 carbon atoms.

**9.** A dye according to any one of the preceding claims characterized in that it is of the formula:

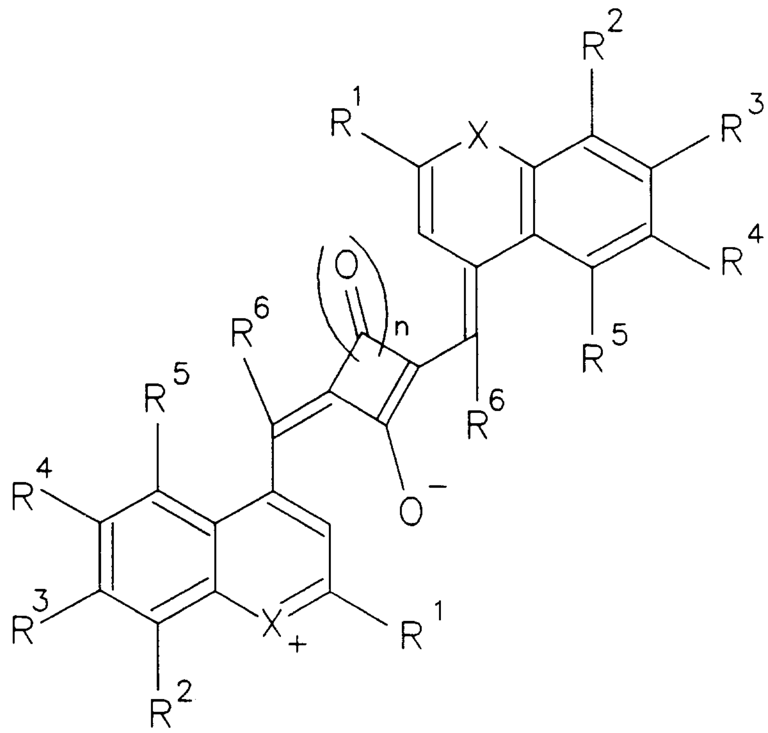

in which:

n is 1 or 2;

each X independently is an oxygen, sulfur or selenium atom;

each $R^1$ independently is an alkyl or cycloalkyl group which may be substituted or unsubstituted;

each $R^2$ and $R^4$ independently is a hydrogen atom, an alkyl group containing not more than about 8 carbon atoms or a halogen atom;

each $R^5$ independently is a hydrogen atom, an alkyl group containing not more than about 8 carbon atoms, a halogen atom, or an alkoxy group containing not more than about 12 carbon atoms;

each $R^6$ independently is a hydrogen atom or an alkyl group containing not more than about 6 carbon atoms; and

each $R^3$ independently is a hydrogen atom, an alkyl group containing not more than about 8 carbon atoms, or a group in which an element of Group 5A, 6A or 7A is bonded directly to the benzpyrylium nucleus, subject to the proviso that when said element of Group 5A, 6A or 7A is at least divalent, $R^3$, together with one or both of $R^2$ and $R^4$ may comprise at least one saturated heterocyclic ring containing said element of Group 5A, 6A or 7A, this saturated heterocyclic ring optionally being fused to the phenyl ring of the associated nucleus.

**10.** A dye according to claim 9 characterized in that each of the groups $R^6$ independently is a hydrogen atom or a methyl group.

**11.** A dye according to claim 9 or 10 characterized in that each X is an oxygen atom.

12. A dye according to any one of claims 9 to 11 in which n is 1 so that the dye is of the formula:

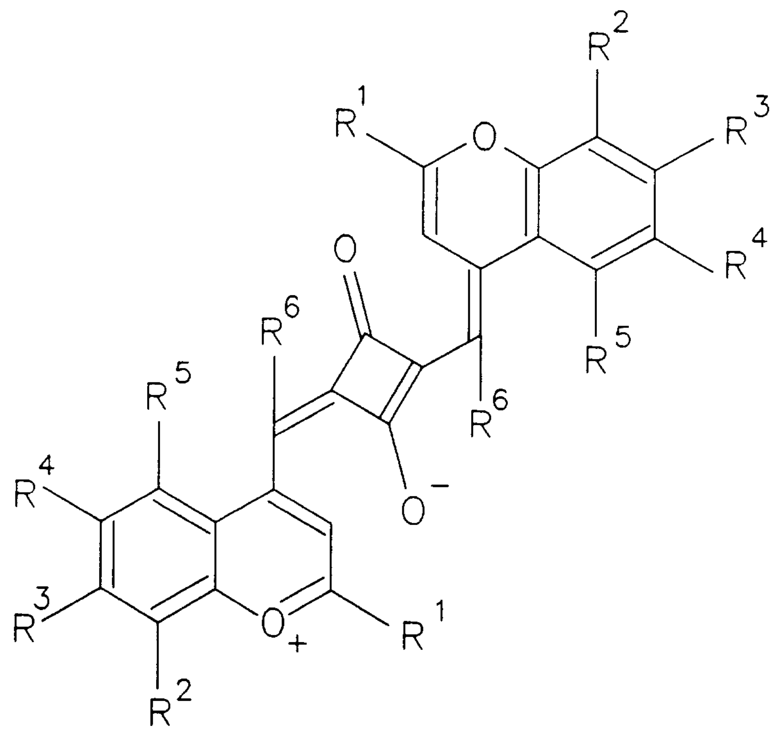

in which $R^1$, $R^2$, $R^3$, $R^4$, $R^5$ and $R^6$ are as defined in claim 9.

13. 4-[[3-[7-diethylamino-2-(1,1-dimethylethyl)-(benz[b]-4H-pyran-4-ylidene)methyl]-2-hydroxy-4-oxo-2-cyclobuten-1-ylidene]methyl]7-diethylamino-2-(1,1-dimethylethyl)-benz[b]pyrylium hydroxide inner salt;

4-[[3-[7-diethylamino-2-(1,1-dimethylethyl)-(benz[b]-4H-pyran-4-ylidene)methyl]-2-hydroxy-4-oxo-2-cyclobuten-1-ylidene]methyl]-7-dimethylamino-2-(1,1-dimethylethyl)-benz[b]pyrylium hydroxide inner salt;

4-[[3-[7-indolinyl-2-(1,1-dimethylethyl)-(benz[b]-4H-pyran-4-ylidene)methyl]-2-hydroxy-4-oxo-2-cyclobuten-1-ylidene]methyl]-7-indolinyl-2-(1,1-dimethylethyl)-benz[b]pyrylium hydroxide inner salt;

4-[[3-[7-morpholino-2-(1,1-dimethylethyl)-(benz[b]-4H-pyran-4-ylidene)methyl]-2-hydroxy-4-oxo-2-cyclobuten-1-ylidene]methyl]-7-morpholino-2-(1,1-dimethylethyl)-benz[b]pyrylium hydroxide inner salt;

4-[[3-[7-piperidino-2-(1,1-dimethylethyl)-(benz[b]-4H-pyran-4-ylidene)methyl]-2-hydroxy-4-oxo-2-cyclobuten-1-ylidene]methyl]-7-piperidino-2-(1,1-dimethylethyl)-benz[b]pyrylium hydroxide inner salt;

4-[[3-[2-cyclohexyl-7-diethylamino-(benz[b]-4H-pyran-4-ylidene)methyl]-2-hydroxy-4-oxo-2-cyclobuten-1-ylidene]methyl]-2-cyclohexyl-7-diethylaminobenz[b]pyrylium hydroxide inner salt dye;

4-[[3-[2-[1,1-dimethylethyl]-[benz[b]-4H-pyran-4-ylidene]methyl]-2-hydroxy-4-oxo-2-cyclobuten-1-ylidene]methyl]-2-[1,1-dimethylethyl]benz[b]pyrylium hydroxide inner salt dye;

9-[[3-[11-[1,1-dimethylethyl][1]benzopyrano[6,7,8-ij]-2,3,6,7-tetrahydro-1H,5H-quinolizin-9-ylidene]-methyl]-2-hydroxy-4-oxo-2-cyclobuten-1-ylidene]methyl-11-[1,1-dimethylethyl][1]benzopyrano[6,7,8-ij]-2,3,6,7-tetrahydro-1H,5H-quinolizinium hydroxide inner salt dye;

4-[[3-[2-[6,6-dimethylbicyclo[3.1.1]hept-2-en-2-yl]-7-diethylamino-(benz[b]-4H-pyran-4-ylidene)-methyl]-2-hydroxy-4-oxo-2-cyclobuten-1-ylidene]methyl]-2-[6,6-dimethylbicyclo[3.1.1]hept-2-en-2-yl]-7-diethylaminobenz[b]pyrylium hydroxide inner salt dye;

4-[[3-[2-[bicyclo[2.2.1]hept-2-en-5-yl]-7-diethylamino-(benz[b]-4H-pyran-4-ylidene)methyl]-2-hydroxy-4-oxo-2-cyclobuten-1-ylidene]methyl]-2-[bicyclo[2.2.1]-hept-2-en-5-yl]-7-diethylamino benz[b]-pyrylium hydroxide inner salt dye;

4-[1-[3-[1-[7-diethylamino-2-[1,1-dimethylethyl]-(benz[b]-4H-pyran-4-ylidene)]eth-1-yl]-2-hydroxy-4-oxo-cyclobuten-1-ylidene]eth-1-yl]-7-diethylamino-2-[1,1-dimethylethyl]benz[b]pyrylium hydroxide inner salt dye;

4-[[3-[2-[1-adamantyl]-7-morpholino-(benz[b]-4H-pyran-4-ylidene)methyl]-2-hydroxy-4-oxo-2-cyclobuten-1-ylidene]methyl]-2-[1-adamantyl]-7-morpholinobenz[b]pyrylium hydroxide inner salt dye;

4-[[3-[2-cyclohexyl-7-methoxy-(benz[b]-4H-pyran-4-ylidene)methyl]-2-hydroxy-4-oxo-2-cyclobuten-1-ylidene]methyl]-2-cyclohexyl-7-methoxybenz[b]pyrylium hydroxide inner salt dye;

4-[[3-[7-(2-ethylbutoxy)-2-(1,1-dimethylethyl)-(benz[b]-4H-pyran-4-ylidene)methyl]-2-hydroxy-4-oxo-2-cyclobuten-1-ylidene]methyl]7-diethylamino-2-(1,1-dimethylethyl)-benz[b]pyrylium hydroxide inner salt;

4-[[3-[5,7-dimethoxy-2-(1,1-dimethylethyl)-(benz[b]-4H-pyran-4-ylidene)methyl]-2-hydroxy-4,5-dioxo-2-cyclopenten-1-ylidene]methyl]-5,7-dimethyoxy-2-(1,1-dimethylethyl)-benz[b]pyrylium hydroxide inner salt;

4-[[3-[[7-diethylamino-2-[1,1-dimethylethyl]benz[b]-4H-pyran-4-ylidene]methyl]-2-hydroxy-4,5-dioxo-2-cyclopenten-1-ylidene]methyl]-7-diethylamino-2-[1,1-dimethylethyl]benz[b]pyrylium hydroxide inner salt dye;

4-[[3-[[2-[1,1-dimethylethyl]-7-hydroxybenz[b]-4H-pyran-4-ylidene]methyl]-2-hydroxy-4,5-dioxo-2 -cyclopenten-1-ylidene]methyl]-2-[1,1-dimethylethyl]-7-hydroxybenz[b]pyrylium hydroxide inner salt dye; and

4-[[2-[1,1-dimethylethyl]benz[b]-4H-thiopyran-4-ylidene]methyl]-2-hydroxy-4-oxo-2-cyclobuten-1-ylidene]methyl]-2-[1,1-dimethylethyl]-benz[b]thiopyrylium hydroxide inner salt dye.

**14.** A process for the preparation of a dye according to claim 1, which process comprises condensing two moles of a corresponding 4-$R^7$-benzpyrylium, -thiobenzpyrylium or -selenobenzpyrylium compound (in which $R^7$ is an alkyl group containing from 1 to about 7 carbon atoms and having at least two hydrogen atoms on the carbon atom $\alpha$ to the pyrylium, thiopyrylium or selenopyrylium ring) with squaric acid in the presence of a base, or with a croconate salt.

**15.** A process according to claim 14 in which the 4-$R^7$-benzpyrylium, -thiobenzpyrylium or -selenobenzpyrylium compound is prepared by reaction of the corresponding 4-oxobenz-4H-pyran, -thiopyran or -selenopyran with an organometallic alkylating agent, followed by acid-mediated dehydration.

**16.** A process according to claim 14 in which the 4-$R^7$-benzpyrylium, -thiobenzpyrylium or -selenobenzpyrylium compound is prepared by reaction of the corresponding 4-$R^7$-2-oxobenz-2H-pyran, -thiopyran or -selenopyran with an organometallic alkylating agent containing the desired substituent $R^1$ in a dialkoxyalkane, followed by acid-mediated dehydration.

**17.** A process according to claim 15 in which the 4-oxobenz-4H-pyran, -thiopyran or -selenopyran is prepared by reaction of the corresponding 2-($CH_3$-SO-$CH_2$-CO)-phenol, -thiophenol or -selenophenol with the aldehyde containing the group which forms the 2-substituent on the 4-oxobenz-4H-pyran.

**18.** A process according to claim 17 in which the 2-($CH_3$-SO-$CH_2$-CO)-phenol, -thiophenol or selenophenol is prepared by reacting an ester of the corresponding salicylic acid with dimethyl sulfoxide in the presence of a base.

**19.** A process for generating heat in a medium comprising a dye according to any one of the preceding claims, which process comprises exposing at least part of the medium to infra-red actinic radiation of a frequency absorbed by the dye, whereby the radiation is absorbed by the dye and heat is generated within the parts of the medium exposed to the radiation.

**20.** A process according to claim 19 wherein the medium further comprises a thermally sensitive material capable of undergoing a color change upon exposure to heat, the medium is exposed imagewise to the radiation, and the heat generated by the dye is sufficient to effect a color change in the thermally sensitive material, whereby an image is formed in the medium.

**21.** A process according to claim 20 wherein the thermally sensitive material is originally substantially colorless and is converted by the heat generated to a colored material in exposed areas of the image.

**22.** A process according to claim 19 wherein the medium comprises one layer of a multi-layer structure, this structure further comprising a support layer disposed on one side of the medium and a colored layer adhering to the opposed side of the medium, and wherein the heat generated on exposure of the dye to actinic radiation causes increased adhesion of the colored layer to the support layer, such that upon application of a peeling force to the colored layer, the colored layer will peel from the support

layer in areas which have not been exposed to the radiation, but in areas which have been exposed to radiation the colored layer will remain attached to the support layer.

**23.** A process according to claim 19 wherein the heat generation causes a visually perceptible change in the medium so the medium forms an optical recording element.

**24.** A recording element in which information can be recorded and read optically, which recording element comprises a supporting plate bearing a recording layer comprising a dye according to claim 1.

**25.** A chromone of the formula:

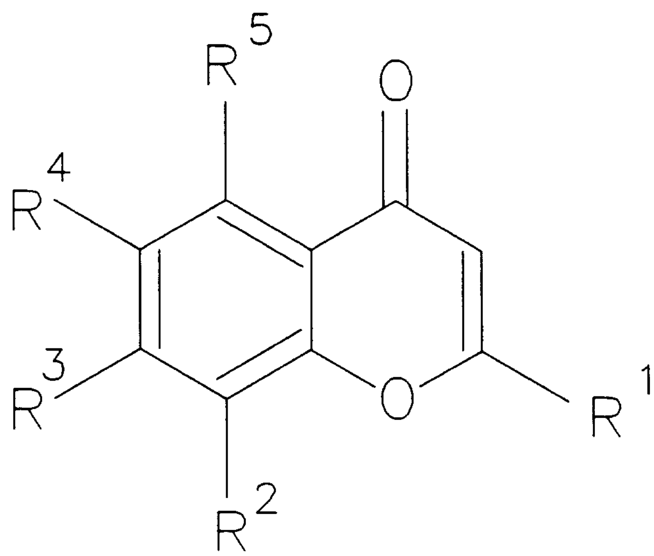

in which:

each $R^1$ independently is a substituted or unsubstituted alkyl or cycloalkyl group in which the carbon atom which is directly attached to the benzpyrylium nucleus carries not more than one hydrogen atom;

each $R^2$ and $R^4$ independently is a hydrogen atom, an alkyl group containing not more than about 8 carbon atoms or a halogen atom;

each $R^5$ independently is a hydrogen atom, an alkyl group containing not more than about 8 carbon atoms, a halogen atom, or an alkoxy group containing not more than about 12 carbon atoms; and

each $R^3$ independently is an alkyl group containing not more than about 8 carbon atoms, or a group in which an element of Group 5A is bonded directly to the benzpyrylium nucleus, subject to the proviso that, $R^3$, together with one or both of $R^2$ and $R^4$, may comprise at least one saturated heterocyclic ring containing said element of Group 5A, this saturated heterocyclic ring optionally being fused to the phenyl ring of the associated benzpyrylium nucleus.

**Patentansprüche**

**1.** Farbstoff, bestehend aus einem Innensalz einer Squarylium-Verbindung, dadurch gekennzeichnet, daß die Squarylium-Verbindung die folgende Formel besitzt:

$Q^1 = Z - Q^2$

dabei ist:

$Q^1$ eine 4-(Benz(b)-4H-pyrylium)methyliden-, 4-(Benz(b)-4H-thiopyrylium)methyliden- oder 4-(Benz(b)-4H-selenpyrylium)methyliden-Gruppe;

Z ein 1,3-(2-Hydroxy-4-oxo-2-cyclobutyliden)-2-hydroxid- oder 1,3-(2-Hydroxy-4,5-dioxo-2-cyclopentyliden)hydroxid-Ring; und

$Q^2$ eine 4-(Benz(b)-4H-pyran-4-yliden)methyl-, 4-(Benz(b)-4H-thiopyran-4-yliden)methyl- oder 4-(Benz-(b)-4H-selenpyran-4-yliden)methyl-Gruppe;
wobei eine der Gruppen $Q^1$ und $Q^2$ oder beide Gruppen an ihrer 2-Stellung einen Substituenten tragen, in dem ein nicht-aromatisches Kohlenstoffatom direkt an den Benzpyrylium-, Benzthiopyrylium- oder Benzselenpyrylium-Kern gebunden ist, vorausgesetzt, daß dann, wenn der 2-Substituent einen aromatischen Kern enthält, dieser aromatische Kern nicht mit dem Benzpyrylium-, Benzthiopyrylium- oder Benzselenpyrylium-Kern konjugiert ist, an den er gebunden ist.

2. Farbstoff nach Anspruch 1,
dadurch gekennzeichnet, daß der oder jeder 2-Substituent eine substituierte oder nicht-substituierte Alkyl- oder Cycloalkyl-Gruppe ist.

3. Farbstoff nach Anspruch 2,
dadurch gekennzeichnet, daß das Kohlenstoffatom der oder jeder 2-Alkyl- oder Cycloalkyl-Gruppe, die direkt an den Benzpyrylium-, Benzthiopyrylium- oder Benzselenpyrylium-Kern gebunden ist, kein daran gebundenes Wasserstoffatom trägt.

4. Farbstoff nach den Ansprüchen 2 oder 3,
dadurch gekennzeichnet, daß jede der 2-Alkyl-Gruppen eine tertiäre Butyl-Gruppe ist.

5. Farbstoff nach einem der vorhergehenden Ansprüche,
dadurch gekennzeichnet, daß wenigstens einer der Benzpyrylium-, Benzthiopyrylium- oder Benzselenpyrylium-Kerne an der 7-Stellung einen Substituenten trägt, in dem ein Element der Gruppe 5A, 6A oder 7A des Periodischen Systems direkt mit dem Kern verbunden ist, vorausgesetzt, daß dann, wenn das Element der Gruppe 5A, 6A oder 7A wenigstens divalent ist, der 7-Substituent wenigstens einen gesättigten heterozyklischen Ring umfaßt, der das Element der Gruppe 5A, 6A oder 7A enthält, wobei dieser gesättigte heterozyklische Ring fakultativ mit dem Benzolring des zugeordneten Kerns verschmolzen ist.

6. Farbstoff nach Anspruch 5,
dadurch gekennzeichnet, daß der oder jeder 7-Substituent eine Alkoxy-Gruppe aufweist, die nicht mehr als ungefähr 12 Kohlenstoffatome enthält, oder eine disubstituierte Amino- oder disubstituierte Phosphino-Gruppe, wobei jeder der Substituenten der oder jeder disubstituierten Gruppe eine Alkyl-Gruppe aufweist, die nicht mehr als etwa 6 Kohlenstoffatome umfaßt, oder daß die beiden Substituenten jeder der einen substituierten Gruppe zusammen mit dem Stickstoffatom oder dem Phosphoratom davon ein heterozyklisches Ringsystem bilden, wobei dieses Ringsystem fakultativ mit dem Kern verschmolzen wird, der den disubstituierten Amino- oder Phosphino-Substituenten trägt.

7. Farbstoff nach Anspruch 6,
dadurch gekennzeichnet, daß die oder jede der 7-disubstituierten Amino-Gruppen von jener Gruppe ausgewählt wird, die aus einer Dialkylamino-Gruppe, wobei jede der Alkyl-Gruppen nicht mehr als ungefähr 4 Kohlenstoffatome enthält, einer Piperidin-Gruppe, einer Indolinyl-Gruppe, einer Morpholin-Gruppe und einer $-N(-(CH_2)_3-)_2$-Gruppe besteht, vorausgesetzt, daß dann, wenn eine oder beide Amino-Gruppen eine $-N(-(CH_2)_3-)_2$-Gruppe ist, die Enden der Trimethylen-Gruppen entfernt von dem Stickstoffatom an die 6- und 8-Stelle des Kerns gebunden sind, der das Stickstoffatom trägt, so daß die $-N(-(CH_2)_3-)_2$-Gruppe und der Benzolring des Kerns zusammen ein Julolidin-Ringsystem bilden.

8. Farbstoff nach einem der vorhergehenden Ansprüche,
dadurch gekennzeichnet, daß jedes Kohlenstoffatom der Gruppen $Q^1$ und $Q^2$, die direkt mit dem Ring Z verbunden sind, unsubstituiert ist oder eine Alkyl-Gruppe trägt, die nicht mehr als etwa 6 Kohlenstoffatome enthält.

9. Farbstoff nach einem der vorhergehenden Ansprüche,
dadurch gekennzeichnet, daß er die folgende Formel aufweist:

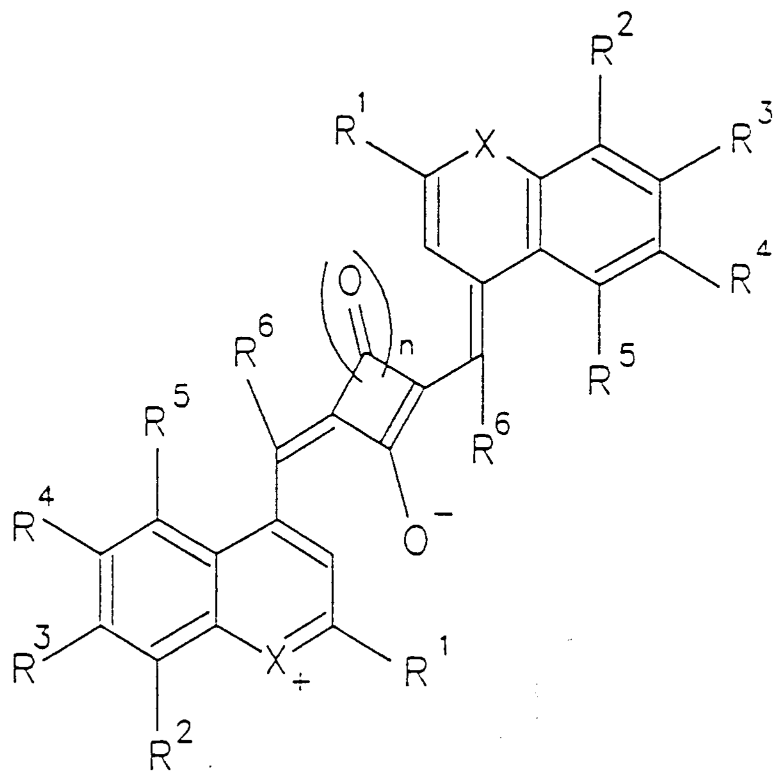

wobei:
n = 1 oder 2;
jedes X ist unabhängig ein Sauerstoffatom, ein Schwefelatom oder ein Selenatom;
jedes $R^1$ ist unabhängig eine Alkyl-Gruppe oder eine Cycloalkyl-Gruppe, die substituiert oder nicht-substituiert sein kann;
jedes $R^2$ und $R^4$ ist unabhängig ein Wasserstoffatom, eine Alkyl-Gruppe, die nicht mehr als etwa 8 Kohlenstoffatome oder ein Halogenatom enthält;
jedes $R^5$ ist unabhängig ein Wasserstoffatom, eine Alkyl-Gruppe, die nicht mehr als ungefähr 8 Kohlenstoffatome enthält, ein Halogenatom oder eine Alkoxy-Gruppe, die nicht mehr als etwa 12 Kohlenstoffatome enthält;
jedes $R^6$ ist unabhängig ein Wasserstoffatom oder eine Alkyl-Gruppe, die nicht mehr als etwa 6 Kohlenstoffatome enthält; und
jedes $R^3$ ist unabhängig ein Wasserstoffatom, eine Alkyl-Gruppe, die nicht mehr als etwa 8 Kohlenstoffatome enthält, oder eine Gruppe, in der ein Element der Gruppe 5A, 6A oder 7A direkt an den Benzpyrylium-Kern gebunden ist, vorausgesetzt, daß dann, wenn das Element der Gruppe 5A, 6A oder 7A wenigstens divalent ist, $R^3$ zusammen mit $R^2$ oder $R^4$ oder beiden wenigstens einen gesättigten heterozyklischen Ring umfaßt, der das Element der Gruppe 5A, 6A oder 7A enthält, wobei dieser gesättigte heterozyklische Ring fakultativ mit dem Phenyl-Ring des zugeordneten Kerns verschmolzen ist.

**10.** Farbstoff nach Anspruch 9,
dadurch gekennzeichnet, daR jede der Gruppen $R^6$ unabhängig ein Wasserstoffatom oder eine Methyl-Gruppe ist.

**11.** Farbstoff nach den Ansprüchen 9 oder 10,
dadurch gekennzeichnet, daß jedes X ein Sauerstoffatom ist.

**12.** Farbstoff nach einem der Ansprüche 9 bis 11, bei welchem n gleich 1 ist, so daß der Farbstoff die folgende Formel besitzt:

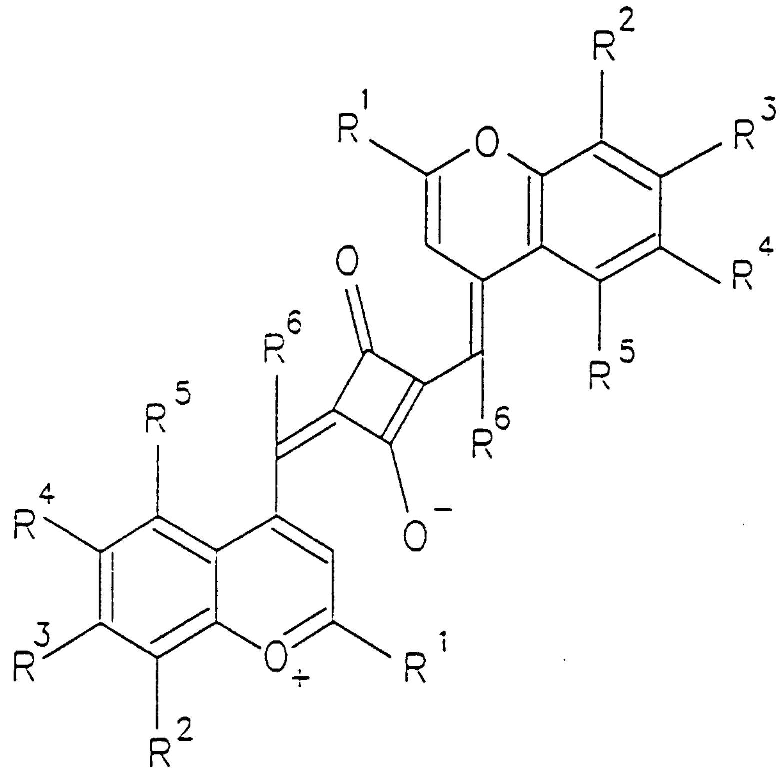

wobei $R^1$, $R^2$, $R^3$, $R^4$, $R^5$ und $R^6$ wie in Anspruch 9 definiert sind.

**13.** 4-((3-(7-Diäthylamino-2-(1,1-dimethyläthyl)-(benz(b)-4H-pyran-4-yliden)methyl)-2-hydroxy-4-oxo-2-cyclobuten-1-yliden)methyl)-7-diäthylamino-2-(1,1-dimethyläthyl)-benz(b)pyryliumhydroxid-Innensalz;
4-((3-(7-Diäthylamino-2-(1,1-dimethyläthyl)-(benz(b)-4H-pyran-4-yliden)methyl)-2-hydroxy-4-oxo-2-cyclobuten-1-yliden)methyl)-7-dimethylamino-2-(1,1-dimethyläthyl)-benz-(b)pyryliumhydroxid-Innensalz;
4-((3-(7-Indolinyl-2-(1,1-dimethyläthyl)-(benz(b)-4H-pyran-4-yliden)methyl)-2-hydroxy-4-oxo-2-cyclobuten-1-yliden)methyl)-7-indolinyl-2-(1,1-dimethyläthyl)-benz(b)pyryliumhydroxid-Innensalz;
4-((3-(7-Morpholin-2-(1,1-dimethyläthyl)-(benz(b)-4H-pyran-4-yliden)methyl)-2-hydroxy-4-oxo-2-cyclobuten-1-yliden)methyl)-7-morpholin-2-(1,1-dimethyläthyl)-benz(b)pyryliumhydroxid-Innensalz;
4-((3-(7-Piperidin-2-(1,1-dimethyläthyl)-(benz(b)-4H-pyran-4-yliden)methyl)-2-hydroxy-4-oxo-2-cyclobuten-1-yliden)methyl)-7-piperidin-2-(1,1-dimethyläthyl)-benz(b)pyryliumhydroxid-Innensalz;
4-((3-(2-Cyclohexyl-7-diäthylamino-(benz(b)-4H-pyran-4-yliden)methyl)-2-hydroxy-4-oxo-2-cyclobuten-1-yliden)methyl)-2-cyclohexyl-7-diäthylaminobenz(b)pyryliumhydroxid-Innensalz-Farbstoff;
4-((3-(2-(1,1-Dimethyläthyl)-(benz(b)-4H-pyran-4-yliden)methyl)-2-hydroxy-4-oxo-2-cyclobuten-1-yliden)-methyl)-2-(1,1-dimethyläthyl)benz(b)pyryliumhydroxid-Innensalz-Farbstoff;
9-((3-(11-(1,1-Dimethyläthyl)(1)benzopyran-(6,7,8-ij)-2,3,6,7-tetrahydro-1H,5H-quinolizin-9-yliden)methyl)-2-hydroxy-4-oxo-2-cyclobuten-1-yliden)methyl-11-(1,1-dimethyläthyl)(1)benzopyran(6,7,8-ij)-2,3,6,7-tetrahydro-1H,5H-quinoliziniumhydroxid-Innensalz-F arbstoff;
4-((3-(2-(6,6-Dimethylbicyclo(3.1.1)hept-2-en-2-yl)-7-diäthylamino-(benz(b)-4H-pyran-4-yliden)methyl)-2-hydroxy-4-oxo-2-cyclobuten-1-yliden)methyl)-2-(6,6-dimethylbicyclo-(3.1.1)hept-2-en-2-yl)-7-diäthylaminobenz(b)pyryliumhydroxid-Innensalz-Farbstoff;
4-((3-(2-(Bicyclo(2.3.1)hept-2-en-5-yl)-7-diäthylamino(benz(b)-4H-pyran-4-yliden)methyl)-2-hydroxy-4-oxo-2-cyclobuten-1-yliden)methyl)-2-(bicyclo(2.2.1)-hept-2-en-5-yl)-7-diäthylaminobenz(b)-pyryliumhydroxid-Innensalz-Farbstoff;
4-(1-(3-(1-(7-Diäthylamino-2-(1,1-dimethyläthyl)-(benz(b)-4H-pyran-4-yliden))äth-1-yl)-2-hydroxy-4-oxo-cyclobuten-1-yliden)äth-1-yl)-7-diäthylamino-2-(1,1-dimethyläthyl)benz(b)pyryliumhydroxid-Innensalz-Farbstoff;
4-((3-(2-(1-Adamantyl)-7-morpholin-(benz(b)-4H-pyran-4-yliden)methyl)-2-hydroxy-4-oxo-2-cyclobuten-1-yliden)methyl)-2-(1-adamantyl)-7-morpholinbenz(b)pyryliumhydroxid-Innensalz-Farbstoff;
4-((3-(2-Cyclohexyl-7-methoxy-(benz(b)-4H-pyran-4-yliden)methyl)-2-hydroxy-4-oxo-2-cyclobuten-1-yliden)methyl)-2-cyclohexyl-7-methoxybenz(b)pyryliumhydroxid-Innensalz-Farbstoff;
4-((3-(7-(2-Äthylbutoxy)-2-(1,1-dimethyläthyl)-(benz(b)-4H-pyran-4-yliden)methyl)-2-hydroxy-4-oxo-2-cyclobuten-1-yliden)methyl)-7-diäthylamino-2-(1,1-dimethyläthyl)-benz(b)pyryliumhydroxid-Innensalz;
4-((3-(5,7-Dimethoxy-2-(1,1-dimethyläthyl)-(benz(b)-4H-pyran-4-yliden)methyl)-2-hydroxy-4,5-dioxo-2-cyclopenten-1-yliden)methyl)-5,7-dimethoxy-2-(1,1-dimethyläthyl)-benz(b)pyryliumhydroxid-Innensalz;
4-((3-((7-Diäthylamino-2-(1,1-dimethyläthyl)-benz(b)-4H-pyran-4-yliden)methyl)-2-hydroxy-4,5-dioxo-2-cyclopenten-1-yliden)methyl)-7-diäthylamino-2-(1,1-dimethyläthyl)benz(b)pyryliumhydroxid-Innensalz-Farbstoff;
4-((3-((2-(1,1-Dimethyläthyl)-7-hydroxybenz(b)-4H-pyran-4-yliden)methyl)-2-hydroxy-4,5-dioxo-2-cyclopenten-1-yliden)methyl)-2-(1,1-dimethyläthyl)-7-hydroxybenz(b)pyryliumhydroxid-Innensalz-Farbstoff; und
4-((2-(1,1-Dimethyläthyl)benz(b)-4H-thiopyran-4-yliden)methyl)-2-hydroxy-4-oxo-2-cyclobuten-1-yliden)-methyl)-2-(1,1-dimethyläthyl)-benz(b)thiopyryliumhydroxid-Innensalz-Farbstoff.

**14.** Verfahren zur Herstellung eines Farbstoffs nach Anspruch 1, bei welchem zwei mol einer entsprechenden 4-$R^7$-Benzpyrylium-, -Thiobenzpyrylium- oder -Selenbenzpyrylium-Verbindung (bei welcher $R^7$ eine Alkyl-Gruppe ist, die etwa 1 bis 7 Kohlenstoffatome besitzt und wenigstens zwei Wasserstoffatome an dem Kohlenstoffatom $\alpha$ am Pyrylium-, Thiopyrylium- oder Selenpyrylium-Ring aufweist) mit Quadratsäure in Gegenwart einer Base oder mit einem Croconat-Salz kondensiert werden.

**15.** Verfahren nach Anspruch 14, bei welchem die 4-$R^7$-Benzpyrylium-, -Thiobenzpyrylium- oder -Selenbenzpyrylium-Verbindung dadurch hergestellt wird, daß das entsprechende 4-Oxobenz-4H-pyran, -thiopyran oder -selenpyran mit einem organometallischen Alkylatmittel reagiert, worauf eine durch Säure unterstützte Dehydrierung stattfindet.

**16.** Verfahren nach Anspruch 14, bei welchem die 4-$R^7$-Benzpyrylium-, -Thiobenzpyrylium- oder -Selenbenzpyrylium-Verbindung dadurch hergestellt wird, daß das entsprechende 4-$R^7$-2-Oxobenz-2H-pyran, -thiopyran oder -selenpyran mit einem organometallischen Alkylatmittel reagiert, das den gewünschten Substituenten $R^1$ in einem Dialkoxyalkan enthält, worauf eine durch Säure unterstützte Dehydrierung folgt.

**17.** Verfahren nach Anspruch 15, bei welchem das 4-Oxobenz-4H-pyran, -thiopyran oder -selenpyran dadurch hergestellt wird, daß das entsprechende 2-($CH_3$-SO-$CH_2$-CO)-Phenol, -thiophenol oder -selenphenol mit dem Aldehyd zur Reaktion gebracht wird, welches die Gruppe enthält, die den 2-Substituenten auf dem 4-Oxobenz-4H-pyran bildet.

**18.** Verfahren nach Anspruch 17, bei welchem das 2-($CH_3$-SO-$CH_2$-CO)-Phenol, -Thiophenol oder Selenphenol dadurch hergestellt wird, daß ein Ester der entsprechenden Salicylsäure mit Dimethylsulfoxid in Gegenwart einer Base zur Reaktion gebracht wird.

**19.** Verfahren zur Erzeugung von Wärme in einem Medium, das einen Farbstoff nach einem der vorhergehenden Ansprüche enthält, wobei das Verfahren die folgenden Schritte umfaßt: es wird wenigstens ein Teil des Mediums einer aktinischen Infrarot-Strahlung mit einer Frequenz unterworfen, die durch den Farbstoff absorbiert wird, wodurch eine Absorption der Strahlung durch den Farbstoff bewirkt und Wärme innerhalb jener Teile des Mediums erzeugt wird, die der Strahlung ausgesetzt wurden.

**20.** Verfahren nach Anspruch 19, bei welchem das Medium außerdem wärmeempfindliches Material enthält, das einer Farbänderung unterworfen wird, wenn es durch Wärme belichtet wird, wobei das Medium bildweise durch die Strahlung belichtet wird und die vom Farbstoff erzeugte Wärme ausreicht, um eine Farbänderung in dem wärmeempfindlichen Material herbeizuführen, wodurch ein Bild in dem Medium erzeugt wird.

**21.** Verfahren nach Anspruch 20, bei welchem das wärmeempfindliche Material ursprünglich im wesentlichen farblos ist und durch die erzeugte Wärme in den belichteten Flächen des Bildes eingefärbt wird.

**22.** Verfahren nach Anspruch 19, bei welchem das Medium eine Schicht eines Mehrschichtenaufbaus aufweist, wobei dieser Mehrschichtenaufbau außerdem eine Trägerschicht auf einer Seite des Mediums und eine Farbschicht aufweist, die an der gegenüberliegenden Seite des Mediums anhaftet, und wobei

die bei der Belichtung des Farbstoffs durch aktinische Strahlung erzeugte Wärme eine erhöhte Adhäsion der Farbschicht an der Trägerschicht bewirkt, derart, daß nach Anwendung einer Abschälkraft auf die Farbschicht die Farbschicht sich von der Trägerschicht in jenen Bereichen löst, die nicht durch die Strahlung belichtet wurden, wobei aber die Farbschicht in jenen Bereichen, die durch die Strahlung belichtet wurden, an der Trägerschicht haften bleibt.

**23.** Verfahren nach Anspruch 19, bei welchem die Wärmeerzeugung eine visuell sichtbare Änderung im Medium herbeiführt, so daß das Medium ein optisches Aufzeichnungsmaterial bildet.

**24.** Aufzeichnungsmaterial, bei welchem die Information optisch aufgezeichnet und gelesen werden kann, wobei das Aufzeichnungsmaterial eine Trägerplatte aufweist, die eine Aufzeichnungsschicht mit einem Farbstoff gemäß Anspruch 1 aufweist.

**25.** Chromon der Formel:

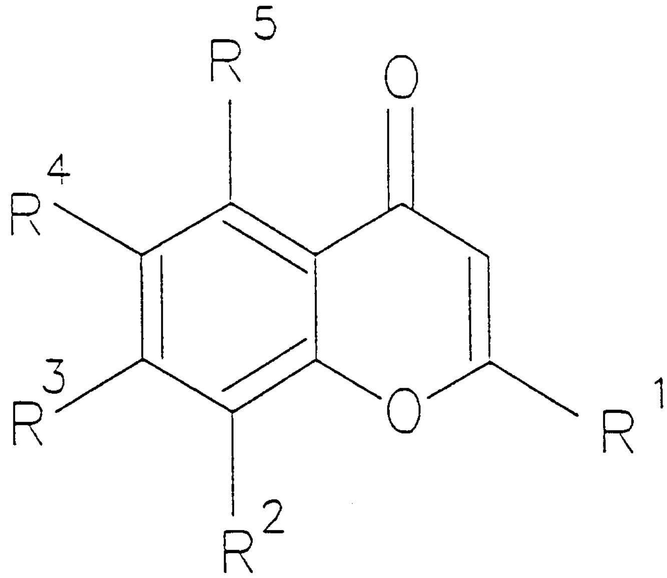

worin:
jedes $R^1$ unabhängig eine substituierte oder nicht-substituierte Alkyl- oder Cycloalkyl-Gruppe ist, in der das Kohlenstoffatom, das direkt an den Benzpyrylium-Kern gebunden ist, nicht mehr als ein Wasserstoffatom trägt;
jedes $R^2$ und $R^4$ unabhängig ein Wasserstoffatom einer Alkyl-Gruppe ist, die nicht mehr als ungefähr 8 Kohlenstoffatome oder ein Halogenatom enthält;
jedes $R^5$ unabhängig ein Wasserstoffatom, eine Alkyl-Gruppe, die nicht mehr als etwa 8 Kohlenstoffatome enthält, ein Halogenatom oder eine Alkoxy-Gruppe ist, die nicht mehr als etwa 12 Kohlenstoffatome enthält; und
jedes $R^3$ unabhängig eine Alkyl-Gruppe ist, die nicht mehr als etwa 8 Kohlenstoffatome enthält, oder eine Gruppe, in der ein Element der Gruppe 5A direkt an den Benzpyrylium-Kern gebunden ist, vorausgesetzt, daß $R^3$ zusammen mit $R^2$ oder $R^4$ oder beiden wenigstens einen gesättigten heterozyklischen Ring aufweist, der das Element der Gruppe 5A enthält, und dieser gesättigte heterozyklische Ring kann fakultativ mit dem Phenyl-Ring des zugeordneten Benzpyrylium-Kerns verschmolzen werden.

## Revendications

**1.** Colorant comprenant un sel interne d'un composé de type squarylium, caractérisé en ce que le composé de type squarylium répond à la formule :

$Q^1 = Z\text{-}Q^2$

dans laquelle
$Q^1$ représente un groupe 4-(benzo[b]-4H-pyrylium)méthylidène, 4-(benzo[b]-4H-thiopyrylium)-méthylidène ou 4-(benzo[b]-4H-sélénopyrylium)méthylidène;
Z représente un cycle 1,3-(2-hydroxy-4-oxo-2-cyclobutylidène)hydroxyde ou 1,3-(2-hydroxy-4,5-dioxo-2-cyclopentylidène)hydroxyde, et
$Q^2$ représente un groupe 4-(benzo[b]-4H-pyran-4-ylidène)méthyle, 4-benzo[b]-4H-thiopyran-4-ylidène)-méthyle ou 4-benzo[b]-4H-sélénopyran-4-ylidène)méthyle,
où un des groupes $Q^1$ et $Q^2$ ou les deux, porte en position 2 un substituant dans lequel un atome de carbone non aromatique est lié directement au noyau benzopyrylium, benzothiopyrylium ou benzosélénopyrylium, à condition que, si ledit substituant en position 2 contient un noyau aromatique, ce noyau aromatique ne soit pas conjugué avec le noyau benzopyrylium, benzothiopyrylium ou benzosélénopyrylium auquel il est lié.

**2.** Colorant conforme à la revendication 1, caractérisé en ce que le ou chaque substituant en position 2 est un groupe alkyle ou cycloalkyle substitué ou non substitué.

**3.** Colorant conforme à la revendication 2, caractérisé en ce que l'atome de carbone du ou de chaque groupe alkyle ou cycloalkyle en position 2 lié directement au noyau benzopyrylium, benzothiopyrylium ou benzosélénopyrylium n'est pas lié à un atome d'hydrogène.

**4.** Colorant conforme à la revendication 2 ou 3, caractérisé en ce que chacun des groupes alkyle en position 2 est un groupe tertio-butyle.

**5.** Colorant conforme à une quelconque des revendications précédentes, caractérisé en ce qu'au moins un des noyaux benzopyrylium, benzothiopyrylium ou benzosélénopyrylium porte, en position 7, un substituant dans lequel un élément du groupe 5A, 6A ou 7A de la classification périodique des éléments est lié directement au noyau, à condition que, lorsque l'élément du groupe 5A, 6A ou 7A est au moins divalent, le substituant en position 7 forme au moins un hétérocycle saturé contenant ledit élément du groupe 5A, 6A ou 7A, cet hétérocycle saturé pouvant être fusionné au cycle benzénique du noyau associé.

**6.** Colorant conforme à la revendication 5, caractérisé en ce que le ou chaque substituant en position 7 comprend un groupe alcoxy ne contenant pas plus d'environ 12 atomes de carbone, ou un groupe amino disubstitué ou phosphino disubstitué, dans lequel chacun des substituants du ou de chaque groupe disubstitué comprend un groupe alkyle contenant au plus environ 6 atomes de carbone, ou les deux substituants d'un quelconque des groupes disubstitués forment, ensemble avec l'atome d'azote ou de phosphore de celui-ci, un système hétérocyclique, ce système cyclique pouvant être fusionné avec le noyau portant le substituant amino ou phosphino disubstitué.

**7.** Colorant conforme à la revendication 6, caractérisé en ce que le ou chaque groupe amino disubstitué en position 7 est choisi dans le groupe formé par les résidus dialkylamino, dans lequel chaque groupe alkyle contient au plus 4 atomes de carbone, pipéridino, indolinyle, morpholino et $-N[-(CH_2)_3-]_2$, à condition que, lorsqu'un ou les deux groupes amino sont un groupe $-N[-(CH_2)_3-]_2$, les extréminés des groupes triméthylène éloignées de l'atome d'azote sont liées aux positions 6 et 8 du noyau portant l'atome d'azote, de sorte que le groupe $-N[-(CH_2)_3-]_2$ et le cycle benzénique du noyau forment ensemble un système cyclique de type julolidine.

**8.** Colorant conforme à une quelconque des revendications précédentes, caractérisé en ce que chacun des atomes de carbones des groupes $Q^1$ et $Q^2$, lié directement au cycle Z, est non substitué ou porte un groupe alkyle contenant au plus 6 atomes de carbone.

**9.** Colorant conforme à une quelconque des revendications précédentes, caractérisé en ce qu'il répond à la formule

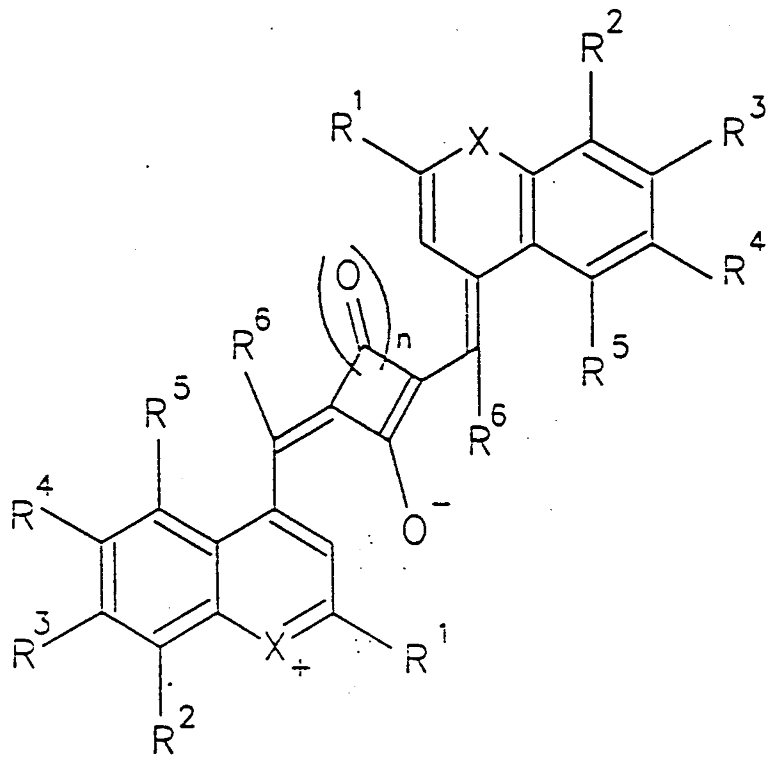

dans laquelle
n vaut 1 ou 2,
chaque X représente indépendamment un atome d'oxygène, de soufre ou de sélénium,
chaque $R^1$ représente indépendamment un groupe alkyle ou cylcoalkyle pouvant être substitué ou non substitué,
chaque $R^2$ et $R^4$ représente indépendamment un atome d'hydrogène, un groupe alkyle contenant au plus environ 8 atomes de carbone ou un atome d'halogène,
chaque $R^5$ représente indépendamment un atome d'hydrogène, un groupe alkyle contenant au plus environ 8 atomes de carbone, un atome d'halogène ou un groupe alcoxy contenant au plus environ 12 atomes de carbone,
chaque $R^6$ représente indépendamment un atome d'hydrogène ou un groupe alkyle contenant au plus environ 6 atomes de carbone, et
chaque $R^3$ représente indépendamment un atome d'hydrogène, un groupe alkyle contenant au plus environ 8 atomes de carbone ou un groupe dans lequel un élement du groupe 5A, 6A ou 7A est lié directement au noyau benzopyrylium, à condition que, lorsque ledit élement du groupe 5A, 6A ou 7A est au moins divalent, $R^3$, ensemble avec $R^2$ et/ou $R^4$, forme au moins un hétérocycle saturé contenant ledit élément du groupe 5A, 6A ou 7A, cet hétérocycle saturé pouvant être fusionné au noyau phényle du cycle associé.

**10.** Colorant conforme à la revendication 9, caractérisé en ce que chacun des groupes $R^6$ représente indépendamment un atome d'hydrogène ou un groupe méthyle.

**11.** Colorant conforme à la revendication 9 ou 10 caractérisé en ce que chaque X représente un atome d'oxygène.

**12.** Colorant conforme à une quelconque des revendications 9 à 11 dans lequel n est égal à 1, de sorte que le colorant répond à la formule :

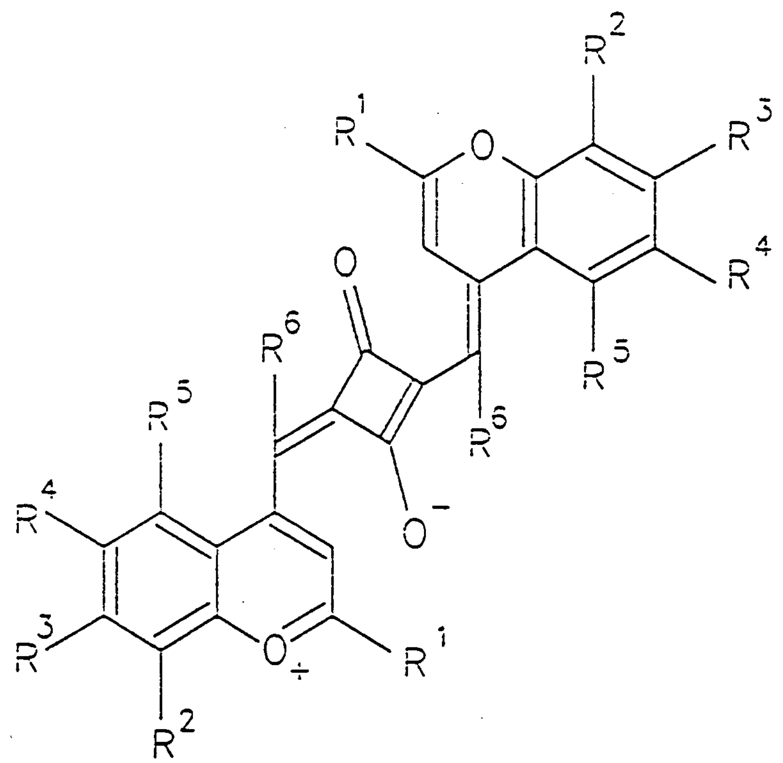

dans laquelle $R^1$, $R^2$, $R^3$, $R^4$, $R^5$ et $R^6$ sont définis comme dans la revendication 9.

**13.** Sel interne de type hydroxyde de 4-[[3-[7-diéthylamino-2-(1,1-diméthyléthyl)(benzo[b]-4H-pyran-4-ylidène)méthyl]-2-hydroxy-4-oxo-2-cyclobutén-1-ylidène]méthyl]-7-diéthylamino-2-(1,1-diméthyléthyl)-benzo-[b]pyrylium,

sel interne de type hydroxyde de 4-[[3-[7-diéthylamino-2-(1,1-diméthyléthyl)(benzo[b]-4H-pyran-4-ylidène)méthyl]-2-hydroxy-4-oxo-2-cyclobutén-1-ylidène]méthyl]-7-diméthylamino-2-(1,1-diméthyléthyl)-benzo[b]pyrylium,

sel interne de type hydroxyde de 4-[[3-[7-indolinyl-2-(1,1-diméthyléthyl)(benzo[b]-4H-pyran-4-ylidène)méthyl]-2-hydroxy-4-oxo-2-cyclobutén-1-ylidène]méthyl]-7-indolinyl-2-(1,1-diméthyléthyl)-benzo[b]-pyrylium,

sel interne de type hydroxyde de 4-[[3-[7-morpholino-2-(1,1-diméthyléthyl)(benzo[b]-4H-pyran-4-ylidène)méthyl]-2-hydroxy-4-oxo-2-cyclobutén-1-ylidène]méthyl]-7-morpholino-2-(1,1-diméthyléthyl)-benzo[b]pyrylium,

sel interne de type hydroxyde de 4-[[3-[7-pipéridino-2-(1,1-diméthyléthyl)(benzo[b]-4H-pyran-4-ylidène)méthyl]-2-hydroxy-4-oxo-2-cyclobutén-1-ylidène]méthyl]-7-pipéridino-2-(1,1-diméthyléthyl)-benzo[b]pyrylium,

sel interne de type hydroxyde de 4-[[3-[2-cyclohexyl-7-diéthylamino-(benzo[b]-4H-pyran-4-ylidène)-méthyl]-2-hydroxy-4-oxo-2-cyclobutén-1-ylidène]méthyl]-2-cyclohexyl-7-diéthylamino-benzo[b]pyrylium,

sel interne de type hydroxyde de 4-[[3-[2-[1,1-diméthyléthyl]-[benzo[b]-4H-pyran-4-ylidène]méthyl]-2-hydroxy-4-oxo-2-cyclobutène-1-ylidène]méthyl]-2-[1,1-diméthyléthyl]-benzo[b]pyrylium,

sel interne de type hydroxyde de 9-[[3-[11-[1,1-diméthyléthyl][1]benzopyrano-[6,7,8-ij]-2,3,6,7-tétrahydro-1H,5H-quinolizine-9-ylidène]méthyl]-2-hydroxy-4-oxo-2-cyclobutén-1-ylidène]méthyl-11-[1,1-diméthyléthyl]-[1]-benzopyrano[6,7,8-ij]-2,3,6,7-tétrahy dro-1H,5H-quinolizinium,

sel interne de type hydroxyde de 4-[[3-[2-[6,6-diméthylbicyclo[3.1.1]hept-2-én-2-yl]-7-diéthylamino-(benzo[b]-4H-pyran-4-ylidène)méthyl]-2-hydroxy-4-oxo-2-cyclobutén-1-ylidène]méthyl]-[2-[6,6-diméthylbicyclo[3.1.1]hept-2-én-2-yl]-7-diéthylamino-benzo[b] pyrylium,

sel interne de type hydroxyde de 4-[[3-[2-[bicyclo[2.2.1]hept-2-én-5-yl]-7-diéthylamino-(benzo[b]-4H-pyran-4-ylidène)méthyl]-2-hydroxy-4-oxo-2-cyclobutén-1-ylidène]méthyl]-[2-[bicyclo[2.2.1]hept-2-én-5-yl]-7-diéthylamino-benzo[b]pyrylium,

sel interne de type hydroxyde de 4-[1-[3-[1-[7-diéthylamino-2-[1,1-diméthyléthyl]-(benzo[b]-4H-pyran-4-ylidène)]éth-1-yl]-2-hydroxy-4-oxo-2-cyclobutén-1-ylidène]éth-1-yl]-7-diéthylamino-2-[1,1-diméthyléthyl]-benzo[b]pyrylium,

sel interne de type hydroxyde de 4-[[3-[2-[1-adamantyl]-7-morpholino-(benzo[b]-4H-pyran-4-ylidène)méthyl]-2-hydroxy-4-oxo-2-cyclobutén-1-ylidène]méthyl]-2-[1-adamantyl]-7-morpholino-benzo[b]-pyrylium,

sel interne de type hydroxyde de 4-[[3-[2-cyclohexyl-7-méthoxy(benzo[b]-4H-pyran-4-ylidène)-méthyl]-2-hydroxy-4-oxo-2-cyclobutén-1-ylidène]méthyl]- 2-cyclohexyl-7-méthoxy-benzo[b]pyrylium,

sel interne de type hydroxyde de 4-[[3-[7-(2-éthylbutoxy)-2-(1,1-diméthyléthyl)-(benzo[b]-4H-pyran-4-ylidène)méthyl]-2-hydroxy-4-oxo-2-cyclobutén-1-ylidène]méthyl]-7-diéthylamino-2-(1,1-diméthyléthyl)-benzo[b]pyrylium,

sel interne de type hydroxyde de 4-[[3-[5,7-diméthoxy-2-(1,1-diméthyléthyl)-(benzo[b]-4H-pyran-4-ylidène)méthyl]-2-hydroxy-4,5-dioxo-2-cyclopentén-1-ylidène]méthyl]-[5,7-diméthoxy-2-(1,1-diméthyléthyl)-benzo[b]pyrylium,

sel interne de type hydroxyde de 4-[[3-[[7-diéthylamino-2-[1,1-diméthyléthyl]-(benzo[b]-4H-pyran-4-ylidène)méthyl]-2-hydroxy-4,5-dioxo-2-cyclopentén-1-ylidène]méthyl]-7-diéthylamino-2-[1,1-diméthyléthyl]-benzo[b]pyrylium,

sel interne de type hydroxyde de 4-[[3-[[2-[1,1-diméthyléthyl]-7-hydroxybenzo[b]-4H-pyran-4-ylidène)méthyl]-2-hydroxy-4,5-dioxo-2-cyclopentén-1-ylidène]méthyl]-2-[1,1-diméthyléthyl]-7-hydroxybenzo-[b]pyrylium, et

sel interne de type hydroxyde de 4-[[2-[1,1-diméthyléthyl]-benzo[b]-4H-thiopyran-4-ylidène)méthyl]-2-hydroxy-4-oxo-2-cyclobutène-1-ylidène]méthyl]-2-[1,1-diméthyléthyl]-benzo[b]thiopyrylium.

**14.** Procédé pour la préparation d'un colorant conforme à la revendication 1, lequel procédé comprend la condensation de deux moles d'un composé de type 4-$R^7$-benzopyrylium, 4-$R^7$-benzothiopyrylium ou 4-$R^7$-benzosélénopyrylium correspondant (où $R^7$ représente un groupe alkyle contenant de 1 à environ 7 atomes de carbone et ayant au moins deux atome d'hydrogène sur le carbone en $\alpha$ du cycle pyrylium, thiopyrylium ou sélénopyrylium) avec de l'acide squarique en présence d'une base, ou avec un sel de type croconate.

**15.** Procédé conforme à la revendication 14 dans lequel le composé de type 4-$R^7$-benzopyrylium, 4-$R^7$-benzothiopyrylium ou 4-$R^7$-benzosélénopyrylium est préparé par réaction du 4-oxo-benzo-4H-pyrane, 4-oxo-benzo-4H-thiopyrane ou 4-oxo-benzo-4H-sélénopyrane correspondant avec un agent d'alkylation de type composé organométallique, suivie de la déshydratation catalysée par un acide.

**16.** Procédé conforme à la revendication 14 dans lequel le composé de type 4-$R^7$-benzopyrylium, 4-$R^7$-benzothiopyrylium ou 4-$R^7$-benzosélénopyrylium est préparé par réaction du 4-$R^7$-2-oxobenzo-2-H-pyrane, 4-$R^7$-2-oxobenzo-2-H-thiopyrane ou 4-$R^7$-2-oxobenzo-2-H-sélénopyrane correspondant avec un agent d'alkylation de type composé organométallique contenant le substituant $R^1$ souhaité dans un dialcoxyalcane, suivie de la déshydratation catalysée par un acide.

**17.** Procédé conforme à la revendication 15 dans lequel les composés de type 4-oxobenzo-4H-pyrane, 4-oxobenzo-4H-thiopyrane ou 4-oxobenzo-4H-sélénopyrane sont préparés par réaction des 2-($CH_3$-SO-$CH_2$-CO)-phénol, 2-($CH_3$-SO-$CH_2$-CO)-thiophénol et 2-($CH_3$-SO-$CH_2$-CO)-sélénophénol correspondants avec l'aldéhyde contenant le groupe formant le substituant en position 2 du 4-oxobenzo-4H-pyrane.

**18.** Procédé conforme à la revendication 17 dans lequel le 2-($CH_3$-SO-$CH_2$-CO)-phénol, 2-($CH_3$-SO-$CH_2$-CO)-thiophénol et 2-($CH_3$-SO-$CH_2$-CO)-sélénophénol sont préparés par réaction d'un ester de l'acide salicylique correspondant avec du diméthylsulfoxyde en présence d'une base.

**19.** Procédé pour libérer de la chaleur dans un milieu contenant un colorant conforme à une quelconque des revendications précédentes, lequel procédé comprend l'exposition d'au moins une partie du milieu à des radiations actiniques infrarouges d'une fréquence absorbée par le colorant, provoquant ainsi l'absorption de la radiation par le colorant et la libération de chaleur dans les parties du milieu exposées à la radiation.

**20.** Procédé conforme à la revendication 19 dans lequel le milieu comprend en outre une matière thermosensible capable de subir un changement de couleur suite à une exposition à la chaleur, le milieu est exposé suivant une image à une radiation et la chaleur libérée par le colorant est suffisante pour provoquer le changement de couleur de la matière thermosensible, formant ainsi une image dans

le milieu.

**21.** Procédé conforme à la revendication 20 dans lequel la matière thermosensible est à l'origine pratiquement incolore et est convertie par la chaleur libérée en une matière colorée dans les zones exposées de l'image.

**22.** Procédé conforme à la revendication 19 dans lequel le milieu comprend une couche d'une structure multi-couche, cette structure comprenant en outre une couche support disposée sur une face du milieu et une couche colorée adhérant sur la face opposée du milieu, et dans lequel la chaleur libérée lors de l'exposition du colorant à la radiation actinique entraîne un adhésion renforcée de la couche colorée à la couche support, de sorte que, lors de l'application d'une force de pelage à la couche colorée, la couche colorée sera décollée de la couche support dans les zones qui n'auront pas été exposées à la radiation, mais dans les zones qui auront été exposées à la radiation, la couche colorée restera liée à la couche support.

**23.** Procédé conforme à la revendication 19 dans lequel la libération de chaleur provoque des changements visibles dans le milieu, le milieu formant ainsi un support d'enregistrement optique.

**24.** Support d'enregistrement dans lequel l'information peut être enregistrée et lue optiquement, lequel support comporte une plaque de support portant une couche d'enregistrement qui contient un colorant conforme à la revendication 1.

**25.** Chromone de formule :

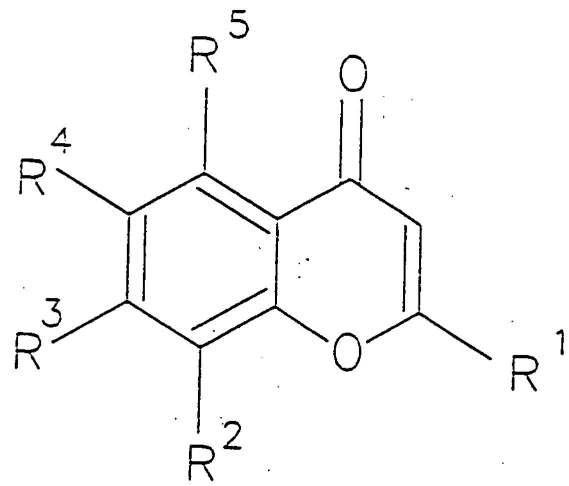

dans laquelle
chaque $R^1$ représente indépendamment un groupe alkyle ou cycloalkyle substitué ou non substitué dans lequel l'atome de carbone qui est lié directement au noyau benzopyrylium porte au plus un seul atome d'hydrogène,
chaque $R^2$ et $R^4$ représentent indépendamment un atome d'hydrogène, un groupe alkyle contenant au plus environ 8 atomes de carbone ou un atome d'halogène,
chaque $R^5$ représente indépendamment un atome d'hydrogène, un groupe alkyle contenant au plus environ 8 atomes de carbone, un atome d'halogène ou un groupe alcoxy contenant au plus environ 12 atomes de carbone, et
chaque $R^3$ représente indépendamment un groupe alkyle contenant au plus environ 8 atomes de carbone ou un groupe dans lequel un élément du groupe 5A est lié directement au noyau benzopyrylium, à condition que $R^3$, ensemble avec $R^2$ et/ou $R^4$, forme au moins un hétérocycle saturé contenant ledit élément du groupe 5A, cet hétérocycle saturé pouvant être fusionné au noyau phényle du noyau benzopyrylium associé.

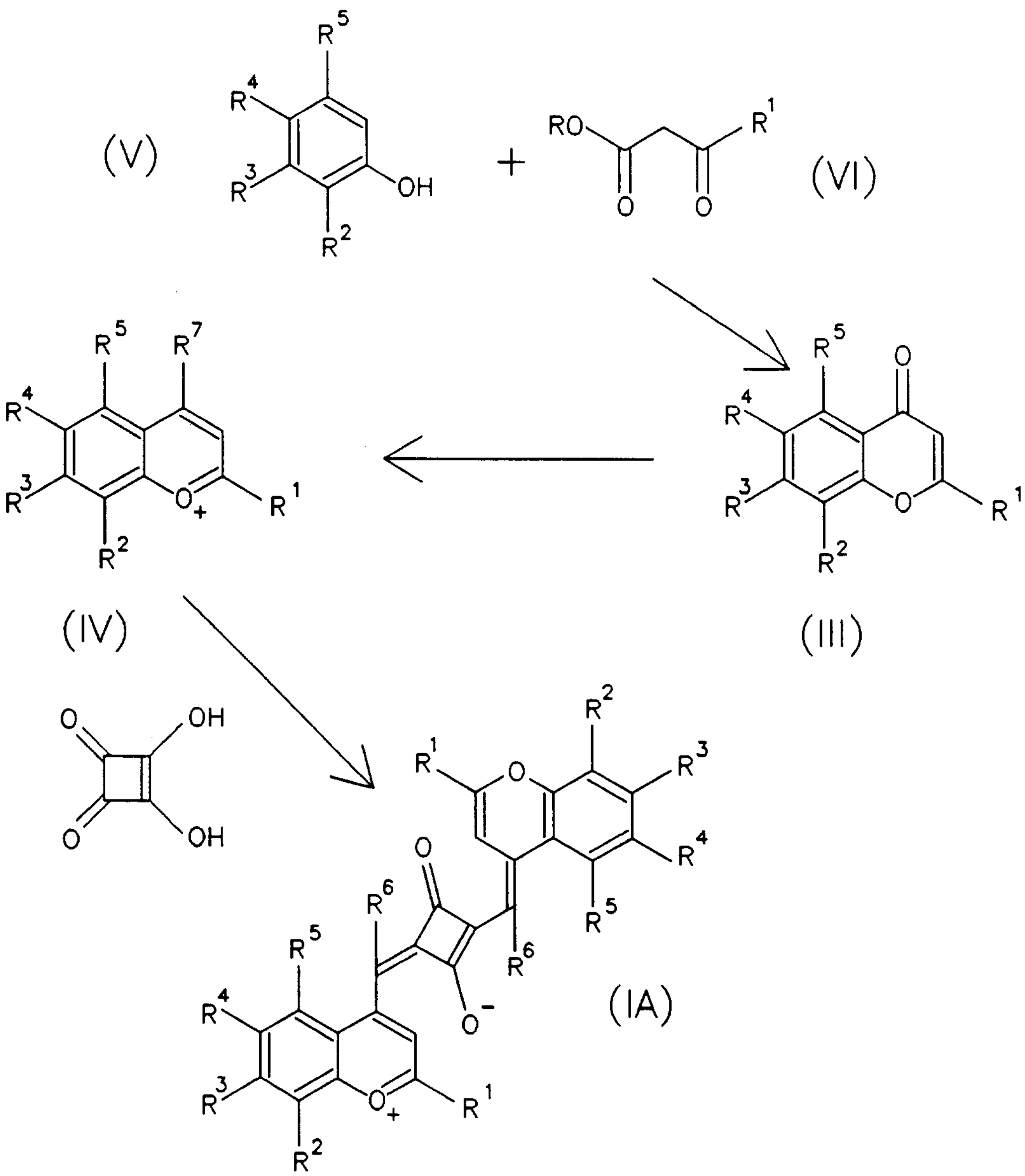

(V) (VI) (IV) (III) (IA)

**Figure 1**

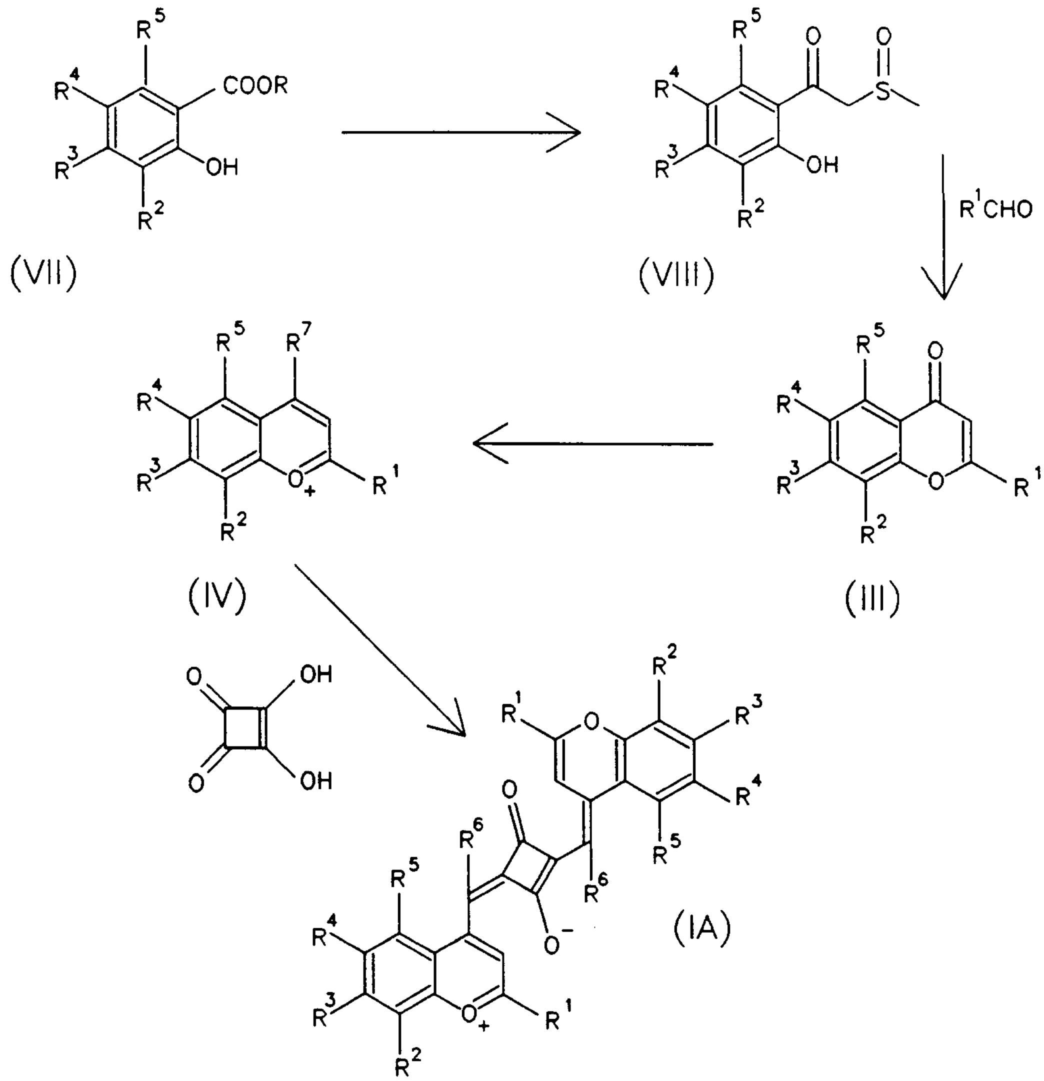


(VII) (VIII) (IV) (III) (IA)

# Figure 2

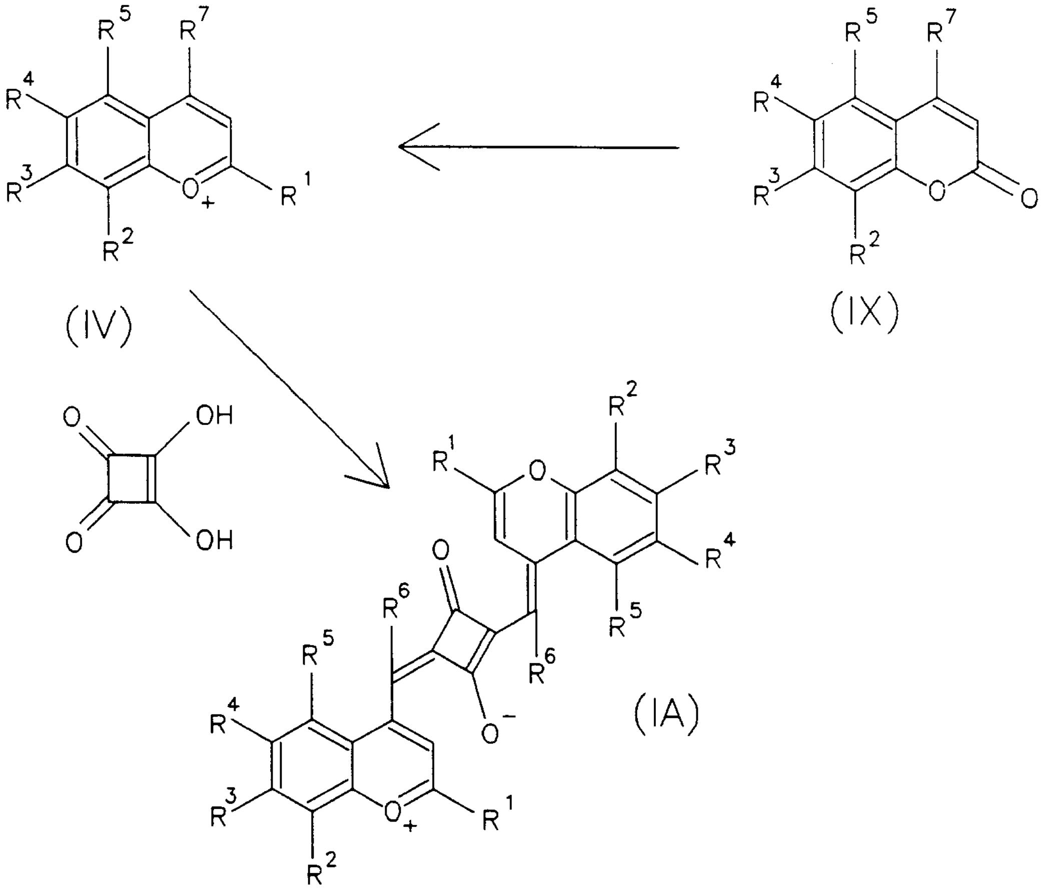

(IV)

(IX)

(IA)

**Figure 3**

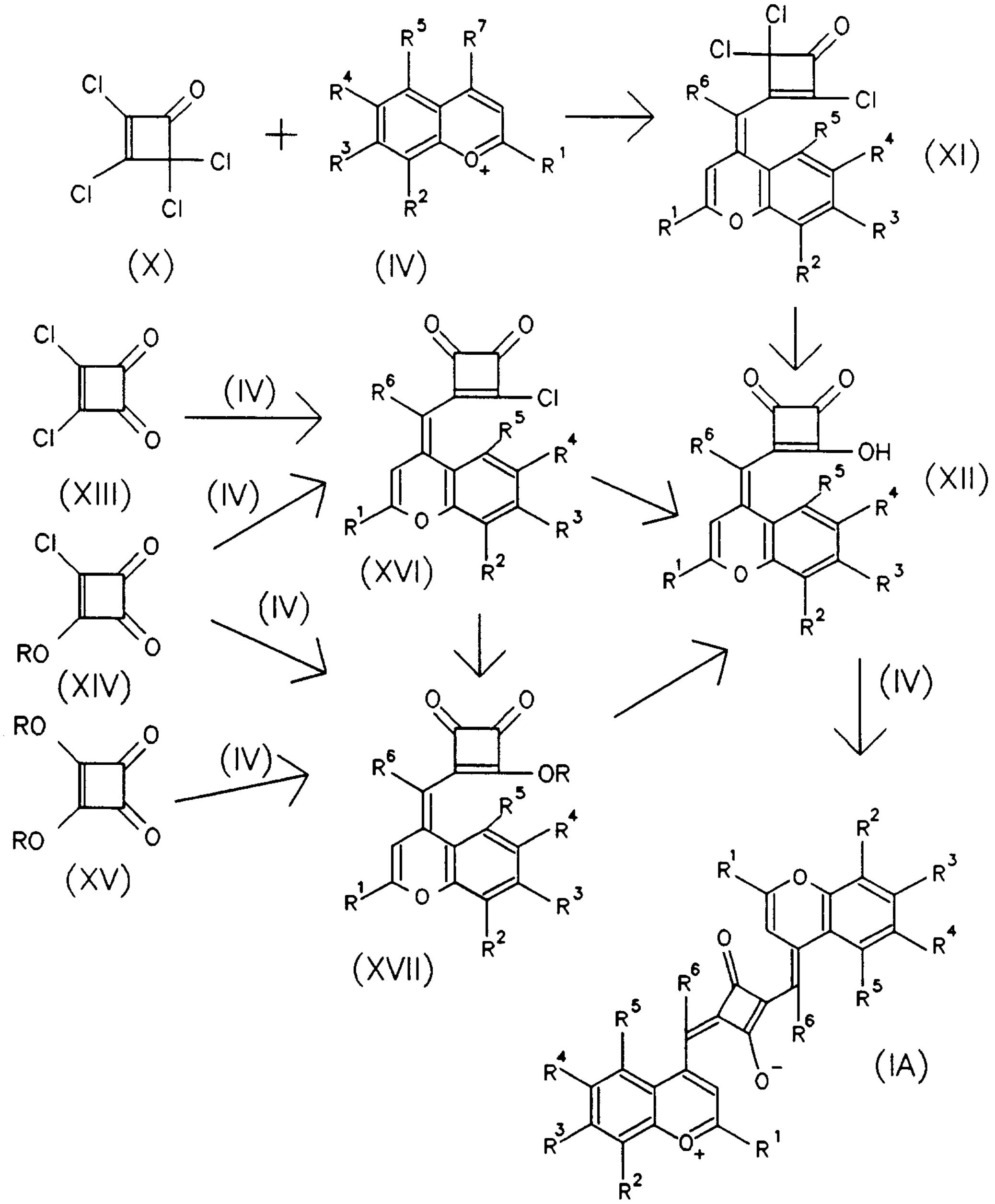


**Figure 4**

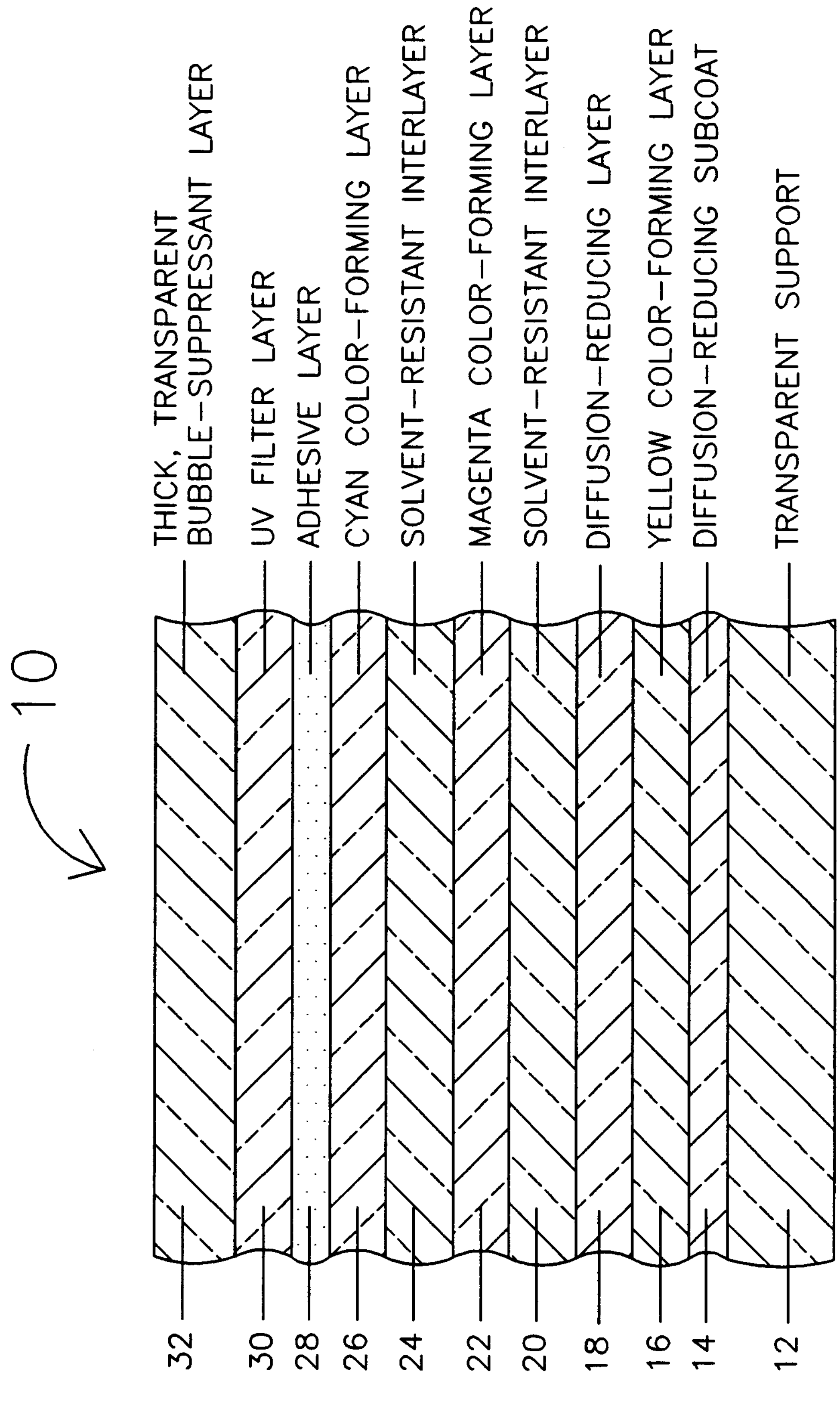
10
THICK, TRANSPARENT BUBBLE-SUPPRESSANT LAYER
UV FILTER LAYER
ADHESIVE LAYER
CYAN COLOR-FORMING LAYER
SOLVENT-RESISTANT INTERLAYER
MAGENTA COLOR-FORMING LAYER
SOLVENT-RESISTANT INTERLAYER
DIFFUSION-REDUCING LAYER
YELLOW COLOR-FORMING LAYER
DIFFUSION-REDUCING SUBCOAT
TRANSPARENT SUPPORT
32
30
28
26
24
22
20
18
16
14
12

**Figure 5**